# EUROPEAN PATENT SPECIFICATION

(11) **EP 1 886 019 B1**
(45) Date of publication and mention of the grant of the patent: **02.09.2015**
(21) Application number: 06721806.5
(22) Date of filing: 12.04.2006
(51) Int. Cl.: F04B 19/06, B05B 11/02, A47K 5/13, F04B 33/00, F16F 1/36, A47K 5/14, B05B 7/00, B05B 11/00

(54) **STEPPED PUMP FOAM DISPENSER**
SCHAUMABGABEVORRICHTUNG MIT STUFENPUMPE
DISTRIBUTEUR DE MOUSSE À POMPE À SEGMENTS

(30) Priority: 22.04.2005 CA 2504989; 07.06.2005 CA 2509295; 26.08.2005 CA 2517326
(43) Date of publication of application: 13.02.2008
(60) Divisional application: 15002137.6
(73) Proprietor: OP-Hygiene IP GmbH, 4704 Niederbipp (CH)
(72) Inventor: OPHARDT, Heiner, 4422 Arisdorf (CH); MIRBACH, Ali, D-47661 Issum (DE)
(74) Representative: Grünecker Patent- und Rechtsanwälte PartG mbB
(86) International application number: PCT/CA2006/000557
(87) International publication number: WO 2006/110992

(56) References cited:
- CA-A1- 2 470 532
- US-A- 5 975 360
- US-B1- 6 409 050
- US-B2- 6 601 736

## Description

### Scope of the Invention

This invention relates to liquid dispensers and, more particularly, liquid dispensers to dispensing liquid preferably as a foam.

### Background of the Invention

Liquid dispensers for dispensing soaps and other similar fluids in liquid form are known. For various reasons in some applications, it is preferable to dispense soaps and other similar fluids in the form of a foam. Generally, in the form of a foam, less soap liquid is required to be used as contrasted with the soap in the liquid form. As well, soap as foam is less likely to run off a user's hands or other surfaces to be cleaned. US 6,601,736, B2 discloses a stepped pump foam dispenser according to the preamble of independent claim 1.

### Summary of the Invention

The present invention provides improved and simplified apparatuses for dispensing a fluid preferably with air as a foam.

The present invention provides an improved construction for a spring, preferably formed by injection moulding, and a pump mechanism using such a spring.

The present invention also provides a pump mechanism utilizing a resilient flexible bellows member to function as a displacement pump and/or a spring. The bellows member preferably is integrally formed from plastic as a component of a piston for the pump.

The present invention also provides a pump assembly with a first pump to displace a first volume and a second pump to displace a second volume greater than the first volume. The first pump draws liquid from a reservoir and dispenses it to the second pump. The second pump draws in the discharge from the first pump and an additional volume of air such that the second pump discharges both liquid and air. The first pump preferably has a piston movable in a first inner chamber and the second pump has the same piston movable in a second outer chamber. The first and second chambers communicate together. In one version, a one-way valve provides flow outwardly only from the first chamber to the second chamber and the first pump discharges while the second pump draws in, and vice versa. In a second version, the one-way valve is provided between the first chamber and the reservoir to provide flow outwardly only from, the reservoir to the first chamber and the first pump and the second pump discharge at the same time and draw in at the same time.

Preferably, simultaneously, discharged air and liquid may preferably produce foam by passing through a foam generator, such as a porous member, or be atomized as by passing through a nozzle.

An object of the present invention is to provide an improved pump for dispensing a liquid.

Another object is to provide an improved pump for dispensing a liquid in the form of a foam.

Another object is to provide an improved pump with a bellows member to function as one or more of a displacement pump and a spring.

Another object is to provide an improved pump with a plastic spring.

Another object is to provide an improved plastic spring member.

In one aspect, the present invention provides a pump for dispensing liquid from a reservoir comprising:
a piston-chamber forming member having an inner cylindrical chamber, an intermediate cylindrical chamber and an outer cylindrical chamber, the inner chamber, intermediate chamber and outer chamber each having a diameter, a chamber wall, an inner end and an outer end,
the diameter of the inner chamber being greater than the diameter of the intermediate chamber,
the diameter of the outer chamber being greater than the diameter of the intermediate chamber,
the inner chamber, intermediate chamber and outer chamber being coaxial with the outer end of the inner chamber opening into the inner end of the intermediate chamber, and the outer end of the intermediate chamber opening into the inner end of the outer chamber,
the inner end of the inner chamber in fluid communication with the reservoir,
a piston forming element received in the piston-chamber forming means axially slidable inwardly and outwardly therein between an inward retracted position and an outward extended position,
said piston forming element having a central axially extending hollow stem having a central passageway closed at an inner end and having an outlet proximate an outer end,
an inner disc extending radially outwardly from the stem, the inner disc adapted to engage the chamber wall of the inner chamber,
an intermediate disc extending radially outwardly from the stem spaced axially outwardly from the inner disc, the intermediate disc adapted to engage the chamber wall of the intermediate chamber,
an outer disc extending radially outwardly from the stem spaced axially outwardly from the intermediate disc, the outer disc engaging the chamber wall of the outer chamber,
an inlet located on the stem between the intermediate disc and the outer disc in communication with the passageway,
the piston forming element slidably received in the piston-chamber forming means for reciprocal axial inward and outward movement therein with the inner disc in the inner chamber, the intermediate disc in the intermediate chamber and the outer disc in the outer chamber,
the inner disc substantially preventing fluid flow in the inner chamber past the inner disc in an inward direction,
the intermediate disc substantially preventing fluid flow in the intermediate chamber past the intermediate disc in an inward direction,
the outer disc substantially preventing fluid flow in the outer chamber past the outer sealing disc in an outward direction,
the inner disc elastically deformable away from the chamber wall of the inner chamber to permit fluid flow in the inner chamber past the inner disc in an outward direction,
the intermediate disc elastically deformable away from the chamber wall of the intermediate chamber to permit fluid flow in the intermediate chamber past the intermediate disc in an outward direction, wherein:
in the piston forming element moving from the extended position to the retracted position, a volume of liquid from the reservoir equal in volume to a first volume is displaced in an outward direction past the inner disc to between the inner disc and the intermediate disc, and a volume equal in volume to a second volume which is greater than the first volume and comprises both liquid and air is displaced from between the intermediate disc and the outer disc through the inlet and passageway and out the outlet;
in the piston forming element moving from the retracted position to the extended position, a volume equal to the first volume comprising liquid is displaced in an outward direction past the intermediate disc to between the intermediate disc and the outer disc, and a volume equal to the second volume and comprising both liquid and air is drawn into between the intermediate disc and the outer disc,
in the piston forming element moving from the retracted position to the extended position, the volume equal to the second volume which is drawn into between the intermediate disc and the outer disc comprises the volume equal to the first volume comprising liquid displaced in the outward direction past the intermediate disc and a third volume comprising air from the atmosphere.

In another aspect, the present invention provides a pump for dispensing liquid from a reservoir comprising:
piston-chamber forming member having an inner cylindrical chamber, an intermediate cylindrical chamber and an outer cylindrical chamber, the inner chamber, intermediate chamber and outer chamber each having a diameter, a chamber wall, an inner end and an outer end,
the diameter of the inner chamber being greater than the diameter of the intermediate chamber,
the diameter of the outer chamber being greater than the diameter of the intermediate chamber,
the inner chamber, intermediate chamber and outer chamber being coaxial with the outer end of the inner chamber opening into the inner end of the intermediate chamber, and the outer end of the intermediate chamber opening into the inner end of the outer chamber,
the inner end of the inner chamber in fluid communication with the reservoir,
a piston forming element received in the piston-chamber forming means axially slidable inwardly and outwardly therein between an inward retracted position and an outward extended position,
said piston forming element having a central axially extending hollow stem having a central passageway closed at an inner end and having an outlet proximate an outer end,
an inner disc extending radially outwardly from the stem, the inner disc adapted to engage the chamber wall of the inner chamber,
an outer disc extending radially outwardly from the stem spaced axially outwardly from the inner disc, the outer disc engaging the chamber wall of the outer chamber,
an intermediate disc carried on the piston-chamber forming member and extending radially inwardly from the chamber wall of the intermediate chamber, the intermediate disc adapted to engage the stem intermediate the inner disc and the outer disc,
an inlet located on the stem between the intermediate disc and the outer disc in communication with the passageway,
the piston forming element slidably received in the piston-chamber forming means for reciprocal axial inward and outward movement therein with the inner disc in the inner chamber and the outer disc in the outer chamber,
the inner disc substantially preventing fluid flow in the inner chamber past the inner disc in an inward direction,
the intermediate disc substantially preventing fluid flow in the intermediate chamber past the intermediate disc in an inward direction,
the outer disc substantially preventing fluid flow in the outer chamber past the outer sealing disc in an outward direction,
the inner disc elastically deformable away from the chamber wall of the inner chamber to permit fluid flow in the inner chamber past the inner disc in an outward direction,
the intermediate disc elastically deformable away from the stem to permit fluid flow in the intermediate chamber past the intermediate disc in an outward direction, wherein:
in the piston forming element moving from the extended position to the retracted position, a volume of liquid from the reservoir equal in volume to a first volume is displaced in an outward direction past the inner disc to between the inner disc and the intermediate disc, and a volume equal in volume to a second volume which is greater than the first volume and comprises both liquid and air is displaced from between the intermediate disc and the outer disc through the inlet and passageway and out the outlet;
in the piston forming element moving from the retracted position to the extended position, a volume equal to the first volume comprising liquid is displaced in an outward direction past the intermediate disc to between the intermediate disc and the outer disc, and a volume equal to the second volume and comprising both liquid and air is drawn into between the intermediate disc and the outer disc,
in the piston forming element moving from the retracted position to the extended position, the volume equal to the second volume which is drawn into between the intermediate disc and the outer disc comprises the volume equal to the first volume comprising liquid displaced in the outward direction past the intermediate disc and a third volume comprising air from the atmosphere.

In one aspect, the present invention provides a pump for dispensing liquid from a reservoir comprising:
a piston-chamber forming member,
a piston forming element received in the piston-chamber forming means axially slidable inwardly and outwardly therein between an inward retracted position and an outward extended position,
said piston forming element having a central axially extending hollow stem having a central passageway with an inner end and having an outlet proximate an outer end extending out of the piston-chamber forming member and from which liquid is dispensed,
at least one annular chamber formed annularly about the stem between the piston forming element and the piston-chamber forming member providing for controlled movement of liquid from the reservoir into the annular chamber and for dispensing of liquid in the annular chamber to the outlet with reciprocal sliding of the piston forming element between the retracted position and the extended position,
said piston forming element having a bellows member extending inwardly from the stem to form with the piston-chamber forming member a bellows chamber open to the inner end of the passageway,
the bellows member being collapsible to increase and decrease volume of the bellows chamber with reciprocal sliding of the piston forming element between the retracted position and the extended position to draw fluid through the outlet via the passageway into the bellows chamber and to expel fluid in the bellows chamber via the passageway out the outlet.

In one aspect, the present invention provides a spring member extending from a first end to a second end about a longitudinal axis,
the spring having an inherent bias to assume an extended position with a first end spaced from the second end along the axis,
the spring assuming compressed positions when compressed by forces applied parallel to the axis, in the compressed positions the spring resiliently urges its first and second ends axially away from each other toward the extended position;
the spring member having a wall in the shape of a solid of revolution rotated about the axis and defining a central cavity therein open at the first end of the spring and substantially closed at the second end of the spring,
the wall when in the unbiased extended position having a greatest diameter at the first end and a least diameter at the second end,
a plurality of openings through the wall, the openings disposed symmetrically both circumferentially and axially relative to each other.

In another aspect, the present invention provides a pump for dispensing liquid from a reservoir comprising:
a piston-chamber forming member,
a piston forming element received in the piston-chamber forming means coaxially axially slidable about an axis inwardly and outwardly therein between an inward retracted position and an outward extended position,
said piston forming element having a central axially extending stem having a central passageway with an inner end and having an outlet proximate an outer end extending out of the piston-chamber forming member and from which liquid is dispensed,
at least one annular chamber formed annularly about the stem between the piston forming element and the piston-chamber forming member providing for controlled movement of liquid from the reservoir into the annular chamber and for dispensing of liquid in the annular chamber to the outlet with reciprocal sliding of the piston forming element between the retracted position and the extended position,
a spring member extending inwardly from the inner end of the stem of the piston forming element coaxially relative the piston forming element from an inner end of the spring to an outer end of the spring which coupled to an inner end of the piston-chamber forming member,
the spring member being axially compressed with reciprocal sliding of the piston forming element from the extended position to the retracted position and having an inherent bias which urges the piston forming element axially from the retracted position toward the extended position.

### Brief Description of the Drawings

Further aspects and advantages of the present invention will become apparent from the following description taken together with the accompanying drawings in which:
Figure 1 is a partially cut-away side view of a first preferred embodiment of a liquid dispenser with a reservoir and pump assembly in accordance with the present invention;
Figure 2 is a partially exploded perspective view of the pump assembly shown in Figure 1;
Figure 3 is a cross-sectional side view of an assembled pump assembly of Figure 2 showing the piston in a fully retracted position;
Figure 4 is the same side view as in Figure 3 but showing the pump in a fully extended position;
Figure 5 is a cross-sectional side view of a pump assembly in accordance with a second embodiment of the present invention showing the piston in a fully retracted position;
Figure 6 is the same side view as in Figure 5 but showing the pump in an extended position;
Figure 7 is a cross-sectional side view of a pump assembly in accordance with a third embodiment of the present invention showing the piston in a fully extended position in solid lines and in a fully retracted position in dashed lines;
Figure 8 is the same side view as in Figure 7 but showing the pump with the inner chamber axially reduced in length axially;
Figure 9 is a cross-sectional side view of a pump assembly in accordance with a fourth embodiment of the present invention showing the piston in a fully extended position in solid lines and a fully retracted position in dashed lines;
Figure 10 is the same side view as in Figure 9 but showing the pump with the piston chamber forming body axially displaced outwardly compared to Figure 9;
Figure 11 is a cross-sectional side view of a pump assembly in accordance with a fifth embodiment of the present invention showing the piston in a fully extended position in solid lines and a retracted position in dashed lines;
Figure 12 is a cross-sectional side view of a pump assembly in accordance with a sixth embodiment of the present invention showing the piston in a fully extended position in solid lines and a retracted position in dashed lines;
Figure 13 is a seventh embodiment of the pump showing a piston in an extended position in solid lines and in a retracted position in dashed lines;
Figure 14 is a eighth embodiment of the pump having similarities to Figure 13 and showing the piston in a fully extended position in solid lines and a fully retracted position in dashed lines;
Figure 15 is an ninth embodiment of the pump having similarities to the pump of Figure 14 showing the piston in a fully extended position in solid lines and a fully retracted position in dashed lines;
Figure 16 is the same as Figure 15, however, with the body axially displaced compared to that shown in Figure 15 showing the piston in a fully extended position in solid lines and a fully retracted position in dashed lines;
Figure 17 is a tenth embodiment having similarities to that illustrated in Figure 14 showing the piston in a fully extended position in solid lines and a fully retracted position in dashed lines;
Figure 18 is an eleventh embodiment and showing the piston in a fully extended position in solid lines and a fully retracted position in dashed lines;
Figure 19 is a cross-sectional side view of the first alternate piston for use in the embodiment of Figures 2 to 4;
Figure 20 is a cross-sectional side view of a second alternate embodiment of a piston for use with the embodiment of Figures 2 to 4;
Figure 21 illustrates a twelfth embodiment of the invention having similarities to the pump of Figures 2 to 4 with the piston shown in a retracted position;
Figure 22 is of the same side view as in Figure 21 but showing the pump in an intermediate position and an extended position;
Figure 23 illustrates a thirteenth embodiment of the invention;
Figure 24 is a fourteenth embodiment of the present invention representing modification of the embodiment of Figure 6 to adopt a bellows member;
Figure 25 is a fifteenth embodiment of the invention representing a further modification of the embodiment of Figure 24 to adopt a second bellows member;
Figure 26 illustrates a sixteenth embodiment of the invention showing a gravity feed positive displacement pump with a bellows;
Figure 27 is a seventeenth embodiment of the invention illustrating a foam pump arrangement with a single bellows member;
Figure 28 is an eighteenth embodiment of the present invention showing a liquid pump having one bellows member merely as a spring;
Figure 29 is a cross-sectional side view of a 19^{th} embodiment of the present invention showing a foam pump arrangement with a plastic spring member;
Figure 30 is a cross-sectional side view of a 20^{th} embodiment of the present invention illustrating a foam pump arrangement with a plastic spring member;
Figure 31 is a cross-sectional side view of the pump of Figure 30 in a cross-section normal to the cross-section shown in Figure 30 with the piston in an extended position;
Figure 32 is a cross-sectional side view the same as that in Figure 31, however, showing the piston in a retracted position;
Figures 33 and 34 are pictorial views of the spring member shown in Figure 30 in an unbiased condition;
Figure 35 is a partially cut-away pictorial view of the spring member of Figure 33;
Figure 36 is a cross-sectional side view of the spring member of Figure 33;
Figure 37 is a cross-sectional side view of the spring member of Figure 33 in a cross-section normal to the cross-section of Figure 36;
Figure 38 is a partially cut-away pictorial view of the spring member as shown in Figure 32 in a compressed condition;
Figure 39 is a cross-sectional side view through the compressed spring member of Figure 38;
Figure 40 is a cross-sectional side view through the compressed spring member of Figure 39 in a cross-section normal to the cross-section of Figure 39.
Figure 41 is a pictorial view of a second embodiment of a spring in accordance with the present invention;
Figures 42 to 49 are perspective views of third to tenth embodiments, respectively, of springs in accordance with the present invention.

### Detailed Description of the Drawings

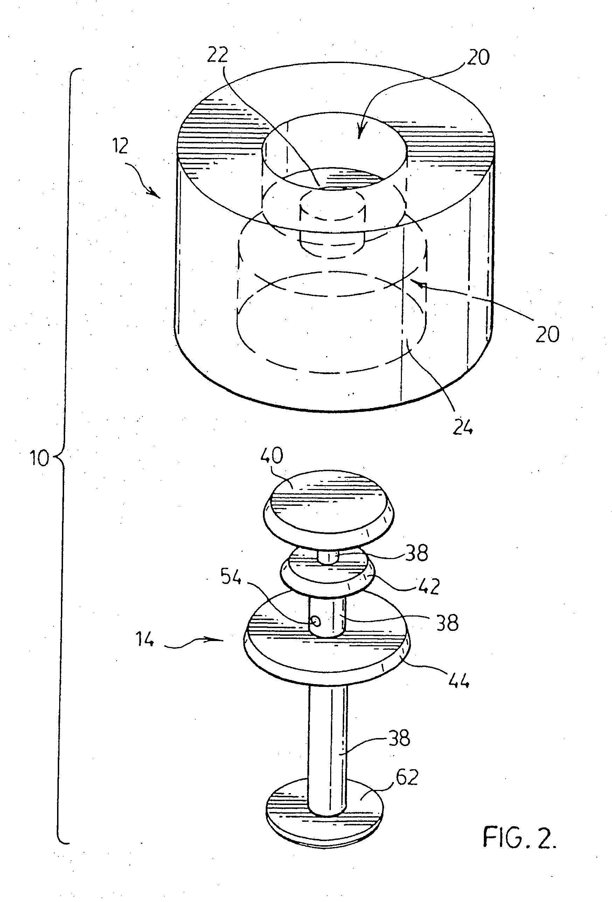

Reference is made first to Figures 2, 3 and 4 which show a first embodiment of a pump assembly generally indicated 10. Pump assembly 10 is best shown in Figure 2 as comprising two principal elements, a piston chamber-forming body 12 and a piston 14.

The piston chamber-forming body 12 has three cylindrical portions illustrated to be of different radii, forming three chambers, an inner chamber 20, an intermediate chamber 22, and an outer chamber 24, all coaxially disposed about an axis 26. The intermediate cylindrical chamber 22 is of the smallest radii. The outer cylindrical chamber 24 is of a radius which is larger than that of the intermediate cylindrical chamber 22. The inner cylindrical chamber 20 is of a radius greater than that of the intermediate cylindrical chamber 22 and, as well, is shown to be of a radius which is less than the radius of the outer cylindrical chamber 24.

The inner chamber 20 has an inlet opening 28 and an outlet opening 29. The inner chamber has a cylindrical chamber side wall 30. The outlet opening 29 opens into an inlet end of the intermediate chamber 22 from an opening in a shoulder 31 forming an outer end of the inner chamber 20. The intermediate chamber 22 has an inlet opening, an outlet opening 32, and a cylindrical chamber side wall 33. The outlet opening 32 of the intermediate chamber 22 opens into an inlet end of the outer chamber 24 from an opening in a shoulder 34 forming the inner end of the outer chamber 24. The outer chamber 24 has an inlet opening, outlet opening 35 and a cylindrical chamber side wall 36.

Piston 14 is axially slidably received in the body 12. The piston 14 has an elongate stem 38 upon which four discs are provided at axially spaced locations. An inner flexing disc 40 is provided at an innermost end spaced axially from an intermediate flexing disc 42 which, in turn, is spaced axially from an outer sealing disc 44. The inner disc 40 is adapted to be axially slidable within the inner chamber 20. The intermediate disc 42 is adapted to be axially slidable within the intermediate chamber 22.

The intermediate disc 42 has a resilient peripheral edge which is directed outwardly and adapted to prevent fluid flow inwardly yet to deflect to permit fluid flow outwardly therepast. Similarly, the inner disc 40 has a resilient outer peripheral edge which is directed outwardly and is adapted to prevent fluid flow inwardly yet to deflect to permit fluid flow outwardly therepast.

The outer sealing disc 44 is adapted to be axially slidable within the outer cylindrical chamber 24. The outer sealing disc 44 extends radially outwardly from the stem 38 to sealably engage the side wall 36 of the outer chamber 24, and prevent flow therepast either inwardly or outwardly.

The piston 14 essentially forms, as defined between the inner disc 40 and the intermediate disc 42, an annular inner compartment 64 which opens radially outwardly as an annular opening between the discs 42 and 44. Similarly, the piston 14 effectively forms between the intermediate sealing disc 42 and the outer sealing disc 44 an annular outer compartment 66 which opens radially outwardly as an annular opening between the discs 42 and 44.

An outermost portion of the stem 38 is hollow with a central passageway 46 extending from an outlet 48 at the outermost end 50 of the stem 38 centrally through the stem 38 to a closed inner end 52. A radially extending inlet 54 extends radially through the stem into the passageway 46, with the inlet 54 being provided on the stem in between the outer disc 44 and the intermediate disc 42. A foam inducing screen 56 is provided in the passageway 46 intermediate between the inlet 54 and the outlet 48. The screen 56 may be fabricated of plastic, wire or cloth material. It may comprise a porous ceramic measure. The screen 56 provides small apertures through which an air and liquid mixture may be passed to aid foam production as by production of turbulent flow through small pores or apertures of the screen thereof in a known manner.

The piston 14 also carries an engagement flange or disc 62 on the stem 38 outward from the outer sealing disc 44. Engagement disc 62 is provided for engagement by an activating device in order to move the piston 14 in and out of the body 12.

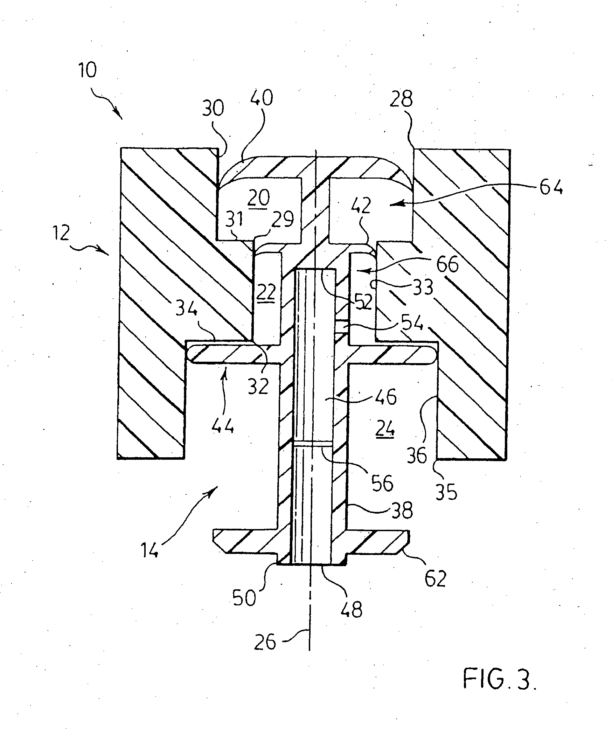

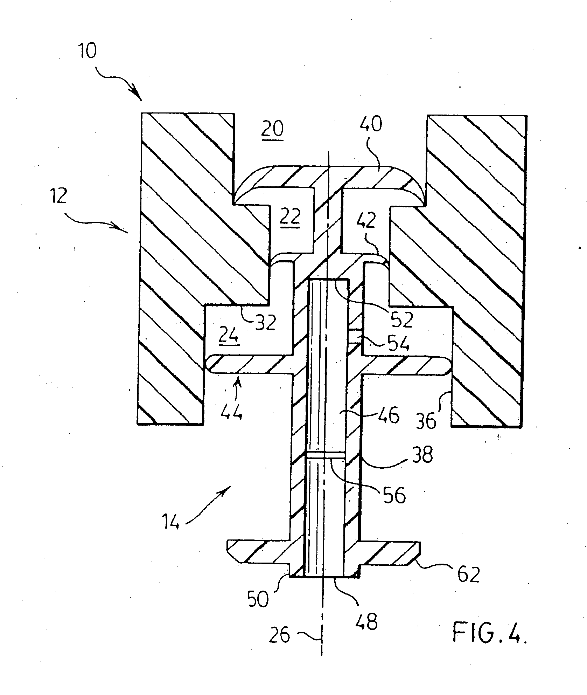

In a withdrawal stroke with movement from the retracted position of Figure 3 to the extended position of Figure 4, the volume between the inner disc 40 and the intermediate disc 42 decreases such that fluid is displaced outwardly past the intermediate disc 42 to between the intermediate disc 42 and the outer disc 44. At the same time, the volume between the intermediate disc 42 and the outer disc 44 increases, with such increase being greater than the volume decrease between the inner disc 40 and the intermediate disc 42 such that in addition to the fluid displaced outwardly past intermediate disc 42, air is drawn inwardly via the outlet 48, passageway 46, and the inlet 54 in between the intermediate disc 42 and the outer disc 44.

In a retraction stroke from the position of Figure 4 to the position of Figure 3, the volume between the intermediate disc 42 and the outer disc 44 decreases such that air and liquid therebetween and in the passageway 46 above the screen 56 is forced under pressure out through the screen 56 commingling and producing foam. At the same time, in the retraction stroke, the volume between the inner disc 40 and the intermediate disc 42 increases drawing liquid from inside a container past the inner disc 40. Reciprocal movement of the piston 14 between the retracted and extended positions will successively draw and pump precise amounts of fluid from a container and mix such fluid with air from the atmosphere and dispense the fluid commingled with the air as a foam.

Operation of the pump assembly illustrated in Figures 2 to 4 will draw liquid out of a container creating a vacuum therein. The pump assembly is preferably adapted for use with a collapsible container. Alternatively, a suitable vent mechanism may be provided if desired as, for example, for use in a non-collapsible container to permit atmospheric air to enter the container and prevent a vacuum being built up therein which prevents further dispensing.

It is to be appreciated that the inner disc 40 and the intermediate disc 42 form a first stepped pump and, similarly the intermediate disc 42 and the outer disc 44 form a second stepped pump. The first pump and second pump are out of phase in the sense that in any one retraction or extension stroke while one pump is drawing fluid in, the other is discharging fluid out.

Both the piston 14 and the body 12 may be formed as unitary elements from plastic as by injection moulding.

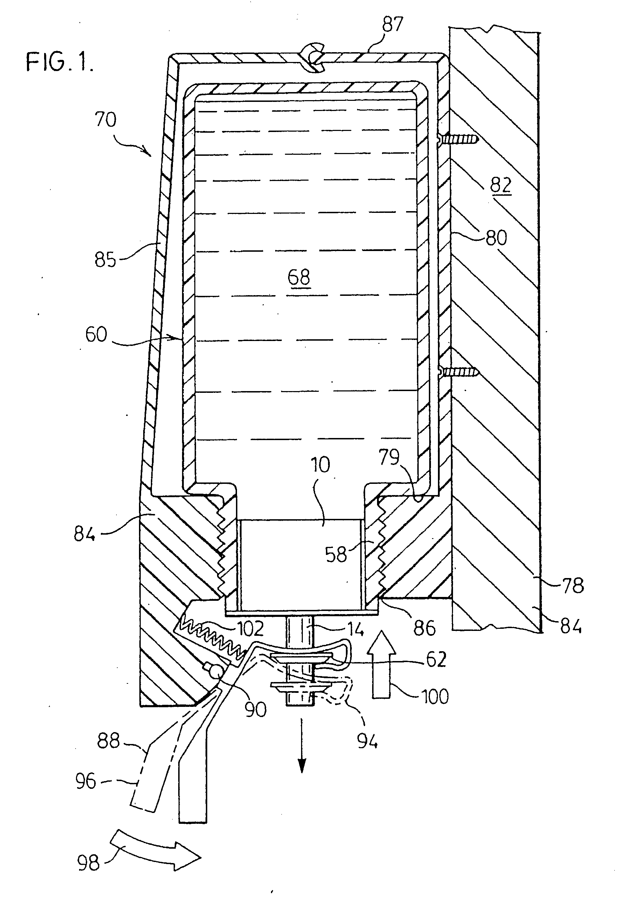

Reference is now made to Figure 1 which shows a liquid soap dispenser generally indicated 70 utilizing the pump assembly 10 of Figures 2 to 4 secured in the neck 58 of a sealed, collapsible container or reservoir 60 containing liquid hand soap 68 to be dispensed. Dispenser 70 has a housing generally indicated 78 to receive and support the pump assembly 10 and the reservoir 60. Housing 78 is shown with a back plate 80 for mounting the housing, for example, to a building wall 82. A bottom support plate 84 extends forwardly from the back plate to support and receive the reservoir 60 and pump assembly 10. As shown, bottom support plate 84 has a circular opening 86 therethrough. The reservoir 60 sits supported on shoulder 79 of the support plate 84 with the neck 58 of the reservoir 60 extending through opening 86 and secured in the opening as by a friction fit, clamping and the like. A cover member 85 is hinged to an upper forward extension 87 of the back plate 80 so as to permit replacement of reservoir 60 and its pump assembly 10.

Support plate 84 carries at a forward portion thereof an actuating lever 88 journalled for pivoting about a horizontal axis at 90. An upper end of the lever 88 carries a hook 94 to engage engagement disc 62 and couple lever 88 to piston 14, such that movement of the lower handle end 96 of lever 88 from the dashed line position to the solid line position, in the direction indicated by arrow 98 slides piston 14 inwardly in a retraction pumping stroke as indicated by arrow 100. On release of the lower handle end 96, spring 102 biases the upper portion of lever 88 downwardly so that the lever draws piston 14 outwardly to a fully withdrawn position as seen in dashed lines in Figure 1. Lever 88 and its inner hook 94 are adapted to permit manual coupling and uncoupling of the hook 94 as is necessary to remove and replace reservoir 60 and pump assembly 10. Other mechanisms for moving the piston can be provided including mechanised and motorized mechanisms.

In use of the dispenser 70, once exhausted, the empty, collapsed reservoir 60 together with the attached pump 10 are removed and a new reservoir 60 and attached pump 10 may be inserted into the housing. Preferably, the removed reservoir 60 with its attached pump 10 are both made entirely out of recyclable plastic material which can easily be recycled without the need for disassembly prior to cutting and shredding.

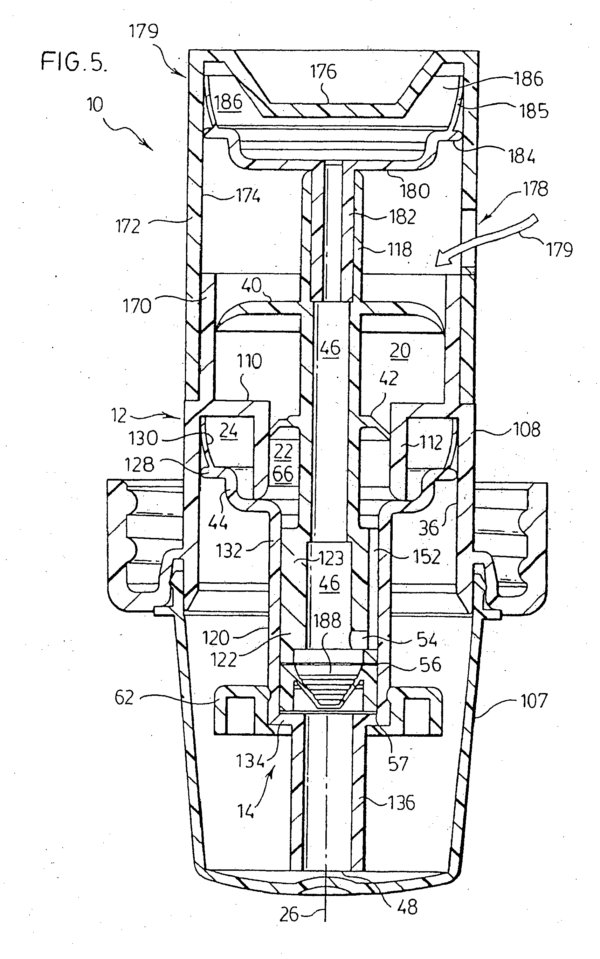

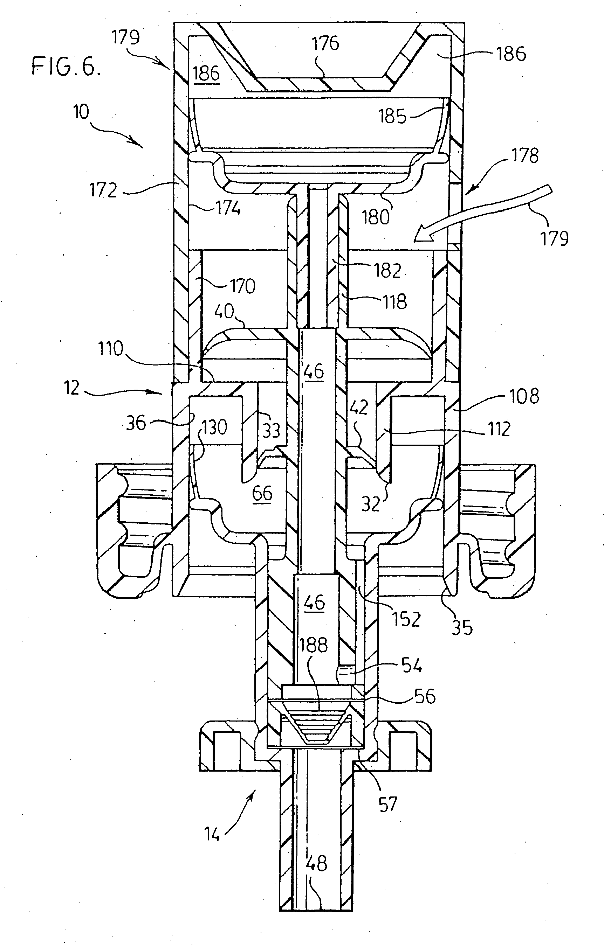

Reference is now made to Figures 5 and 6 which illustrate a second embodiment of a pump assembly in accordance with the present invention. Throughout the drawings, the same reference numerals are used to refer to like elements.

Figure 5 also shows a pump assembly 10 having a piston chamber-forming body 12 and a piston 14. The piston chamber-forming body 12 is adapted to be threadably secured to the neck of a bottle or reservoir not shown.

The body 12 is formed with a cylindrical outer tubular portion 108 connected at an inner end via a radially extending flange portion 110 to a cylindrical inner tubular portion 112. The inner tubular portion 112 extends axially radially inside the outer tubular portion 108. The body 12 also carries on its flange portion 110 an inward axially extending generally cylindrical support tube 170 adapted to support an air chamber-forming member 172. Member 172 has a cylindrical side wall 174 and is closed at its inner end by end wall 176. Openings 178 are provided aligned through the wall 174 to provide communication from the interior of the reservoir into the interior of the member 170 and hence into the inner chamber 20 as indicated by arrow 179.

The outer chamber 24 is formed radially inwardly of the outer tubular portion 108 having a side wall 36 thereabout and open at its outlet opening 34. As shown, the side wall 36 tapers outwardly at chamfers proximate the outlet opening 35 to facilitate entry of the piston 14.

The intermediate chamber 22 is formed radially inwardly of the inner tubular portion 112. The inner tubular portion 112 defines an outlet opening 32 of the intermediate chamber 22 and a side wall 33 thereof. The intermediate chamber 22 has its side wall 33 taper outwardly as a chamfer proximate the outlet opening 32 to facilitate entry of the piston 14 into the intermediate chamber 22.

The inner chamber 20 is formed radially inwardly of the cylindrical support tube 170. The cylindrical support tube 170, inner tubular portion 112, outer tubular portion 108, inner chamber 20, intermediate chamber 22 and outer chamber 24 are each coaxial about axis 26.

The piston 14 is formed from five elements which are secured together as a unit. These elements include elements, namely, an outer casing 120, an inner core 122, a foam producing element, an engagement disc 62 and an air pump disc 180.

The foam producing element is a combination of two screens 56 and 57 and a three-dimensional basket-like screen 188 having generally frustoconical walls with small openings therethrough as in the manner of known filter members.

The piston 14 carries at its inner end the air pump disc 180 fixedly supported by a hollow neck tube 182 being fixedly secured within a hollow support tube 118 of the inner core 122. The neck tube 182 defines a passageway 46 therethrough open at both ends.

The air pump disc 180 includes a locating flange 184 to locatably engage the cylindrical side wall 174 and a resilient flexible circular sealing disc 185 which sealably engages the side wall 174 and prevents flow of fluids axially outwardly therepast. An air chamber 186 is defined between the air chamber-forming member 172 and the air pump disc 180 which will increase and decrease in volume as the piston 14 is moved axially in the body 12 between the extended and retracted positions. The air chamber 186 is in communication with the passageway 46 via the neck tube 182.

The outer casing 120 is of enlarged diameter at its axially inner end where the outer disc 44 is provided. The outer disc 44 is shown as including a locating flange 128 to locatably engage the cylindrical side wall 36 of the outer chamber 24 and a resilient flexible circular sealing flange 130 which sealably engages the side wall 36 and prevents flow of fluids axially outwardly therepast.

The outer casing 120 is shown with the outer disc 44 carried as a radially outwardly extending flange on a cylindrical large tube portion 132 which extends axially outwardly to a radially inwardly extending shoulder 134 supporting a small tube portion 136 extending axially outwardly from the shoulder 134 to the outlet 48. Screens 56, 57 and 88 are located on the shoulder 134 sandwiched between the shoulder and the outer end of the inner core 122.

The inner core 122 carries the inner disc 40 and the intermediate disc 42. Each of the inner disc 40 and intermediate disc 42 comprise circular resilient flexible discs each of which extends radially outwardly and toward the outlet 48. The inner disc 40, when engaged with the inner chamber 20, that is, with the cylindrical side wall of the cylindrical support tube 170, prevent fluid flow axially inwardly therepast through the inner chamber 20, however, is adapted to have its resilient outer edge deflect radially inwardly to permit fluid flow, under pressure differentials above a predetermined pressure, axially outwardly therepast. The intermediate flexible disc 42, when engaged with the intermediate chamber 22, that is, with the interior wall of the inner tubular portion 112, prevents fluid flow axially inwardly therepast through the intermediate chamber 22, however, is adapted to have its resilient outer edge deflect radially inwardly to permit fluid flow, under pressure differentials above a predetermined pressure, axially outwardly therepast.

The inner disc 40 has its outer periphery extending outwardly so as to engage the cylindrical inner wall of the support tube 170 so as to prevent fluid flow inwardly therepast. The other periphery of the inner sealing disc 40 is, however, sufficiently resilient that it can deflect radially inwardly away from the support tube 170 to permit fluid flow therepast outwardly. Similarly, the intermediate disc 42 has its resilient periphery extend outwardly and engage the cylindrical interior wall of the inner tubular portion 112 so as to prevent fluid flow inwardly therepast yet is sufficiently resiliently deflectable so as to permit fluid flow outwardly therepast.

The inner core 122 has the passageway 46 which is open at both an axial inner end and open at an axial outer end. The inner core 122 includes a cylindrical lower portion 123 which has a plurality of flutes at circumferentially spaced locations thereabout which effectively form with the outer casing 120 peripheral passageways 152 which extend axially. Passageways 152 are open to the outer compartment 66 between discs 42 and 44 at the inner ends of the passageways. At the outer ends, the passageways 152 join radial inlets 54 in the lower portion 123 which provide comnunication into the central passageway 46.

The piston 14 provides a central flow path for flow of fluids in the passageway 46, through the screens 56, 57 and 88 and, hence, through the smaller tube portion 136 to the outlet 48. The piston 14 provides another flow path for flow of fluid from the outer compartment 66 via peripheral passageways 152 and inlets 54 into the passageway 46. This pathway permits fluid flow both inwardly and outwardly and is particularly adapted to receive any liquid which under gravity flows down to the lower and axially outermost portion of the outer compartment 66 where the openings to the peripheral passageways 152 are provided.

Operation of the second embodiment of Figures 5 and 6, other than in respect of the air pump disc 180, is similar to that with the first embodiment of Figures 2 to 4.

In movement of the piston 14 in a withdrawal stroke from a retracted position as illustrated in Figure 5 to the extended position illustrated in Figure 6, of course, with the cover 107 shown in Figure 5 having been removed, fluid between the inner disc 40 and the intermediate disc 42 is forced outwardly past the intermediate disc 42 because the volume between the discs 40 and 42 decreases with outward movement of the piston 14.

In the withdrawal stroke of the piston, atmospheric air is drawn inwardly via the outlet 48 and passageway 46 into the air chamber 186 and, at the same time, in between the intermediate disc 42 and the outer disc 44 via inlets 54 and passageways 152.

Air is drawn into the area between the larger diameter outer disc 44 and the smaller diameter intermediate disc 42 since the volume between the discs 42 and 44 increases as the piston 14 is drawn outwardly.

In a retraction stroke, the volume between the inner disc 40 and the intermediate disc 42 increases and since intermediate disc 42 prevents fluid flow outwardly therepast, a vacuum is created which deflects the inner disc 40 so as to draw fluid from the container as indicated by arrow 179 through inlet 178 and hence outwardly past the deflecting inner disc 40. In the retraction stroke, the volume between the outer disc 44 and the intermediate disc 42 decreases and, thus, any air or liquid therebetween is forced out passageway 152 and inlet 54 to pass outwardly through the passageway 46, through the screens to the outlet 48. At the same time in the retraction stroke, air from the air chamber 186 is forced outwardly via the passageway 46 to also pass outwardly through the screen 188.

Operation of the pump illustrated in Figures 5 and 6 will draw liquid out of a container creating a vacuum therein.

As shown in Figure 5, the outer disc 44 includes a resilient sealing flange 130 which is formed as a thin resilient flange having an elastically deformable edge portion near the side wall 36 of the outer chamber 24. This edge portion of the sealing flange 130 is deflectable radially inwardly so as to permit, under a sufficiently high vacuum differential, air to flow axially inwardly therepast. Preferably, the piston 14 may be configured such that substantially all air to be drawn inwardly is drawn inwardly via the outlet 48, however, a device could be arranged such that the restriction to flow through the screens 56, 57 and 188 is such that some proportion or substantially all the air is drawn past the sealing flange 130. The locating flange 128 on the outer disc 44 is preferably provided to permit fluid flow therepast but could be configured to prevent fluid flow inwardly and/or outwardly. Other embodiments are possible in which a one-way valve mechanism is provided in outlet tube 136 which prevents flow back through the outlet 48.

In sliding of the piston 14 in an extension stroke from the retracted position shown in Figure 5 towards an extended position, fluid, notably air from the outlet 48 but also possibly liquid and/or foam in the outlet tube 136 and passageway 46, is drawn upwardly into the air chamber 186 at the same time as liquid, foam and/or air is drawn into the lower compartment 66. In sliding of the piston 14 from in a retraction stroke to the extended position to the retracted position, air and/or other foam or fluid in the air chamber 186 is pressurized and forced outwardly through the passageway 46 through the screens. The air pump disc 180 provides for inhalation and expulsion of fluids, notably air, in addition to the quantities of fluid inhaled and expulsed by the remainder of the pump assembly and, thus, the air pump disc 180 increases the volume of air which is available to be forced through the screens to produce foam. The configuration shown has an air pump 179 comprising the air chamber-forming member 172 and the air pump disc 180 inward from the remainder of the pump assembly 10 and of a diameter not exceeding that of the outer tubular portion 108. This is an advantageous configuration to provide additional air pumping capacity with the same piston stroke in a device which can be inserted into the mouth of a reservoir.

The inner disc 40 and intermediate disc 42 form a first stepped pump. The intermediate disc 42 and the outer disc 44 form a second stepped pump, out of phase with the first pump. The air pump 179 is in phase with the second pump and out phase with the first pump.

Figure 5 shows, in addition to the two screens 56 and 57 to produce foam, a three- dimensional basket-like screen 188 having generally frustoconical walls with small openings therethrough as in the manner of known filter members. Only one of the three screens needs to be provided. Other porous members to produce foam may be used.

In Figures 5 and 6, only one passageway 152 and inlet 54 is shown to provide communication from the outer compartment 66 to the passageway. Other passageways may be provided to provide communication from the outer compartment 66 to the passageway 46.

It is to be appreciated that the nature of the liquid to be dispensed including its viscosity and flow characteristics will be important in order for a person skilled in the art to make suitable selection of the relative sizes and dimensions and resistance to flow provided by the various passageways, inlets, outlets and screens and/or past the various discs. As well, the quantity of liquid desired to be dispensed in each stroke will have a bearing on the relative proportion and sizing of the components including particularly the inner compartment 64, outer compartment 66 and the axial length of a stroke of the piston.

In the preferred embodiments, the engagement disc 62 is provided on the piston 14 for engagement to move the piston inwardly and outwardly. It is to be appreciated that various other mechanisms can be provided for engagement and movement of the piston relative the body 12.

The preferred embodiments show dispensers for passing liquid and air through screens 56, 57 and 188 to dispense the liquid as a foam. The screens 56, 57 and 188 can be eliminated in which case the dispenser illustrated could serve to dispense liquid with air. The foaming screens could be replaced by another orifice device such as an atomizing nozzle to produce a mist or spray.

The preferred embodiments of the invention show passages for dispensing of the air and/or liquid as being provided internally within a piston. Such an arrangement is believed preferred from the point of view of ease of construction of the pump assembly 10. However, it is to be appreciated that passageways for dispensing the liquid and/or foam may be provided, at least partially, as part of the body 12 or removably mounted to the body 12.

In accordance with the preferred embodiment illustrated, the relative buoyancy of air within the liquid and, hence, the separation of air and liquid due to gravity are utilized as, for example, to permit air in the compartment 64 to flow upwardly into the reservoir 60 and liquid in the reservoir 60 to flow downwardly into the inner compartment 64 as, for example, when the inner compartment 64 is open to the reservoir. It is to be appreciated, therefore, that the pump assembly in accordance with the presence invention should typically be disposed with what has been referred to as the inner end of the pump assembly at a height above the height of the outer outlet end.

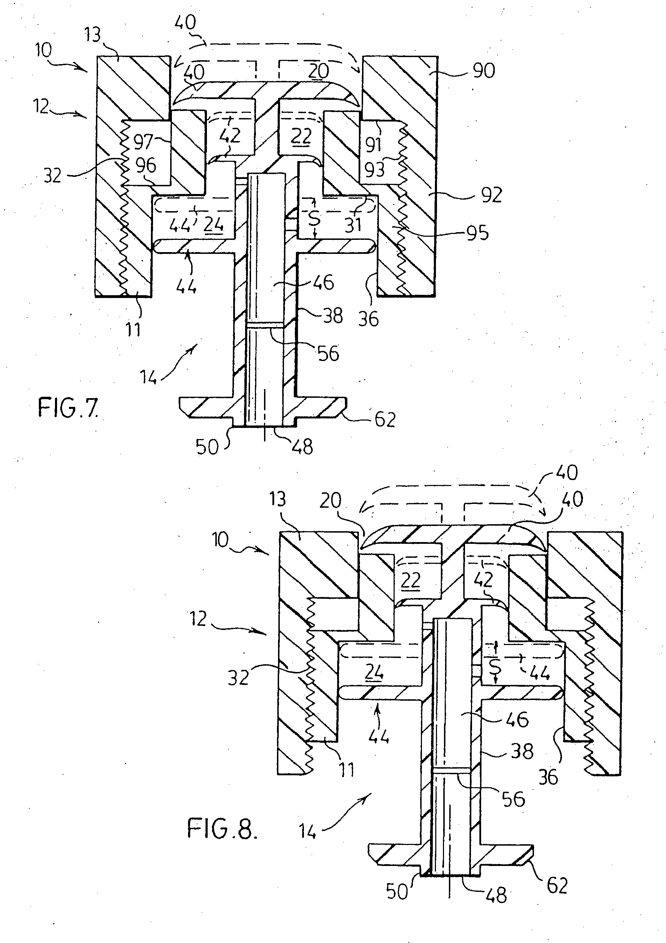

Reference is made to Figures 7 and 8 which show a third embodiment of a pump assembly in accordance with the present invention. The pump assembly of the embodiment of Figures 7 and 8 is identical to the embodiment of Figures 2 to 4, however, the piston chamber forming body 12 is formed of two separate members, an outer body member 13 and an inner body member 11 which are adapted to move axially relative to each other. In this regard, the outer body member 11 is an annular ring which is circular in cross-section and has a radially inwardly extending flange 90 at its inner end which defines the cylindrical chamber side wall 30 of the inner chamber 20. The flange 90 ends at a shoulder 91 with the outer body member 13 extending axially therefrom as a ring-like portion 92 whose radially inwardly directed surface carries threads 93. The inner body member 11 is an annular member which is circular in cross-section and defines internally thereof the intermediate chamber 22 and the outer chamber 24. As well, the inner body member 11 carries and defines the shoulder 31 which forms an outer end of the inner chamber 20. The inner body member 11 has a lower portion 95 carrying a cylindrical outer surface which is threaded with threads which match with and engage the threads on the outer body member 13 such that relative rotation of the body members 11 and 13 will axially move the body members 11 and 13 relative to each other. The inner body member 11 has a shoulder 96 on its outside surface in opposed relation to the shoulder 91 on the outer body member 11. Inward of the shoulder 96, the inner body member 11 has a circumferential outer wall 97 which is adapted to sealably engage with a radially inwardly directed cylindrical wall 30 of the flange 90 of the outer body member 13 so as to form a seal therebetween. As to be seen in the comparison between Figures 7 and 8, with relative axial movement of the inner body member 11 and outer body member 13, the axial extent of the outer chamber 20 may be varied, however, the intermediate chamber 22 and the outer chamber 24 are not changed. The embodiment of Figure 7 shows an arrangement in which the piston 14 moves through the stroke indicated being an axial distance represented by the letter S. In the fully retracted position as illustrated in dotted lines in Figure 7, the inner disc 40 is intended to be maintained in a sealed condition with the side walls of the inner chamber 20 thus preventing fluid flow outwardly therepast. The volume of fluid which will be drawn from the reservoir in each cycle of the piston will be determined by the length of the stroke times the difference in the cross-sectional area between the inner chamber 20 and the intermediate chamber 22. Referring now to Figure 8, the axial extent of the inner chamber 20 has been reduced. The stroke of the piston in Figure 8 is the same as in Figure 7 and is also indicated by S. However, in each complete cycle of the piston, the volume of fluid to be drawn from the reservoir is represented merely by the axial extent of the inner chamber 20 that the inner disc 40 is in sealed engagement therewith which is merely a fraction of the axial extent that the inner disc is in sealed engagement with the inner chamber in Figure 7. Thus, it is to be appreciated, that by axial movement of the inner chamber member 11 relative to the outer chamber member 13, the amount of fluid dispensed in each complete stroke can be varied, however, since the displacement of the pump between the intermediate disc 42 and outer disc 44 has not changed, effectively, the relative volume of liquid dispensed to air dispensed in each stroke can be varied for a constant length stroke of the piston.

Referring to Figure 8, it is to be appreciated that when the inner disc 40 is inwardly of the inner chamber 20 such that the inner disc 40 is no longer in engagement with the inner chamber 20, then the inner disc 40 does not prevent fluid flow from the reservoir into or out of the inner chamber 20.

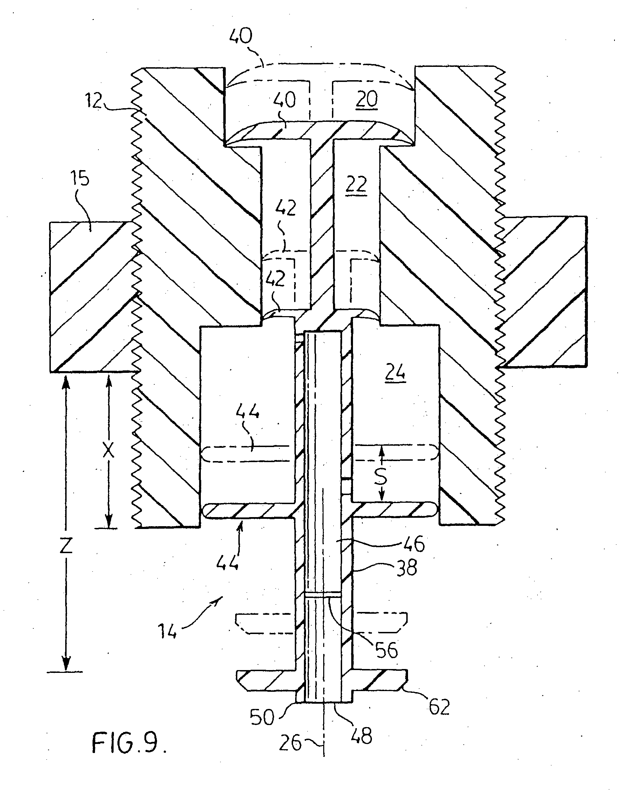

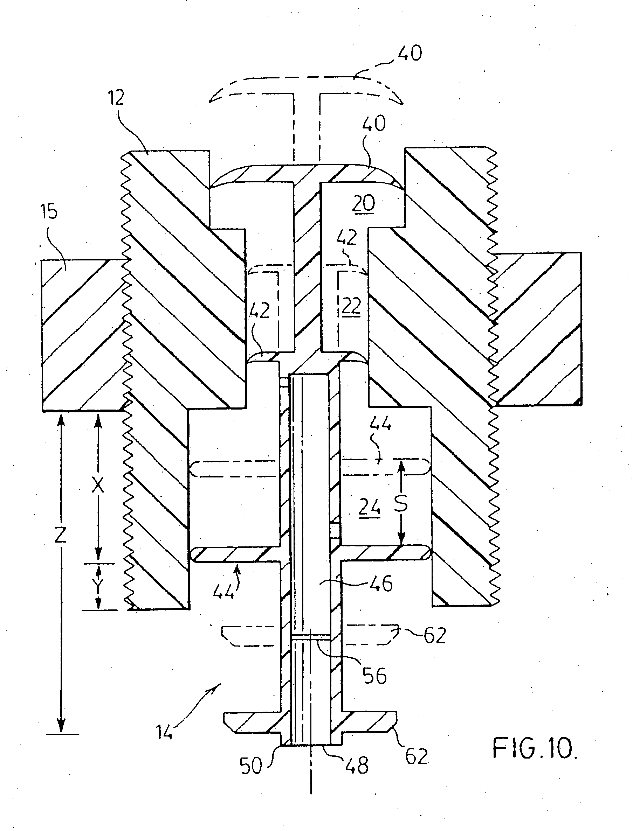

Reference is made to Figures 9 and 10 which illustrate a fourth embodiment of the present invention. The piston 14 and body 12 in Figures 9 and 10 have identical features to those illustrated in the first embodiment of Figures 2 to 4, however, with different proportions in the axial direction and with the cylindrical outer surface of the body 12 threaded so as to threadably engage with an annular support ring 15 which carries mating threads on its cylindrical interior surface. The support ring 15 is to be located in a fixed position relative to the support plate 84 of the dispenser as shown in Figure 1 such that the support ring 15 will be in a fixed position relative to the lever 88. By rotating the body 12 about its axis, the axial, that is, vertical location as seen in Figure 1, of the body 12 can be varied. However, with the lever 88 fixed in position relative to the support ring, it follows that the piston 14 which is held by the lever 88 is held in a fixed position relative to the support ring 15.

Referring to Figure 9, the position of the piston 14 is illustrated in an extended position in solid lines and in a retracted position in dotted lines. The movement of the piston axially from the extended position to the retracted position is the axial length of a single stroke of constant fixed length indicated as S. In Figure 9, during the entire stroke, the inner disc 40 is retained within the inner chamber 20.

Referring to Figure 10, Figure 10 illustrates a position in which the body 12 has been moved axially outwardly relative to the support ring 15. As shown, in comparing Figures 9 and 10, in Figure 9, the body 12 extends from the support ring 15 a distance X whereas in Figure 10, the body 12 extends from the support ring a distance equal to X plus Y. In each of the embodiments, the axial distance of the engagement flange 62 from the ring support 15 is a constant distance represented as Z. In the embodiment of Figure 10, in the retracted position, the inner disc 40 is axially inwardly of the inner chamber 20 and thus does not prevent flow of liquid from the reservoir inwardly or outwardly of the inner chamber 40. In a cycle of the piston 14 in Figure 10 through a constant stroke indicated as S, there is effectively pumping for an axial distance that the inner disc 20 passes from first coming to seal the inlet end of the inner chamber 40 to the position of the inner disc 20 in the extended position of the stroke indicated in solid lines in Figure 10.

In describing Figures 9 and 10, the position of the piston 14 in a retracted position is defined as an indexing position. From this indexing position, the piston 14 is moved in each stroke relative to the body 12 to the extended position and then back to the indexing (retracted) position. In the pump of Figures 9 and 10, Figure 9 illustrates the pump 10 in a first indexing condition with the piston 14 having a first indexing position relative to the body 12. In a cycle of operation involving one retraction stroke and one extension stroke, for a fixed length of stroke indicated as S, a first fixed volume of fluid is drawn from the reservoir and displaced past the intermediate disc 42. The pump is capable of assuming other indexing configurations such as the one indicated in Figure 10 in which the piston is in a different indexing position than the indexing position of Figure 9. For the same fixed length stroke of the piston, the volume of liquid discharged past the intermediate disc 42 is equal to a different amount having regard to the relative proportion of the stroke that the inner disc 40 engages the inner chamber 20 to prevent fluid flow inwardly therepast. The axial movement of the body 12 relative to the support ring 15 provides an indexing adjustment mechanism to change the indexing position of the piston 14 so as to change the volume dispensed.

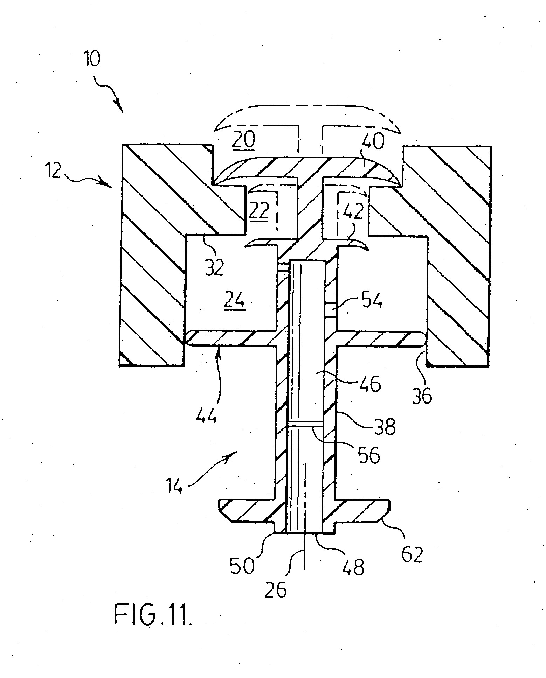

Reference is now made to Figure 11 which shows a fifth embodiment of the present invention with the piston 14 in a fully extended position in solid lines in a fully retracted position in dashed lines. The piston 14 is identical to the piston of the embodiment of Figures 2 to 4. The body 12 is similar, however, the axial length of the inner chamber 20 and the intermediate chamber 22 have been reduced. As seen in the extended position in solid lines, the intermediate disc 42 extends outwardly beyond the intermediate chamber 22 and the inner disc 40 is engaged in the inner chamber 20. In the extended position, air from outer chamber 24 may flow inwardly past the intermediate disc 42 to between the intermediate disc 42 and the inner disc 40 and fluid may flow outwardly past the intermediate disc 42. When in the retracted position as illustrated in dashed lines, the inner disc 40 is inwardly beyond the inner chamber 20 and the intermediate disc 42 is engaged in the intermediate chamber 22. Air which may be between the intermediate disc 42 and the inner disc 40 may, under gravity, move upwardly so as to enter a bottle or other reservoir disposed above the pump 10, and fluid from the reservoir may flow downwardly to fill the inner chamber 40. This configuration can have the advantage of being capable of being used with a non-collapsible, rigid container so as to provide an allotment of air into a reservoir in each stroke which can assist in preventing a vacuum from being developed inside the reservoir. The pump of Figure 11, in fact, can positively pump air into the reservoir. The extent to which either the inner disc 40 extends inwardly past the inner chamber 20 and the extent the intermediate disc 42, extends outwardly past the intermediate chamber 22 can assist in determining the amount of air that may pass upwardly into the reservoir.

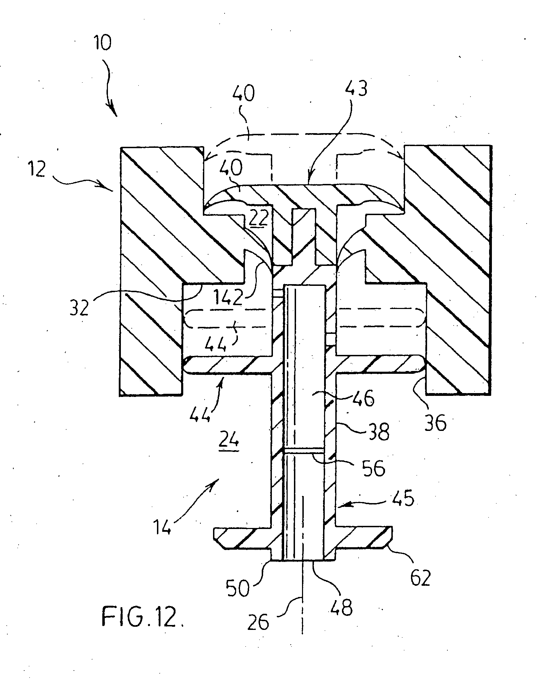

Reference is made to Figure 12 which shows a sixth embodiment of the present invention with the piston 14 in a fully extended position in solid lines and in a retracted position in dashed lines. The pump assembly 10 of Figure 12 is the same as that of Figures 2 to 4 but modified to remove the intermediate disc 42 from the piston 14 and to provide an equivalent flexible annular intermediate disc or flange 142 to extend inwardly from the body 12 within the intermediate chamber 22. In this regard, the piston 14 has its stem 38 to be of a constant diameter between the inner disc 40 and the outer disc 44. The piston 14 is also shown to be constructed of two parts, an inner portion 43 carrying the inner disc 42 and an outer portion 45 carrying the outer disc 44.

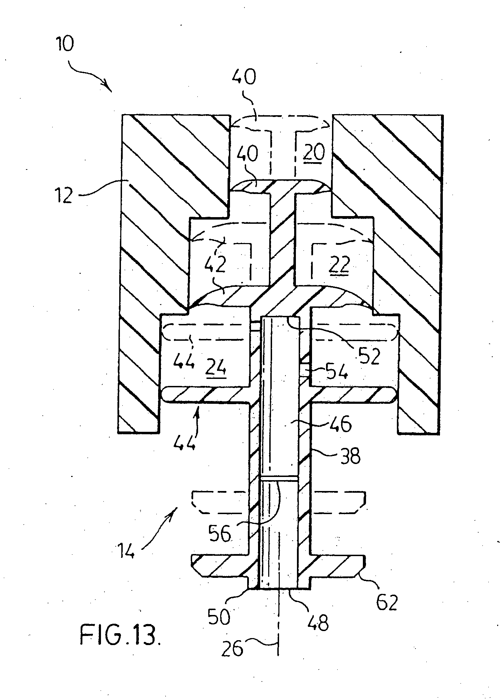

The intermediate flange 142 extends radially outwardly and downwardly and has a flexible outer periphery which engages the stem 38 between the inner disc 40 and the outer disc 44 to prevent fluid flow inwardly therepast yet which is resiliently deflectable radially outwardly to permit fluid flow outwardly therepast. In each of the embodiments of Figures 1 to 11, the intermediate disc 42 may be replaced by an intermediate flange 142 as in Figure 12. Similarly, in each of the embodiments of Figures 13 to 17, the inner disc 40 may be replaced by a similar intermediate flange to extend inwardly from the inner chamber 20.

Figures 1 to 12 illustrate a first version of the invention in which the inner chamber 20 is of a greater diameter than the intermediate chamber 22 and the intermediate chamber 22 is of a greater diameter than the outer chamber 24.

Reference is now made to Figures 13 to 17 which illustrate a second version of the pump assembly of the invention in which the inner chamber 20 is of a smaller diameter than the intermediate chamber 22 and the intermediate chamber 22 is of a smaller diameter than the outer chamber 24. The embodiments shown in Figures 13 to 17 do not form part of the invention but represent background art that is useful for understanding the invention. The piston illustrated in each of Figures 13 to 17 has components identical to the components illustrated in Figures 2 to 4, however, with a notable difference that the inner disc 40 is smaller than the intermediate disc 42. Figure 13 illustrates a seventh embodiment of the invention in which the inner disc 40 and the intermediate disc 42 form a first stepped pump and the intermediate disc 42 an the outer disc 44 form a second stepped pump. The two stepped pumps are in phase in a sense that both operate to discharge fluid outwardly on a retraction stroke and to draw fluid in between their respective discs on an extension stroke. In an extension stroke, the inner pump effectively serves to draw liquid from the reservoir and between the inner disc 40 and the intermediate disc 42 and to discharge it past the intermediate disc 42 between the intermediate disc 42 and the outer disc 44. The second pump serves to draw air inwardly into between the intermediate disc 42 and the outer disc 44 in a withdrawal stroke and to discharge liquid and air outwardly through the outlet 48 in a retraction stroke.

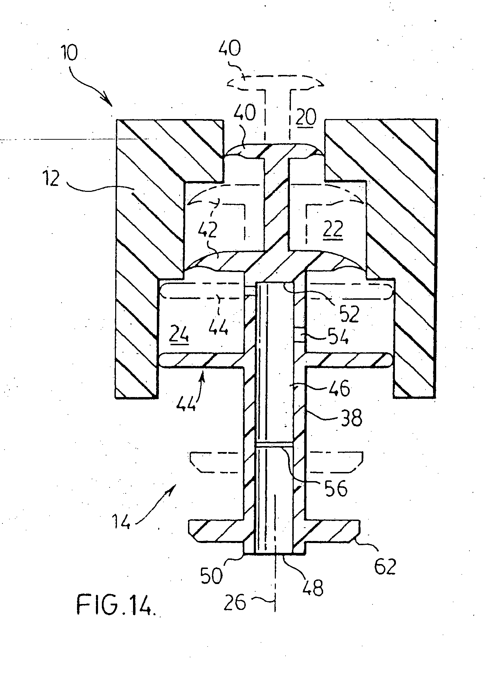

Reference is made to Figure 14 which illustrates an eighth embodiment of the invention which is identical to the embodiment shown in Figure 13 with the exception that the axial length of the inner chamber 20 is reduced to an extent that in the retracted position illustrated in dashed lines in Figure 14, the inner disc 40 extends inwardly beyond the inner chamber 20. In the embodiment of Figure 14, compared to that of Figure 13, the fluid drawn from the reservoir in each cycle of the piston, will be reduced having regard to the axial extent in each stroke that the inner disc 40 is in engagement with the inner chamber 20.

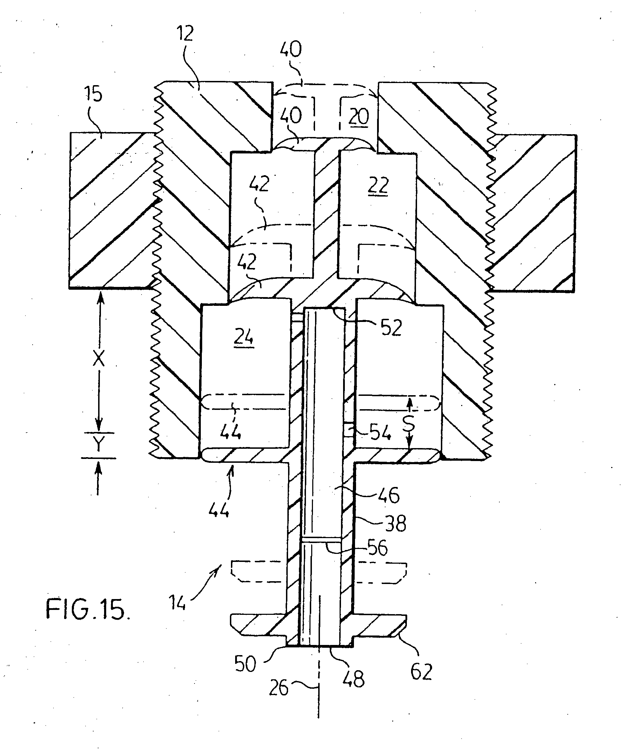

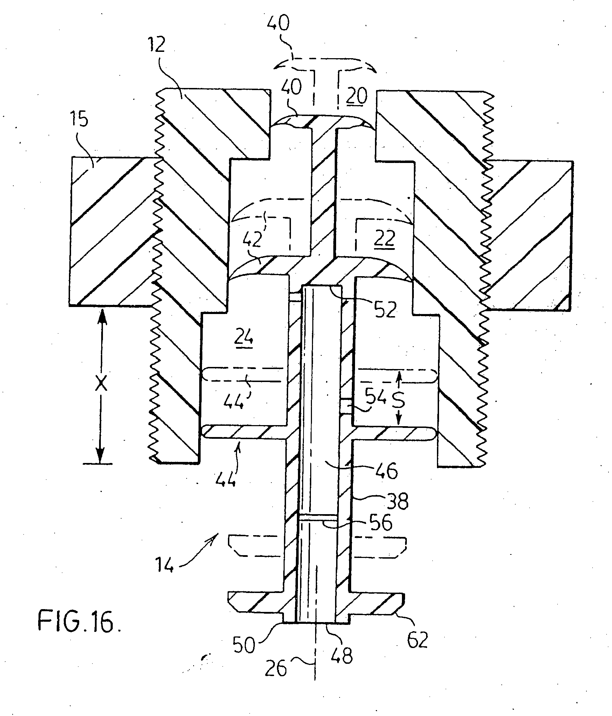

Figures 15 and 16 illustrate a ninth embodiment of the second version of the pump having an arrangement similar to that illustrated in Figures 9 and 10 of the first version with the body 12 being elongated and threadably received within a locating ring 15 such that relative axial displacement of the body 12 relative to the ring 15 will vary the volume of liquid that is drawn into the pump from the reservoir in each cycle of the pump. In comparison of Figure 15 to Figure 16, with the ring support member 15 fixed relative to the dispenser support member 84 and the pivot point of the lever 88, the body 12 is moved inwardly from the position of Figure 15 to the position of Figure 16 by an axial distance equal to Y. Each of Figures 15 and 16 show movement of an identical piston through an identical equal stroke distance indicated S.

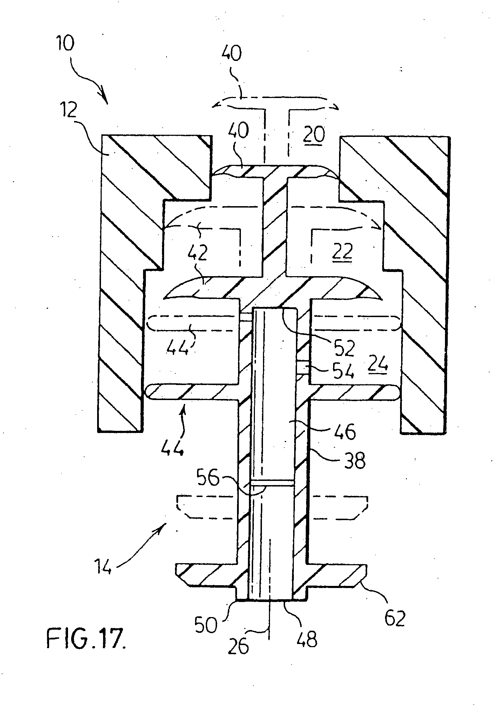

Reference is made to Figure 17 which illustrates a tenth embodiment similar to Figure 14, however, in this embodiment not only in the retraction position is the inner disc 40 inward of the inner chamber 20 but, in addition, in the withdrawal position, the intermediate disc 42 is outward of the intermediate chamber 22. The embodiment of Figure 17 can be used with a non-collapsible bottle in that in each stroke, some quantity of air can be permitted to pass firstly when the pump is in the extended position from between the outer disc 44 and the intermediate disc 42 inwardly past the intermediate disc 42 and, subsequently, when the piston is in the retracted position to pass from between the intermediate disc 42 and the inner disc 40 to past the inner disc 40 and into the reservoir. Relative selection of when each of the discs 40 and 42 come to disengage from their respective chamber and their relative sizes of the different chambers can be used to determine the amount of air which may be permitted to be passed back into a reservoir in any stroke. Preferably, as shown, at all times, at least one of the inner disc and the intermediate disc 44 are in engagement with their respective chamber to prevent fluid flow outwardly.

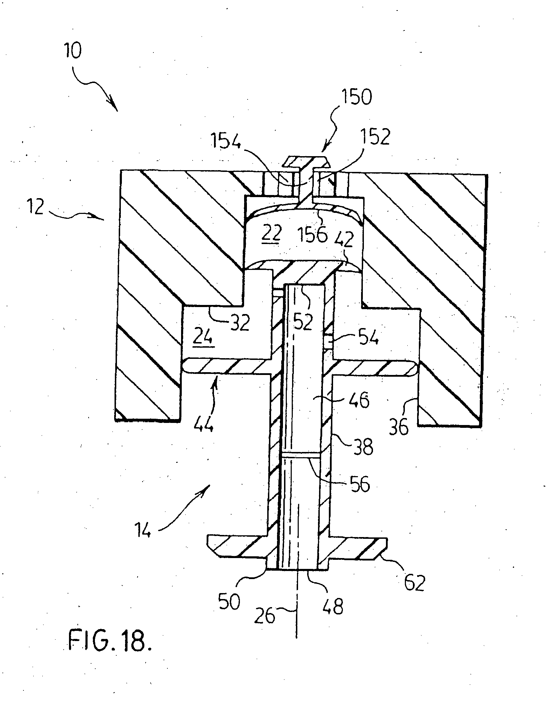

Reference is made to Figure 18 which shows a third version of the pump assembly of the invention in which, while similar to the first and second versions, the outer chamber 24 is larger than chamber 42 intermediately inwardly therefrom. The embodiment shown in Figure 18 does not form part of the invention but represents background art that is useful for understanding the invention. Rather than providing a one-way valve mechanism for one way flow inwardly from the reservoir to the chamber 42, such as the inner disc 40 in an inner chamber in the case of Figures 1 to 17, a one-way valve 150 is provided in an inlet port 152 to the chamber 42. Valve 150 has a stem 154 which carries an inner valve disc 156 which extends radially outwardly from the stem 154 to engage the side wall of the chamber 42. The valve disc 156 has a resilient outer perimeter which is directed outwardly and engages the chamber 42 to prevent fluid flow therepast inwardly yet deflects radially inwardly to prevent fluid flow outwardly therepast. Similar such one-way valves could be used in replacement of the inner disc 40 in the embodiments of Figures 13 to 17.

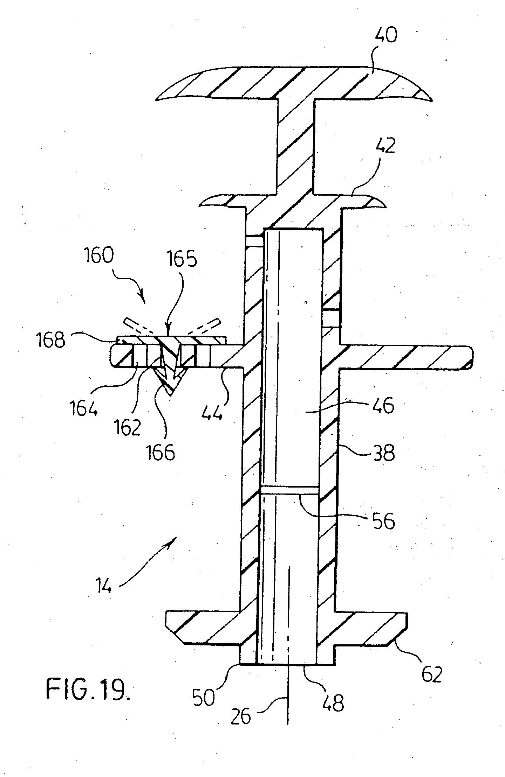

Reference is made to Figure 19 which illustrates a first alternate form of a piston 14 adapted for substitution of the piston 14 in the embodiment of Figures 2 to 4. Piston 14 as shown in Figure 19 is identical to that shown in Figures 2 to 4, however, includes a one-way valve 160 provided on the outer disc 44 and adapted to provide for fluid flow inwardly through the outer disc 44 and to prevent fluid flow outwardly. In this regard, the disc 44 is provided with a center opening 162 therethrough and a pair of openings 164 on either side of the center opening. A valve member 165 has a stem with an arrow-like head 166 which is adapted to pass through the center opening and secure the valve member therein against removal. The valve member includes an inner flexible disc member 168 which inherently assumes a flat condition to overlie and close the openings 162 and 164, however, which is resiliently deflectable so as to deflect to the positions illustrated in dashed lines in Figure 19 so as to permit air flow inwardly through the opening as when, in an extension stroke, a pressure differential is created as a result of creating a vacuum inside the outer chamber 24. Thus, on an extension stroke, atmospheric air may flow into the outer chamber 24 through the one-way valve 165 provided in the outer disc 44. However, on a retraction stroke on moving of the piston 14 inwardly, the one-way valve 165 prevents fluid flow outwardly through the one-way valve.

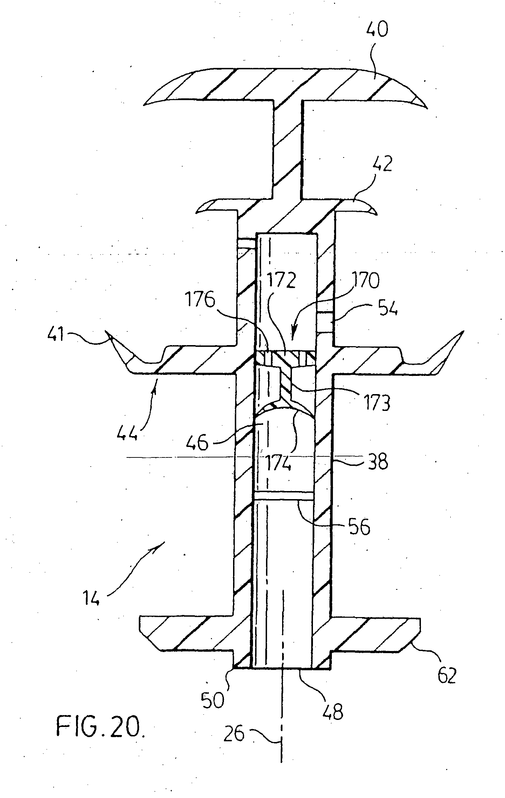

Reference is made to Figure 20 which shows a second alternate form of a piston 14 for use in the embodiment of the piston assembly shown in Figures 2 to 4. The second alternative shown in Figure 20 is identical to that shown in Figures 3 and 4 with the exception that the outer disc 44 is provided with an inwardly directed resilient inner periphery 41 which is adapted to engage the wall 36 of the outer chamber 24 so as to prevent fluid flow outwardly therepast yet which is adapted to deflect radially inwardly so as to permit atmospheric air to flow past the outer disc 44 on the piston 14 moving outwardly. The second alternative piston 14 of Figure 20 also includes a one-way valve 170 provided internally within the passageway 46 between the inlet 54 and the screen 56. This valve 170 has an inner securing disc 172 frictionally received in the passageway 46 against movement. A stem 173 extends axially from the disc 172 and carries a resilient outwardly directed flexible disc 174. The securing disc has openings 176 therethrough permitting passage. The flexible sealing disc 174 has a resilient outer periphery which is adapted to engage the inner surface of the passageway 46 to prevent fluid flow inwardly therepast yet is adapted to deflect radially inwardly so as to permit fluid flow outwardly through the passageway 46. In use of a piston as illustrated in Figure 20, the one-way valve 170 inside the stem 38 substantially prevents any fluid flow back into the outer chamber 24 in an extension stroke such that effectively all air to be drawn into the outer chamber 24 in the extension stroke must be drawn past the deflecting outer periphery of the outer disc 44. As a further embodiment, the interior one-way valve 170 is not provided and, thus, in the extension stroke, there may be draw back of air and foam through the screen 56 as well as drawing of air into the chamber 24 by reason of deflection of the resilient periphery 41 of the outer disc 44.

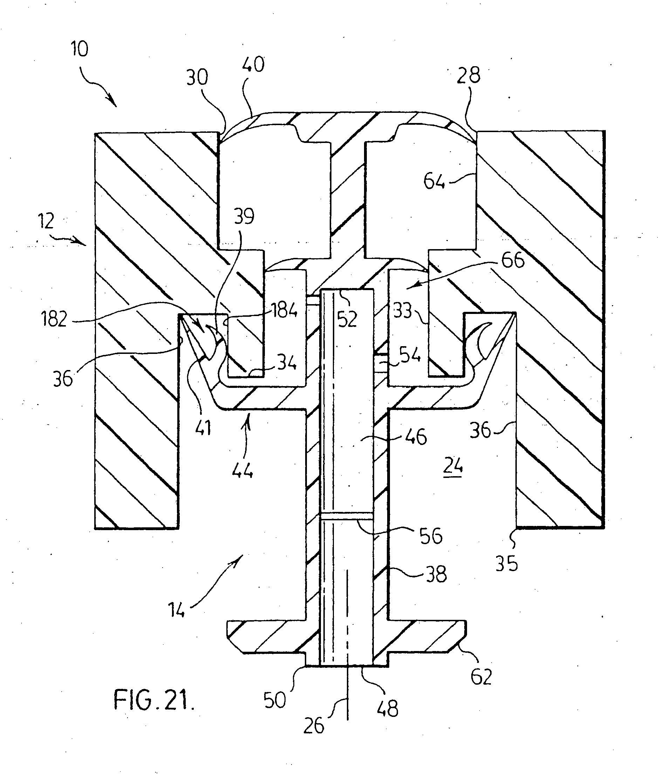

Reference is now made to Figure 21 which shows an eleventh embodiment of a pump assembly in accordance with the present invention. The pump assembly 10 in Figure 21 is identical to the pump assembly of Figures 2 to 4 with the exception that the piston 14 has been modified so as to provide the outer disc 44 with an annular resilient peripheral flange. The resilient flange includes not only an inwardly and outwardly directed outer arm 41 but also a resilient radially inwardly and inwardly directed inner arm 39. The body 12 in Figure 21 is identical to that in Figures 2 to 4 with the exception that an annular channel 182 extends inwardly into the shoulder 34 of the outer chamber 24 which annular chamber 182 has a common outer wall 36 with the remainder of the chamber 24 and provides a new outwardly directed inner wall 184.

The outer arm 41 is adapted to engage the cylindrical wall 36 of the outer chamber 44 to prevent fluid flow outwardly therepast.

While the inner arm 39 engages on the cylindrical inner wall 184, the inner arm prevents flow of fluid, notably atmospheric air, past the outer disc 44 inwardly to between the outer disc 44 and the intermediate disc 42. Thus, in a withdrawal stroke, on the piston 14 [0198] moving from the retracted position illustrated in Figure 21 to an intermediate position in which the inner arm 39 is axially outward from the shoulder 34 such that the inner arm 39 does not engage the inner wall 184 or the shoulder 34, then the flow of air inwardly past the outer disc 44 is prevented. However, in an extraction stroke, once the inner arm 39 is outwardly of the shoulder 34 and thus out of the annular channel 182, atmospheric air may be drawn inwardly past the outer disc 44 by deflection of arm 41. It is to be appreciated, therefore, that from a retracted position illustrated in Figure 21 moving the piston outwardly initially while the inner arm 39 is within the annular channel 182, there is drawback of fluid including air and liquid from the passageway 46 as can be advantageous as to prevent dripping of liquid and foam out the outlet 48. However, on further outward movement of the piston 14 with the inner arm 39 outwardly of the annular channel 182, the suction produced between the outer disc 44 and the intermediate disc 42 may also draw air inwardly past the outer arm 41 and, as a result, atmospheric air may flow between the outer disc 44 and the intermediate disc 42 either outwardly past the outer disc 44 or through the passageway 46 with the relative proportion of the flow having regard to the relative resistance of flow through each of the two pathways. It is to be appreciated, that while the inner arm 39 is within the annular channel 182 that there is drawback only through the passageway 46 and that once the inner arm 39 clears the annular channel 182 that there may be effectively only flow inwardly past the outer periphery of the outer disc 44. A bifocated inner disc as illustrated in Figure 21 may be adapted for use in other of the embodiments illustrated.

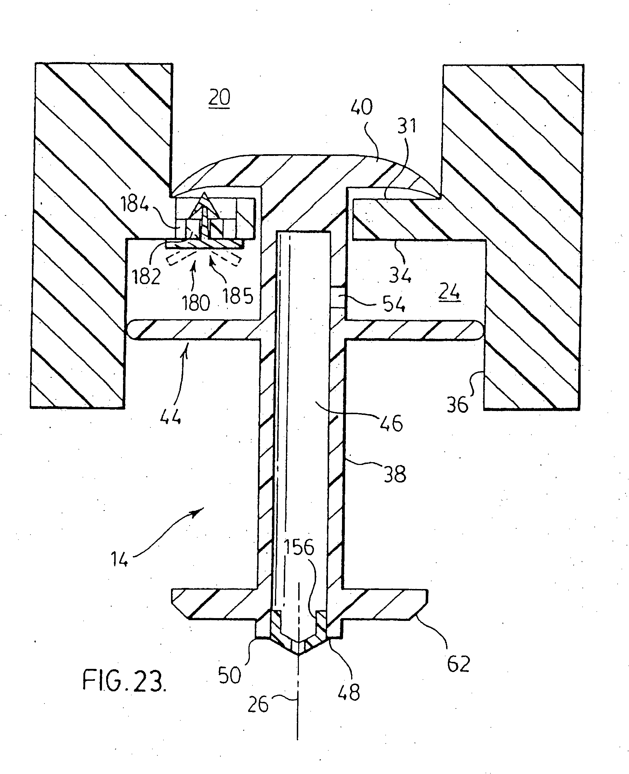

Reference is made to Figure 23 which shows a fourth version of a pump assembly in accordance with the present invention. The pump assembly illustrated in Figure 23 can be considered to be similar to that in Figure 4, however, with the intermediate disc 42 removed, the stem 38 provided with a cylindrical constant cross-sectional area between the inner disc 40 and the outer disc 44 and the intermediate chamber 42 reduced in diameter to a diameter close to that of the stem 38 between the inner disc 40 and the outer disc 44 so as to effectively prevent any substantial fluid flow therebetween. A one-way valve 180 is provided between the inner and outer chambers. Two channels 184 and a center opening 182 are provided between the inner chamber 20 and the outer chamber 24 having inlets in the outer shoulder 31 of the inner chamber 20 and an outlet in the inner shoulder 34 of the outer chamber 24. A one-way valve member 185 is provided which prevents fluid flow inwardly through the channels 184 and opening 182 yet permits fluid flow outwardly through the channels 184. The one-way valve member 185 has a central stem passing through the central opening 182 carrying a flexible disc outwardly of the channels 184 and an arrowhead retained inwardly. The channels 184 and the one-way valve member 185 therefore provide a similar function to the intermediate disc 42 of the embodiment of Figures 2 to 4 or the intermediate flange 142 of the embodiment of Figure 12. Figure 23 is also modified to show replacement of the screen 56 by a nozzle member 156 disposed proximate the outlet 48 to at least partially atomize liquid when liquid and air pass therethrough simultaneously.

In Figure 21, the piston 14 is slightly modified over that illustrated in Figures 2 to 4 in respect of the inner disc 40 which has had its outer periphery reduced in thickness so as to show a configuration in which the inner disc 40 is sufficiently resilient that the inner disc 40 may pass inwardly through the intermediate chamber 22 such that the piston may be formed as a unitary element from plastic as by injection moulded and inserted through the outer chamber 24. This, for example, avoids the need of the piston to be made into portions as illustrated, for example, in the embodiment of Figure 12.

In operation of the pump illustrated in Figures 2 to 4, in the piston 14 moving from the retracted position to the extended position, a volume of liquid equal to a first volume is displaced in an inward direction past the intermediate disc 42 to between the intermediate disc 42 and the outer disc 44 and a volume equal to a second volume which is greater than the first volume and comprises both liquid and air is drawn in between the intermediate disc 42 and the outer disc 44. In the piston 14 moving from the extended position to the retracted position, a volume of liquid from the reservoir equal in volume to the first volume is displaced in an outward direction past the inner disc 40 to between the inner disc 40 and the intermediate disc 42 and a volume equal in volume to the second volume and comprising both liquid and air is displaced from between the intermediate disc 42 and the outer disc 44 out of the outlet 48. In the piston 14 moving from the retracted position to the extended position, the volume equal to the second volume which was drawn in between the intermediate disc 42 and the outer disc 44 comprises the first volume displaced in the outward direction past the intermediate disc plus a third volume comprising air from atmosphere and may include as a fourth volume liquid drawn back via the outlet from the passageway.

In respect of an embodiment using a piston 14 as illustrated in Figure 20 in a body as illustrated in Figures 2 to 4 and including the interior one-way valve 170 within the passageway 46, then on the piston 14 moving from the retracted position to the extended position, the volume equal to the second volume which was drawn into between the intermediate disc 42 and the outer disc 44 comprises the first volume consisting of fluid displaced in the outward direction past the intermediate disc 42 and a third volume comprising air from the atmosphere drawn inwardly past the outer disc 44. Insofar as the piston as illustrated in Figure 20 is used in a body as in Figures 2 to 4 but without one-way valve 170, then the second volume would comprise the first volume displaced in the outward direction past the intermediate disc 42 and a third volume comprising air from the atmosphere which may be drawn through the passageway 46 and/or outwardly past the outer disc 44. The same would be true in respect of the embodiment illustrated in Figure 21. Insofar as there is drawback of liquid through the outlet 48, then the second volume would also include as a fourth volume liquid drawn back through the passageway 46.

The embodiment of Figures 7 and 8 as well as Figures 9 and 10 and Figures 15 and 16 illustrate configurations in which the relative amounts of liquid and air may be dispensed can be varied. The embodiment of Figures 7 and 8 effectively illustrate modification by varying the axial extent of the inner chamber 20. In accordance with the present invention, the body 20 may be manufactured by injection moulding with the mould cavity forming the body 12 to provide for variable axial extent of the inner chamber 20. In this manner, by using substantially the same mould, bodies and therefore pumps, may be provided which provide for dispensing of different volumes of liquid merely by varying the axial length of the inner chamber 20.

A principal operation of pumps in accordance with many of the embodiments of the invention is that the volume dispensed past the outer disc is greater than the volume dispensed past the intermediate disc. Thus, for example, in the embodiment such as in Figures 2 to 4, with the volume dispensed past the outer disc 44 being greater than the volume dispensed past the intermediate disc 42, this allows for air to be drawn into the pump assembly and, subsequently, dispensed. Where the inner, intermediate and outer discs all remain in engagement with their respective chambers throughout the retraction and extension strokes, then it is preferred that the difference in area between the outer chamber and the intermediate chamber is greater than the difference in area between the inner chamber and the intermediate chamber. This relation may be seen, for example, in the embodiment of Figures 2 to 4.

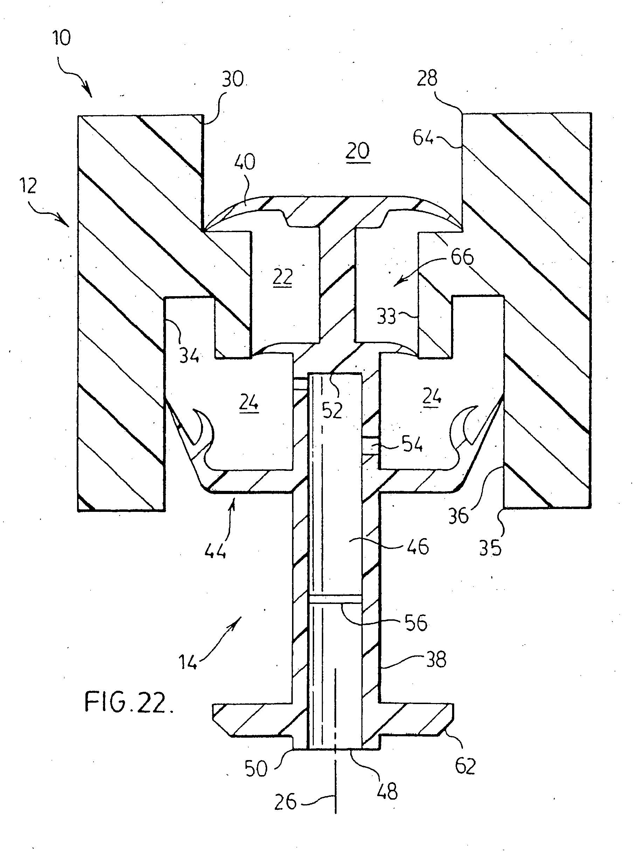

Reference is made to Figure 22 which shows a thirteenth embodiment of a pump assembly in accordance with the present invention. The pump assembly illustrated in Figure 22 can be considered to be similar to that in Figure 4, however, with the intermediate disc 42 removed, the stem having a cylindrical constant cross-sectional area between the inner disc 40 and the outer disc 44, the intermediate chamber is effectively reduced in diameter to a diameter which will engage the stem between the inner disc 40 and the outer disc 44 and effectively prevent a substantial fluid flow therebetween. A channel is, however, provided between the inner chamber 20 and the outer chamber 24 having an inlet in the outer shoulder of the inner chamber and an outlet in the inner shoulder of the outer chamber. A one-way valve is provided in this channel which prevents fluid flow inwardly through the channel yet permits fluid flow outwardly through the channel. The channel and the one-way valve therefore provide a similar function to the intermediate disc 42 of the embodiment of Figures 2 to 4 or the intermediate flange of the embodiment of Figure 22. Figure 23 is also modified to show a replacement of the screen 56 by a nozzle member 156 disposed proximate the outlet 48 to at least partially atomize liquid when liquid and air pass therethrough simultaneously.

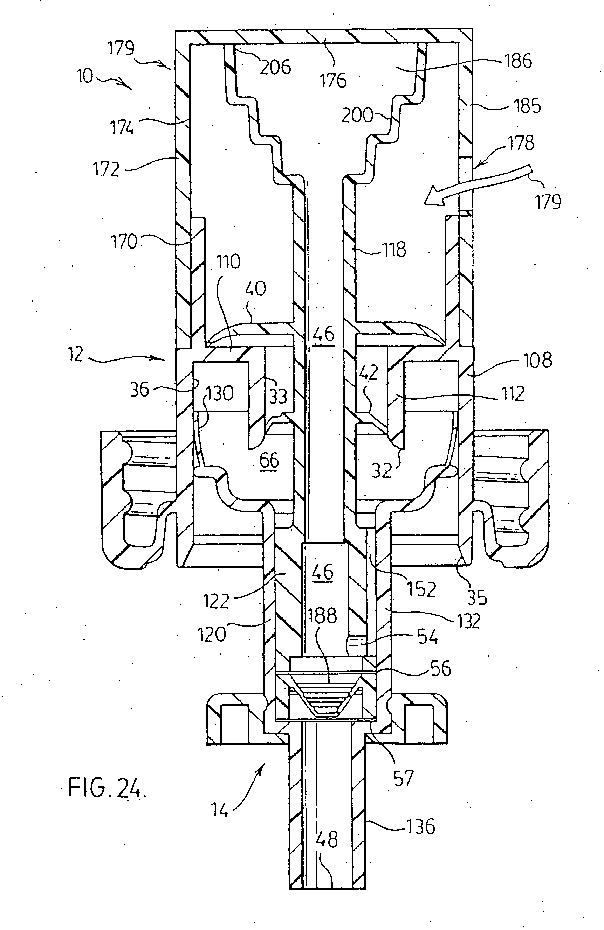

Figure 24 is a modification of the embodiment illustrated in Figure 6 so as to provide at the inner end of the piston 14 rather than the air pump disc 180 which slides within the air chamber-forming member 172, a flexible inner bellows/spring member 200 which extends rearwardly as an integral portion of the piston 14 to engage the rear wall 176 of the element 172. The inner bellow member 200 as illustrated in Figure 24 is compressed such that the inner bellows member 200 always urges the disc 40 forwardly towards engagement with the shoulder 110. With inward movement of the piston 14 in use, the inner bellows member 200 further resiliently deflects and, in this regard, acts as a spring to bias the piston 14 outwardly.

In addition, as the piston 14 is moved rearwardly, the internal volume in the air chamber 186 inside the inner bellows member 200 decreases such that the inner bellows member 200 draws air in and expels air out during use.

The inner bellows member 200 has the advantage of serving both as a pump and an internal spring to bias the piston 14, however, it may in other embodiments serve merely one or the other or both of these functions and, as well, may be adapted for pumping air, or fluid or a mixture of air and fluid.

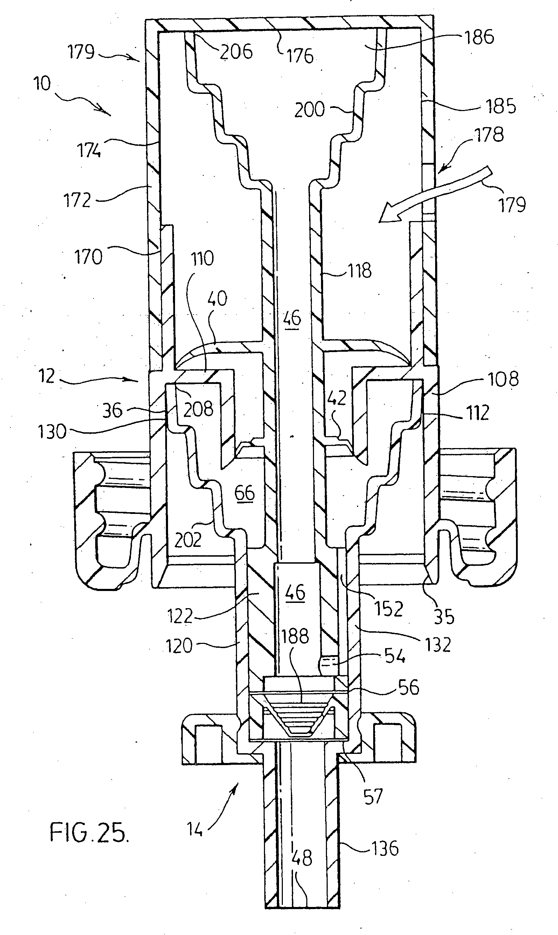

Figure 25 illustrates a further modification of Figure 6 over that of Figure 24 such that the piston outer disc 130 of Figure 6 is also replaced by a second bellows member 202 which will not only draw in and dispense air/liquid but also acts as a spring to bias the piston 14 outwardly.

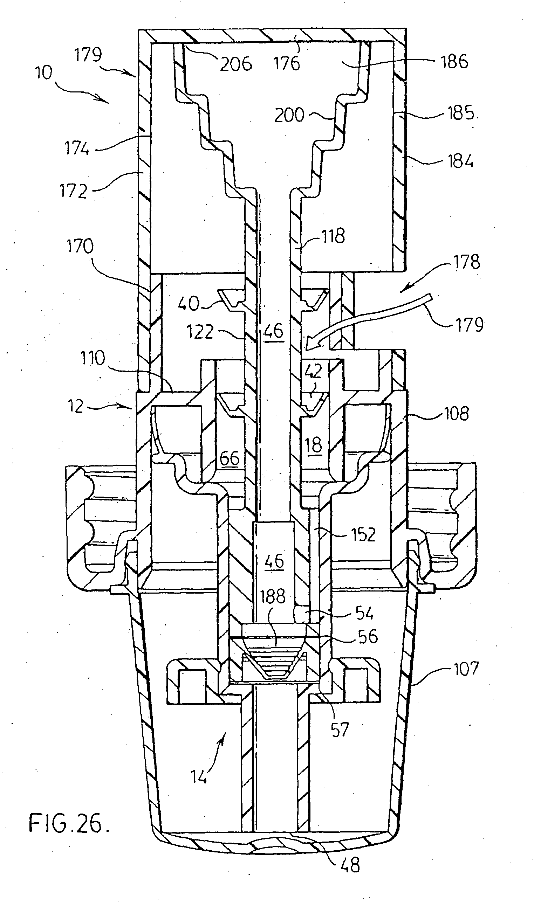

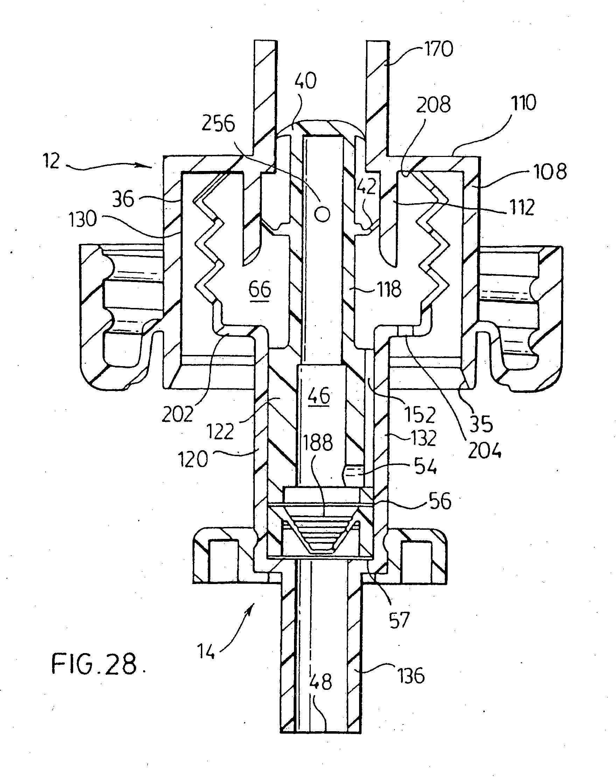

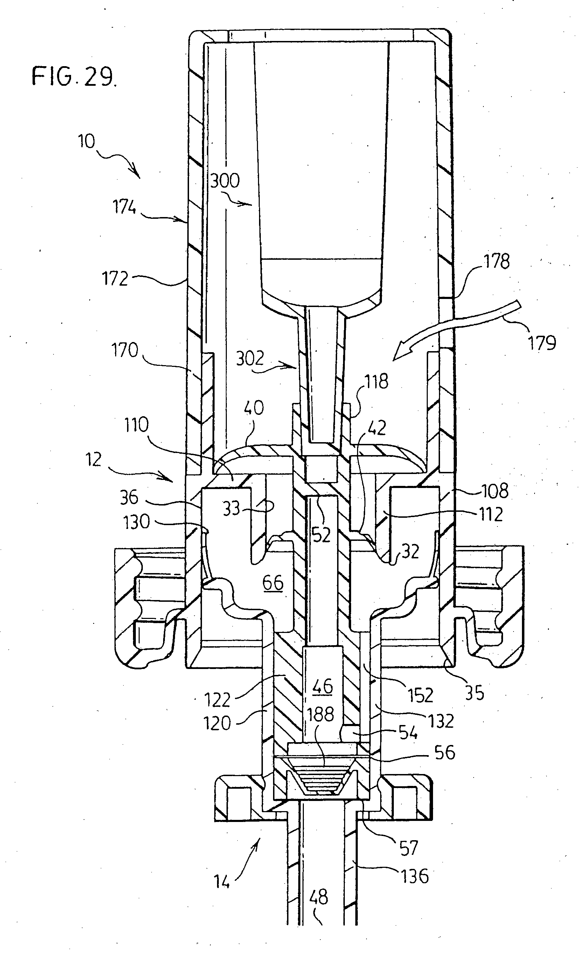

Reference is made to Figure 26 which illustrates a further embodiment of a pump in accordance with the present invention and which an inner bellows member 200 is provided at the inner end of an inner core 122 of a pump in a similar manner to that shown in Figure 24. However, in Figure 29, the pump mechanism is a gravity feed metering pump for movement and dispensing of fluid from a reservoir past disc 42 as in a manner disclosed in U.S. Patent 6,601,736 to Ophardt et al, issued August 5, 2003. It is to be appreciated that the inner bellows 200 in Figure 29 has replaced a piston pump similar to that illustrated in Figure 6. As well, it is to be appreciated than an outer bellows 202 could be provided in replacement of the sealing flange 130 in Figure 28.

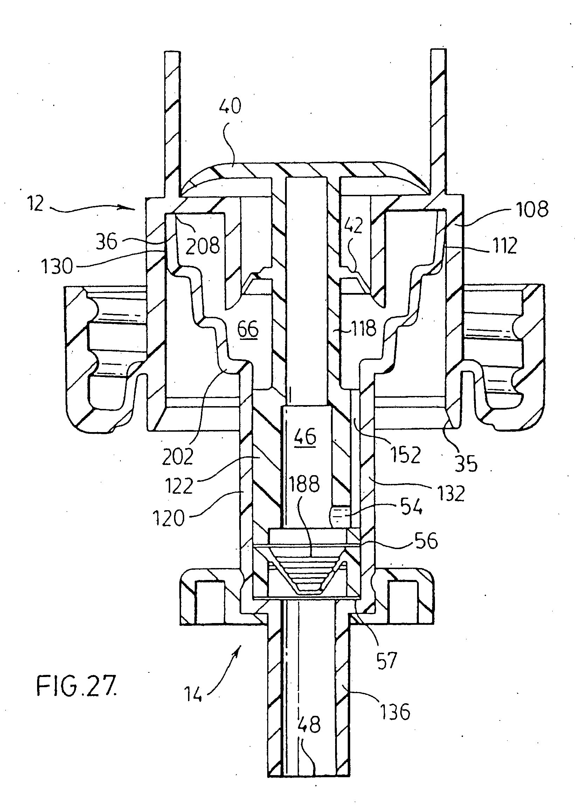

Figure 27 is a further embodiment in which an outer bellows 202 is provided which forms the sole air chamber for drawing air in via outlet 48 and dispensing it outwardly through outlet 48. The bellows chamber 66 receives liquid from the reservoir from a stepped cylinder liquid pump including discs 40 and 42. Both air and liquid are dispensed via port 54 to passageway 46 and out through the foam generators 56, 188 and 57.

Figure 28 illustrates a modified form of the embodiment of Figure 26 including an outer bellows 202 which is adapted to serve merely as a spring since the bellows 202 has an air vent opening 204 to relatively, freely permit passage of air inwardly and outwardly therefrom. While an accordion-like outer bellows member 202 is shown in Figure 28, a bellows member such as in Figure 27 could also be used with an air vent.

Disc 42 is modified over that of Figure 27 so as to prevent fluid flow outwardly therepast. An inlet 256 is provided through the side wall of the stem 38 of the piston between the discs 40 and 42 directing fluid between discs 40 and 42 outwardly into passageway 46. The dispenser of Figure 28 merely dispenses liquid.

In each of the embodiments illustrated in Figures 24 to 28, each of the inner bellows 200 and outer bellows 202 provide a bellows chamber inside a flexible and collapsible side wall which bellows chamber increases in volume with movement of the piston 14 towards the extended position and reduces with volume with movement of the piston 14 towards a retracted position. Each of the bellows is provided to act as a resiliently collapsible and expandable pump so as to draw fluid inwardly into the bellows chamber and dispense fluid outwardly from the bellows chamber.

In the preferred embodiments illustrated, the resilient bellows member is formed integrally with a component of the piston having a central axially extending hollow stem with a bellows formed as an extension of the hollow stem and open to the hollow stem.

Each of the bellows members 200 and 202 illustrated are formed as the end of a tubular member. In each of the embodiments in Figures 25 to 28, the piston 14 is formed from a number of elements secured together as a unit and including as two principal elements an outer casing 120 and an inner core 122. The inner core 122 carries a hollow support tube 118 from whose inner end the inner bellows 200 extends inwardly to its inner end 206 which engages in a sealed manner the end wall 176 of the air chamber-forming member 172. The outer casing 120 includes a small tube portion 136 at its outer end and a large tube portion 132 open at an inner end from which the outer bellows 202 extends inwardly to its inner end 208 which engages in a sealed manner an outer side of the flange portion 110.

In both the embodiments of Figures 24 and 25, the inner bellows member 200 is formed as an inner extension of a portion of the piston 14 open to the central internal passageway 46 through the hollow stem 38.

In each of the embodiments of Figures 24 to 28, at least one annular chamber is formed annularly about the stem 38 between the piston 14 and the piston-chamber forming member 12 such that with reciprocal sliding of the piston 14 between the retracted and the extended position, there is controlled movement of liquid from the reservoir into the annular chamber and for dispensing of liquid in the annular chamber to the outlet with or without the simultaneous dispensing of air.

Each of the bellows 200 and 202 is formed from a resilient material which will have an inherent tendency to assume an expanded configuration. Plastic material such as polyethylene and polypropylene and copolymers provide for adequate resiliency. The bellows effectively forms an axially compressible, resilient tube section, the outer wall of which forms the plurality of stepped annular portions. The resiliency of the wall provides an inherent bias like a compression spring to return the wall to an extended configuration. The side wall effectively is pleated and adapted to collapse the side wall longitudinally. The side wall illustrated in Figure 25 is roughly conical increasing in diameter stepwise inwardly. In Figure 28, the bellows member 202 is shown as having an accordion-like side wall of relatively constant diameter. Alternatively, the side wall may be formed with spiral grooves and spiral lands therebetween rather than merely annular lands.

Reference is made to Figure 29 which illustrates a 19^{th} embodiment which may be considered a modification of the embodiment of Figure 24 to replace the bellows 200 by a spring 300. As seen in Figure 29, the spring 300 in integrally formed with a spring chamber-forming member 172 which is otherwise the same as the air chamber-forming member 172 described with reference to Figures 5 and 24. Like the bellows 200 of Figure 24, the spring 300 is resiliently compressible and biases the piston 14 outwardly to an extended position. As contrasted with the embodiments of Figures 24 and 5, the piston 14 has its passageway 46 closed at an inner end at 52. The hollow support tube 118 of the inner core 122 of the piston 14 receives a neck tube 302 of the spring 300 fixedly secured therein to couple the inner end of the piston 14 to the spring 300. The pump of Figure 29 will effectively operate in a similar manner to the pump illustrated in Figure 4, however, with the spring 300 biasing the piston 14 outwardly to an extended position and becoming compressed on movement of the pump inwardly towards a retracted position.

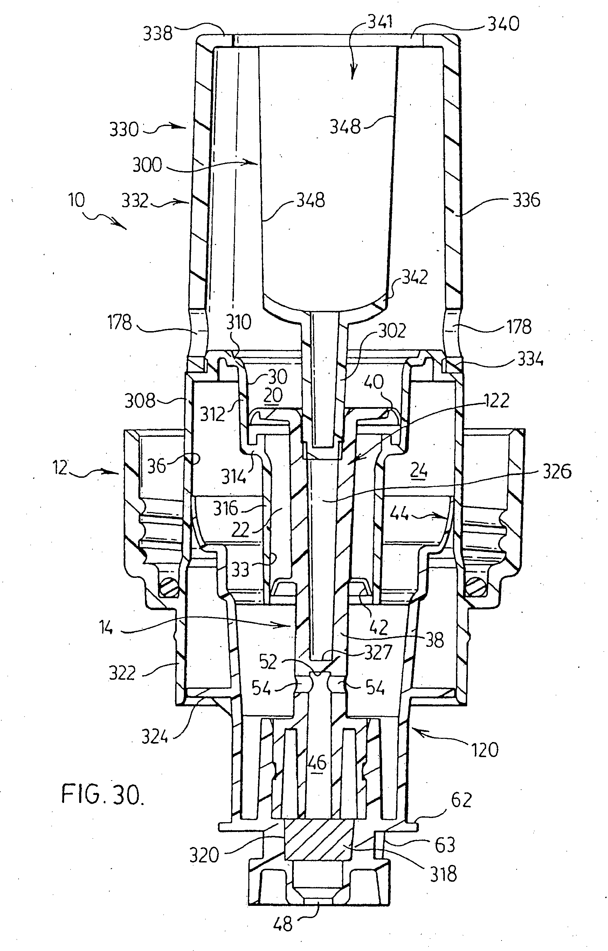

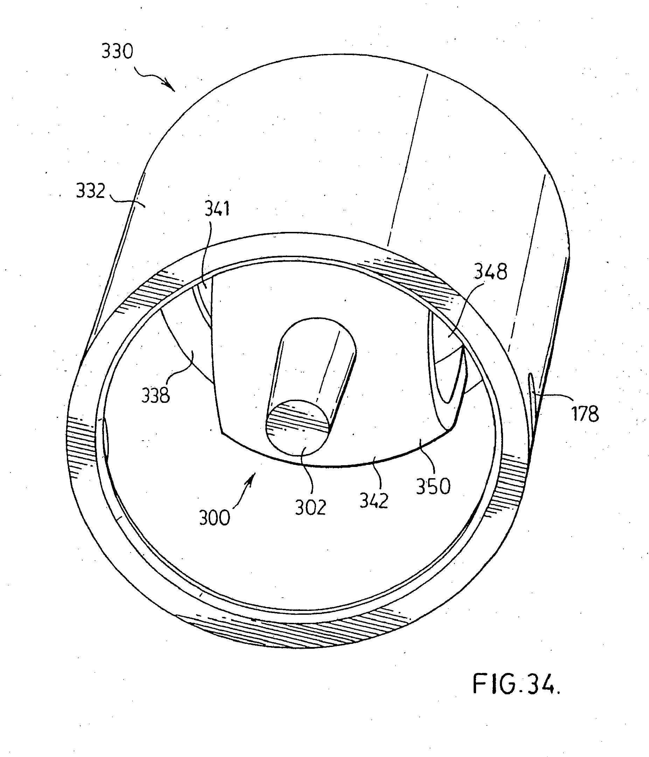

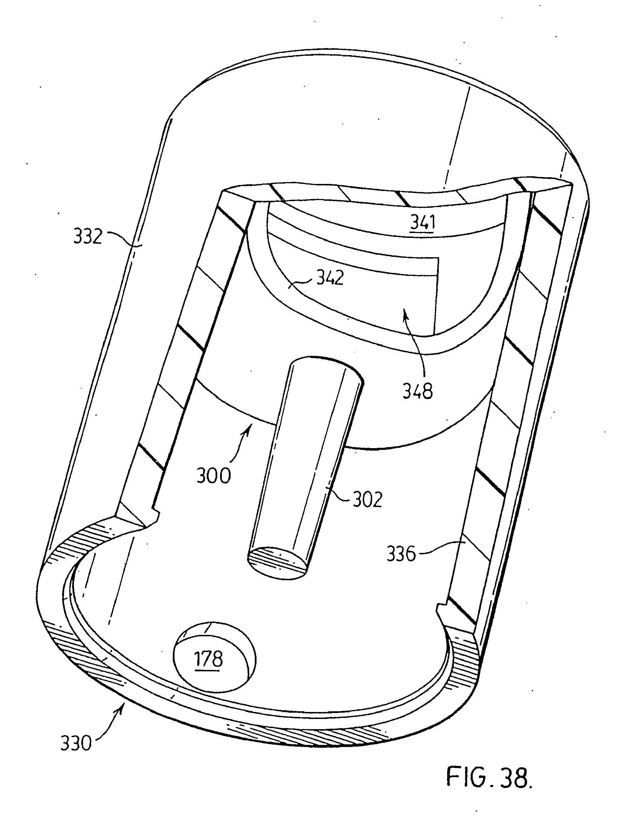

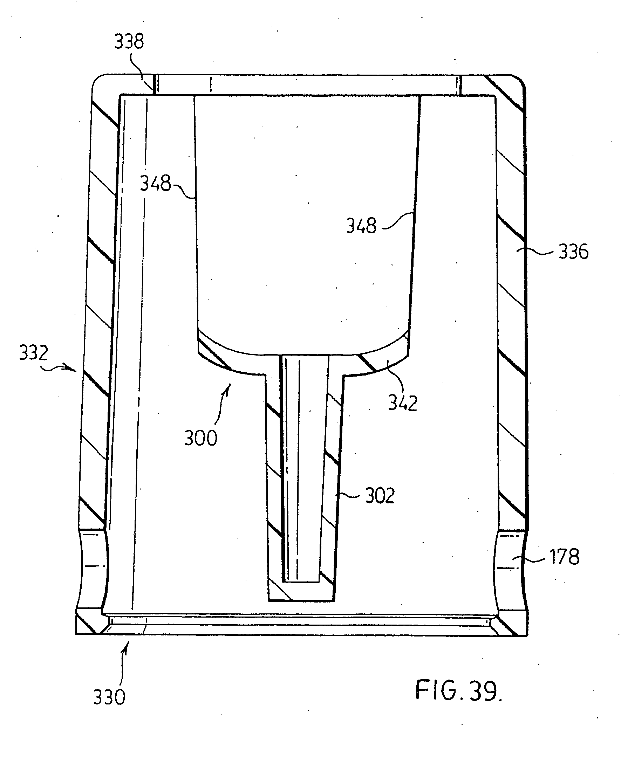

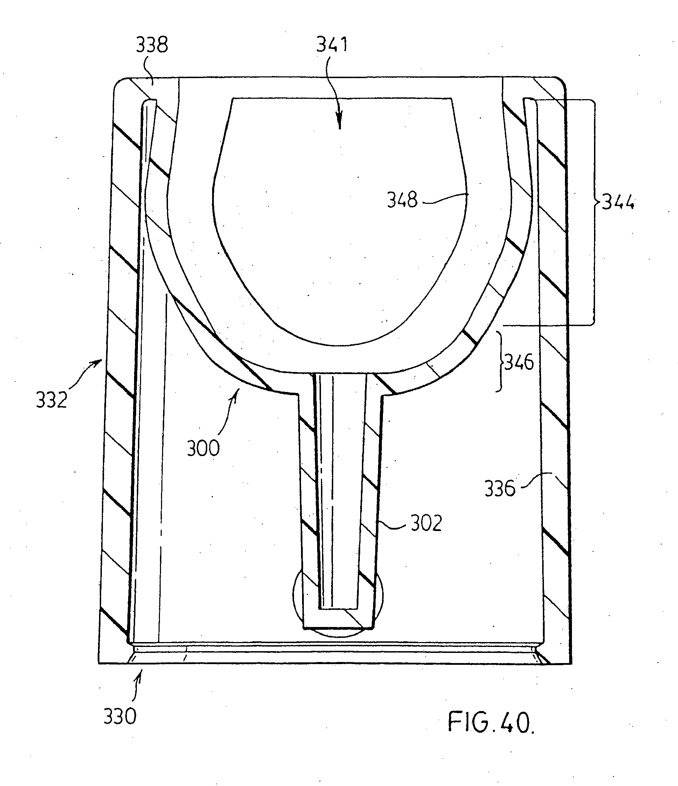

Reference is made to Figures 30 to 40 illustrating a 20^{th} embodiment of the present invention. The pump assembly 10 in Figure 30 has a piston chamber-forming body 12 and piston 14. The body 12 has an outer tubular portion 308 connected by a first flange 310 to an inner end of an intermediate tubular portion 312 whose outer end is connected by a second flange 314 to an inner tubular portion 316. The outer chamber 24 is formed radially inwardly of the outer tubular portion 308 having a side wall 36 thereabout. The intermediate chamber 22 is formed radially inwardly of the inner tubular portion 316 within the side wall 33. The inner chamber 20 is formed radially inwardly of the intermediate tubular portion 312 with a side wall 30 thereabout. An outlet opening of the inner chamber 20 opens into an inlet end of the intermediate chamber 22. An outlet opening of the intermediate chamber opens 22 into an inlet end of the outer chamber 24.

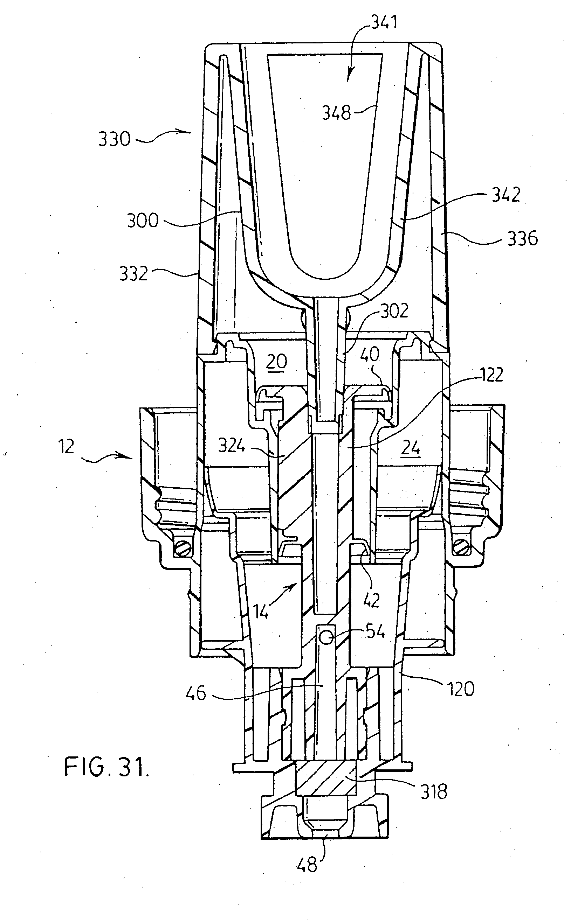

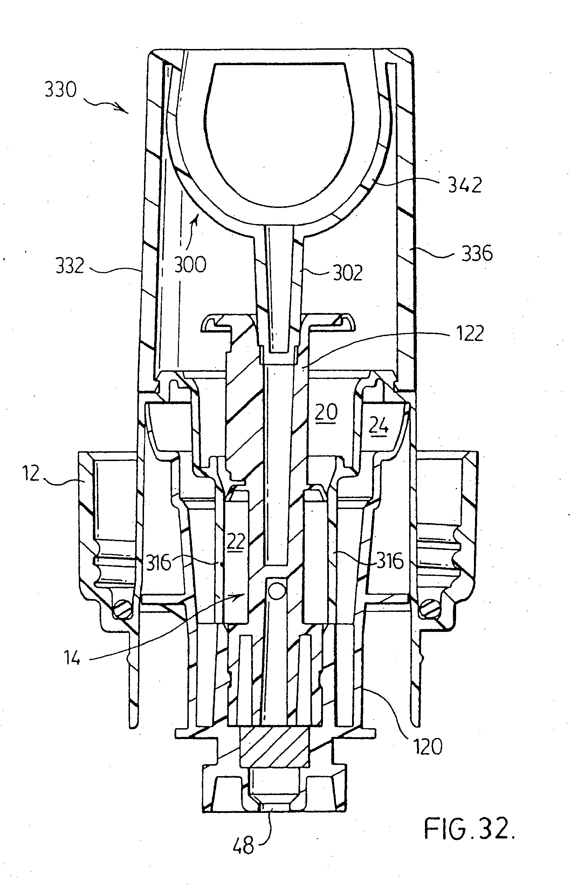

The piston 14 is formed from an outer casing 120, an inner core 122 and a foam producing element 318. The foam producing element 318 is preferably a cylindrical disc of porous materials such as open pore foamed plastic. The foam producing element is retained in a compartment 320 formed in the outer end of the outer casing 120 outwardly of the outer end of the inner core 122 which is fixedly secured to the outer end of the outer casing 120 as shown. The outer casing 120 carries the outer disc 44 for engagement within the outer chamber 24 and its side wall 36. The outer tubular portion 308 includes a cylindrical extension 322 outwardly from the outer chamber 24 adapted to be engaged by a locating flange 324 carried by the outer casing 120 of the piston 14 to assist in coaxially locating the piston 14 in the body 12. The piston 14 has an elongate stem 38 which carries an inner flexing disc 40 at an innermost end and an intermediate flexing disc 42. The inner flexing disc 40 is coaxially received within the inner chamber 20. The intermediate flexing disc 42 is coaxially disposed within the intermediate chamber 22. As seen in Figures 31 and 32, the piston 14 advantageously carries a plurality of circumferentially spaced locating flanges only one of which is shown as 324 between the inner disc 40 and the intermediate disc 42 for engagement with the chamber wall 33 of the intermediate chamber 22 to assist in coaxially locating the piston 14 in the body 12.

An outermost portion of the stem 38 is hollow with a central passageway 46 extending from an outlet 48 at the outermost end of the stem 38 centrally through the stem 38 to a closed inner end 52. Radially extending inlets 54 extends radially through the stem into the passageway 46, with the inlets 54 being provided on the stem in between the outer disc 44 and the intermediate disc 42.

The piston 14 carries an engagement flange 62 complementary with an engagement slot 63 together provided for engagement as by an activating device in order to move the piston inwardly and outwardly relative to the body 12. An innermost portion of the stem 38 is also hollow with a central bore 326 closed at an outer end at 327. A spring assembly 330 is coupled between the body 12 and the piston 14 to bias the piston 14 outwardly to an extended position. Spring assembly 330 includes a spring 300 disposed within a hollow tubular spring housing 332. The spring housing 332 has an outer end 334 secured in a snap-fit relation onto the inner end of the outer tubular portion 308 of the body 12 about the first flange 310. The spring housing 332 extends outwardly as a generally cylindrical but marginally frustoconical, inwardly tapering wall 336 to an inner end providing a radially inwardly extending flange 338 supporting the inner end 340 of the spring 300. The spring 300 extends from its inner end 340 outwardly to an outer end formed as a tubular neck 302 which is securely, fixedly engaged and received within the bore 326 of the piston 14. Openings 178 are provided through the side walls of the spring housing 332 provide for communication from the interior of a container to the inlet opening of the inner chamber 20. Strictly speaking, such openings 179 are not required as in the preferred embodiment, the interior of the container is also in communication with the inlet opening of the inner chamber 20 through the central opening 341 in the flange 338 of the spring housing 332 and downwardly through side openings 348 in the spring 300. However, the openings 178 provide for fluid in a container at a height below the opening 341in the flange 338 of the spring housing 332 to gain access to the inlet opening to the inner chamber and, thus, be dispensed.

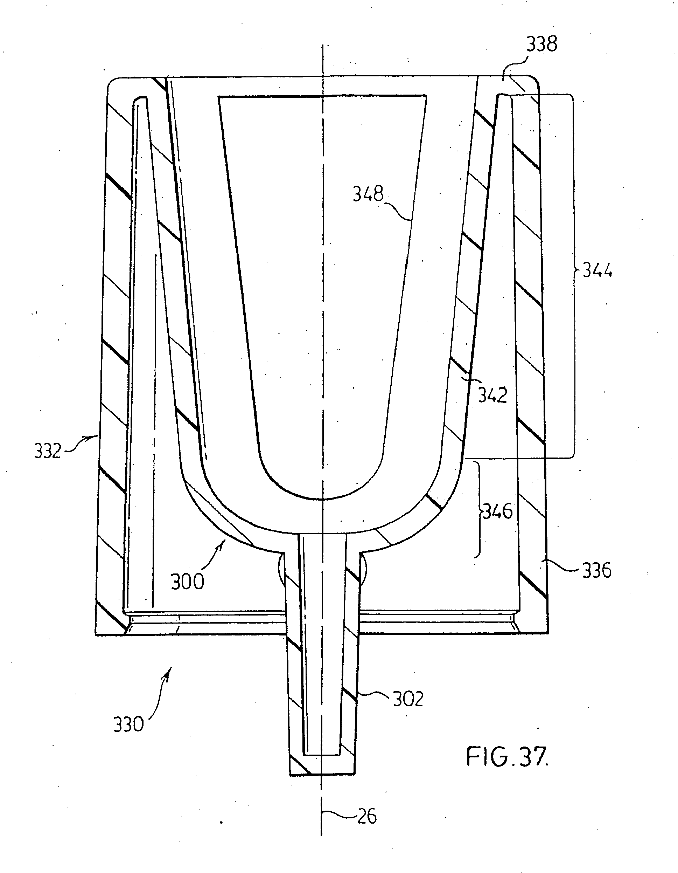

The spring member 300 has a side wall 342 which extends inwardly from the flange of the spring housing 332 to the tubular neck 302 of the spring 300. As marked on Figure 37, the side wall 342 in the preferred embodiment has a conical portion generally indicated as 344 which is frustoconical terminating at a dome portion indicated as 346 over which the side wall 342 curves from the end of the conical portion 344 to extend substantially normal to an axis 26 coaxially of the piston 14 where the side wall 342 merges into the tubular neck 302. The side wall 342 of the spring 300 has two openings 348 diametrically opposed from each other extending from the dome portion 346 to the flange 338. The side openings 346 may be conceptually considered to have been formed as by considering providing a member having the outer side wall as seen in Figure 31 completely circumferentially about the axis 26 as a solid of rotation about the axis and then cutting away portions of the side wall 342 in planes on either side of the axis perpendicular to the cross-section shown in Figure 30 along the lines indicated in Figure 30 as comprising the openings 348.

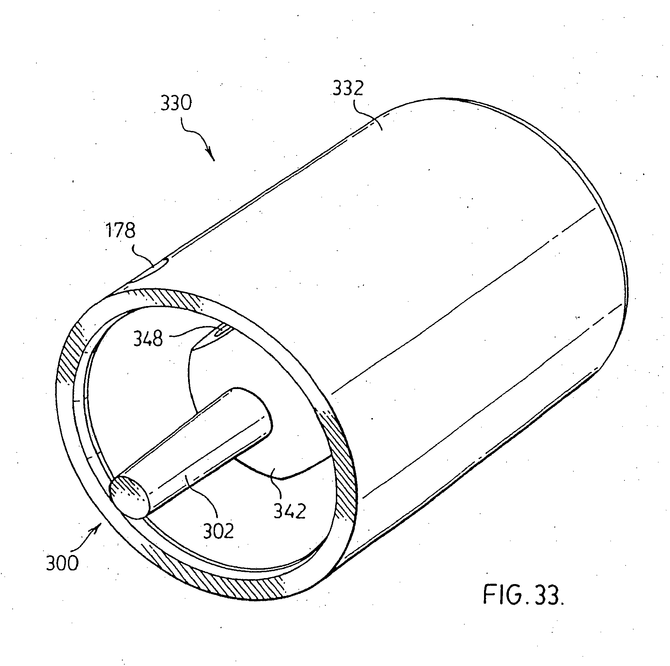

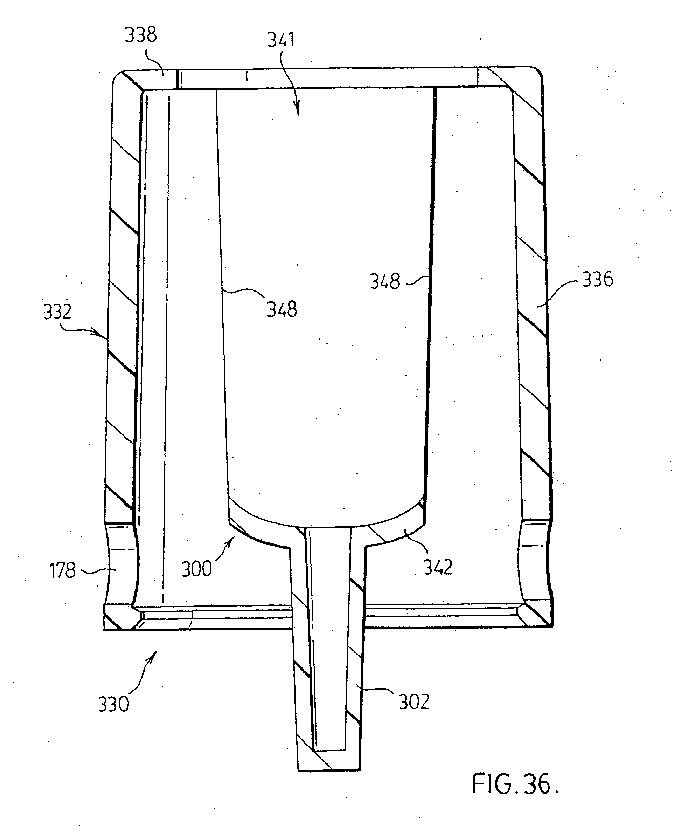

The pictorial views of Figures 33, 34 and 35 best show the side wall 342 of the spring 300 with the openings 348 through the side wall 342 from an exterior surface 350 of the side wall 342 into an interior of the spring. Figures 36 and 37 illustrate enlarged cross-sectional views of the spring assembly 330 in an unbiased extended position as, for example, illustrated in Figures 33, 34 and 35 and in the same positions as are shown in Figures 30 and 31, respectively.

In use of the pump of the embodiment of Figures 30 to 40, the pump is moved from the extended position of Figure 31 to the retracted position of Figure 32. Axial inward movement of the piston 14 relative to the body 12 compresses the spring 300. The spring 300 has an inherent bias to assume its uncompressed position shown, for example, in Figures 36 and 37 and, thus, will apply forces to the piston urging the piston 14 towards the fully extended position. Figures 32, 38, 39 and 40 illustrate the spring 300 in a fully retracted compressed condition. As seen, the conical portion 344 of the walls 342, at least in a mid-section of the conical portion, have been deflected radially outwardly. The dome portion 346 has been deflected to increase the radius of the dome as, for example, flattening the upper central-most portion of the dome portion 346. With the embodiment illustrated, further compression of the spring 300 is prevented by a stop mechanism of the outer end of the inner tubular portion 316 engaging the outer casing 120 of the piston 14. If further compression of the spring member 300 may be permitted, continued outward deflection of the conical portion 344 of the side wall 342 would occur and a central portion of the dome portion could be moved such that its outer surface about the tubular neck 302 may become successively less convex, then flat and, subsequently, concave with the portion of the side wall about the neck 302 to extend inwardly past radially outer portions of the side wall such that the side wall deflects to double back on itself. Such an inversion of the dome portion 346 from having a convex outer surface to having a concave outer surface can be advantageous for providing biased resiliency to the spring 300.

As seen in the Figures, the spring 300 when in the unbiased extended position has a greatest diameter at its first end and a least diameter at its second end. The two openings 348 through the side wall 342 are diametrically opposite each other and symmetrical relative to the axis 26 circumferentially and longitudinally of the axis 26. As well, each opening 348 is symmetrical about a notional medial plane passing centrally through the opening 348 and including the axis 26. Each opening also lies in the intersection with the side wall 342 of a notional flat plane normal to such medial plane. Each opening increases with circumferential extent with distance from the second end. The side wall 342 has a substantially constant thickness, however, the side wall 342 preferably should have a thickness which is substantially constant or which varies gradually by a gradient over any two adjacent points on its surface of no more than between 0.1 percent and 10 percent.

Providing the spring assembly 330 to be a separate element from the other elements of the pump is advantageous insofar as the spring 300, to provide desired resilient characteristics, may be desired to be made from a different plastic than the other elements of the pump. However, the invention is not limited to providing the spring assembly 330 as a separate element. The spring 300 may be formed as an integral rearward extension of the piston 14, for example, in a manner that the bellows 200 forms an extension of the piston 14 in Figure 24 albeit with the internal passageway 46 requiring to be closed rearward from the inlets 54. If the spring 300 is to be formed integrally with the piston 14 then, advantageously, the spring housing 332 may be formed as an integral part of the body 12 as a rearward, substantially cylindrical extension thereof having, for example, a similar flange 338 and central opening 341 through the flange 338 through which the inner core 122 of a piston 14 including the spring 300 may be inserted during assembly.

In accordance with the present invention, a similar spring member may be provided, however, without the side openings 348 and therefore formed, for example, to have a side wall 342 which extends 360° about its central axis as a solid of revolution about the axis 26. Providing the openings 348 through the side wall 342 is advantageous, however, for a number of reasons. Firstly, it at least partially eliminates the difficulty of a compartment formed inside the spring housing 332 below the spring 330 acting as a displacement pump and tending to draw and dispense fluid inwardly and outwardly through the openings 178. This difficulty could, however, be simply overcome by increasing the size and number of openings 178. More significantly, providing the side openings 348 assists in selecting the characteristics of the spring 300 as to the relative thickness of the side wall and the spring forces that are generated with distance of deflection from the unbiased extended position of the spring 300. The circumferential extent of the openings 348 at any position along the axial length of the spring 300 and the relative location of the side openings 348 axially relative to the spring can affect the strength and deflections of the spring.

As contrasted with the use of a bellows such as the bellows 200 in Figure 28 as a spring member, the spring 300 provides for relatively smooth biasing resistance forces as contrasted with a pleated bellows which tends to provide stepped changes in the resistance as the bellows become folded or bent about each of its pleats or folds. With any particular thickness of the side wall 342 of the spring 300, the relative size and location of the side openings 348 can be changed as would be apparent to a person skilled in the art at the least, on a trial and error basis, towards developing suitable forces with distance of compression as well as for the extent of deflection.

The preferred spring assembly 330 is adapted for coupling at an inner end of both the body 12 and the piston 14. The spring 300 in accordance with the present invention is not, however, limited to such use and may be used for a variety of other uses as a spring other than merely in a pump.

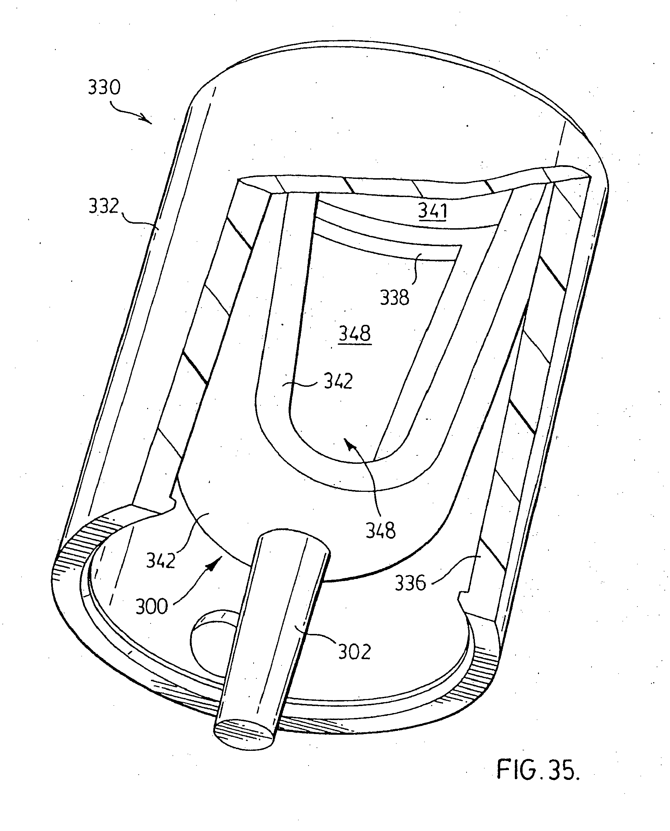

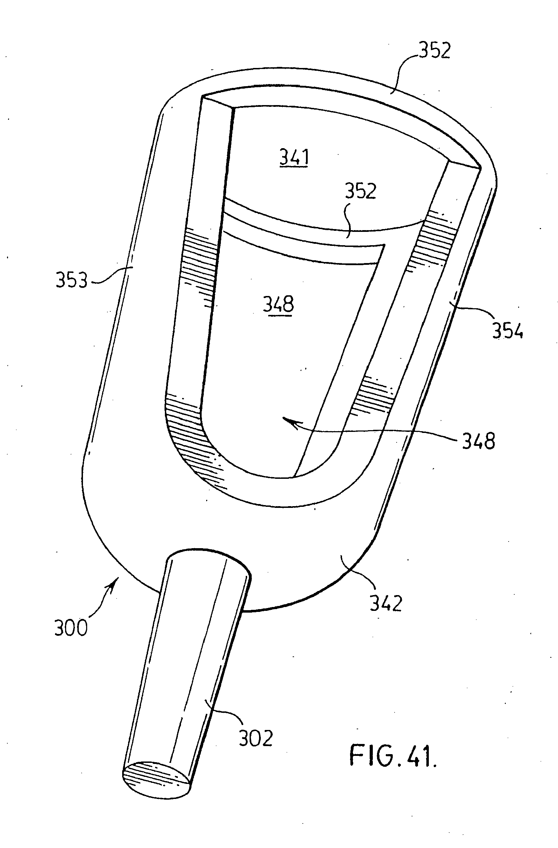

Reference is made to Figure 41 which illustrates a spring member 300 similar to that illustrated in Figure 35, however, provided as a separate member without the spring housing 332. Advantageously, as seen in Figure 41, at the inner end of the spring, the side wall includes a circumferential ring 352 which assists in retaining the diametrically opposed side portions 353 and 354 of the side wall 342 together.

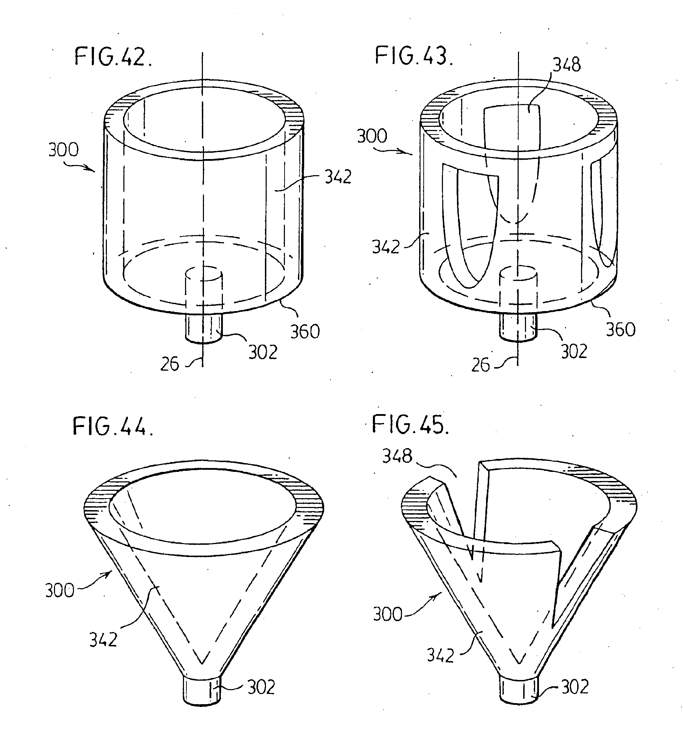

Reference is made to Figures 42 to 49 which illustrate a number of other versions of a spring 300 in accordance with the present invention. The embodiments of Figures 42, 44, 46 and 48 are each embodiments in which no openings are provided through the side walls 342 of the springs 300. The embodiments illustrated in Figures 43, 44, 45 and 46 each have two or more openings 348 through the side walls 342 uniformly spaced circumferentially about a center axis through the spring 300.

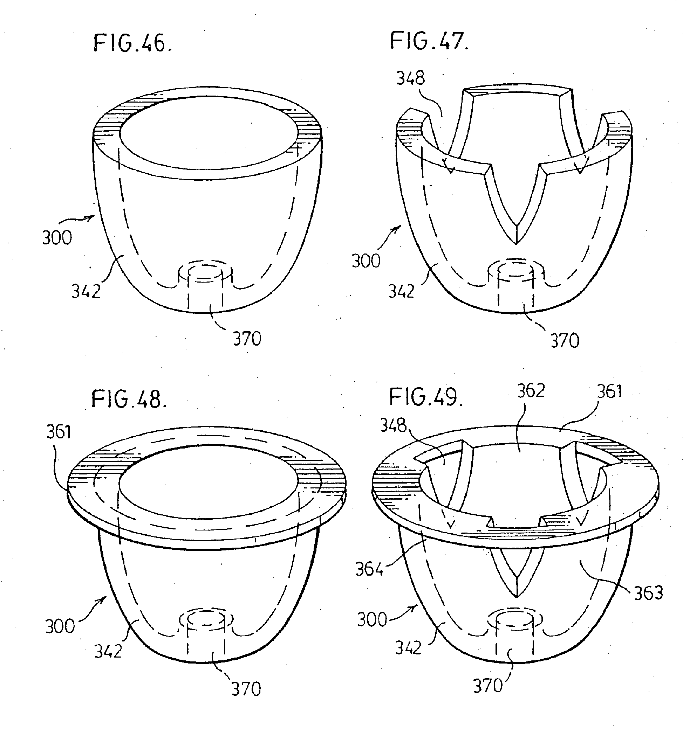

In the embodiments of Figures 46 to 49, at the closed end of the spring 300, an engagement socket 370 is provided with extends coaxially into the interior of the spring as contrasted with the embodiments of Figures 42 to 45 in which there is a coaxial neck 302 which extends outwardly from the spring 300.

The embodiment of Figures 42 and 43 illustrate an arrangement in which the side walls 342 are cylindrical and the end wall 360 is circular in a plane extending radially to the axis 26. In the embodiment of Figures 44 and 45, the side walls 342 are conical. In the embodiment of Figures 46 to 49, the side walls 342 are generally dome shaped, approaching that of a semi-sphere.

The embodiment of Figures 48 and 49 have a flange 361 extending radially outwardly from the side wall 342 and with the side openings 348 extending axially inwardly through the flange 361 with the portions of the flange radially outwardly of the side wall 342 providing a continuous annular rim to keep the spaced segments 362, 363 and 364 of the side wall 342 together.

The spring members 300 may preferably be disposed within a complementary spring housing exemplified by the spring housing 332 of Figures 30 to 40. The spring housing can be of assistance in ensuring that the spring member 300 remains substantially coaxially disposed in collapsing, or at least does not deviate unduly from collapsing coaxially by reason of inside surfaces of a wall of the spring housing 332 becoming engaged with outside surfaces of the wall of the spring member 300. The spring housing 332 may preferably be provided with an interior surface complementary to the shape and nature of the spring 300 received therein to permit and accommodate desired deflection yet to prevent undesired deflection. For example, in the context of the spring 300 shown in Figures 42 and 43 with a cylindrical wall, the housing may also be a cylindrical wall spaced radially outwardly from the spring 300 but not to distant therefrom so as, for example, to enhance inversion of the spring 300 with the end wall to become domed inwardly in a concave manner and, subsequently, be moved radially inwardly down inside the spring with the side walls 342 of the spring doubling over on themselves.

The relative thickness of the side wall of the spring 300 is shown in the preferred embodiments to be relatively constant, however, it is to be appreciated that the thickness of the side wall, that is, measured from its inside surface to its outside surface may be varied as may be desirable to provide for different resiliencies and stiffness of the side wall at varying portions. Transitions in the thickness of the side wall preferably are gradual and not stepwise. The thickness of the side wall may vary in the axial direction of the spring.

Preferred materials of construction of the spring 300 are elastomeric and plastic materials which can be easily manipulated by injection moulding yet will have an inherent resiliency suitable to serve as a spring and, as well, a longevity in terms of its resiliency over repeated deflection for sufficient time and number of cycles as appropriate to the use to which the spring is to be placed. The spring member 300 is particularly adapted for use as in pumps for dispensing liquids with the entirety of the pump and container to be disposed when the container is emptied of fluid.

While this invention has been described with reference to preferred embodiments, the invention is not so limited. Many modifications and variations will now occur to persons skilled in the art. For a definition of the invention, reference is made to the appended claims.

## Claims

1. A pump (10) for producing and dispensing foam or atomized liquid,
the pump (10) comprising a piston-chamber forming body (12) and a piston (14) cooperating to define an outer compartment (66) and an inner compartment (64) therebetween,
the outer compartment (66) having an inlet opening (29) and an outlet (54),
the inner compartment (64) having an inlet opening (28) and an outlet opening (29), the inlet opening (28) of the inner compartment (64) being in flow communication with a fluid containing reservoir (60), a member (56,156) selected from a foam generating screen (56) for generating turbulence in air and fluid passing therethrough to produce foam and a nozzle member (156) to at least partially atomize liquid when liquid and air pass therethrough simultaneously, the member (56,156) positioned to receive fluid which has been discharged from the outlet opening (29) of the inner compartment (64) and air which has been discharged from the outlet (54) of the outer compartment (66)
a discharge outlet (48) open to the atmosphere for discharge of any air, fluid and foam discharged outwardly through the member (56,156),
the piston (14) being movable with respect to the piston-chamber forming body (12),
**characterized in that**
the piston-chamber forming body (12) and the piston (14) form a first pump member to displace a first volume and a second pump member to displace a second volume greater than the first volume, the two pump members being out of phase,
whereby moving the piston (14) inwardly relative to the body (12) pressurizes the outer compartment (66) thereby forcing liquid and air through the member (56,156) and simultaneously drawing fluid from the reservoir (60) through the inlet opening (28) of the inner compartment (64) into the inner compartment (64), and
whereby moving the piston (14) outwardly relative to the body (12) pressurizes the inner compartment (64) thereby discharging fluid from the inner compartment (64) out of the outlet opening (29) of the outer compartment (66) and simultaneously drawing air into the outer compartment (66).

2. A pump (10) as claimed in claim 1 wherein:
the outlet opening (29) of the inner compartment (64) communicating with the outer compartment (66) such that fluid exiting the outlet opening (29) of the inner compartment (64) being delivered into the outer compartment (66),
the member (56,156) positioned to receive air and liquid discharged from the outlet (54) of the outer compartment (66),
wherein moving the piston (14) inwardly to pressurize the outer compartment (66) forces both liquid and air out of the outlet (54) of the outer compartment (66) and through the member (56,156).

3. A pump (10) as claimed in claim 1 or 2 wherein in moving the piston (14) outwardly draws air into the outer compartment (66) from the atmosphere via the discharge outlet (48) and through the member (56,156).

4. A pump (10) as claimed in any one of claims 1 to 3 wherein in moving the piston (14) outwardly draws air into the outer compartment (66) from the atmosphere via the discharge outlet (48), through the member (56,156) and into the outer compartment (66) through the outlet (54).

5. The pump (10) as claimed in any one of claims 1 to 4 wherein in moving the piston (14) outwardly all atmosphere air drawn into the pump (10) is drawn from the atmosphere via the discharge outlet (48) and passes inwardly through the member (56,156).

6. A pump (10) as claimed in any one of claims 1 to 5 including:
a fluid inlet valve (40,150) movable between an open position to allow fluid from the reservoir (60) to enter the inner compartment (64) and a closed position preventing fluid from the reservoir (60) to enter the inner compartment (64),
a fluid outlet valve (42,142,180) movable between an open position to allow fluid in the inner compartment (64) to exit the inner compartment (64) via the outlet opening (29) and a closed position preventing fluid to enter the inner compartment (64) via the outlet opening (29).

7. A pump (10) as claimed in claim 6 wherein when the piston (14) is moved outwardly and the inner compartment (64) is pressurized, the fluid inlet valve (40,150) assumes its closed position and the fluid outlet valve (42, 142, 180) assumes its open position.

8. A pump (10) as claimed in claim 7 wherein when the piston (14) is moved inwardly and draws fluid from the reservoir (60) through the inlet opening (28) into the inner compartment (64), the fluid inlet valve (40,150) assumes its open position and the fluid outlet valve (42,142,180) assumes its closed position.

9. A pump (10) as claimed in any one of claims 1 to 8 wherein when the outer compartment (66) is pressurized, liquid and air forced out of the outer compartment outlet (54) passes through a passageway (46) leading to the member (56,156) through which passageway (46) air and fluid are simultaneously passed and form a liquid-air mixture which is forced through the member (56,156).

10. A pump (10) as claimed in any one of claims 1 to 9 wherein the piston (14) being mounted within said body (12) and telescopingly movable with respect thereto.

11. A pump (10) as claimed in any one of claims 1 to 10 wherein
the body (12) provides an air cylinder for the outer compartment (66) and a fluid cylinder for the inner compartment (64), both arranged concentrically,
the piston (14) comprises a piston assembly (14) constituted by an air piston and a fluid piston concentrically and integrally provided to move reciprocally in said air cylinder and fluid cylinder respectively.

12. A pump (10) as claimed in claim 11 wherein the discharge outlet (48) is provided at an outer end of said piston assembly (14).

13. A pump (10) as claimed in claim 12 wherein
the piston assembly (14) has a hollow stem (38) with a passageway (46) concentrically therethrough open at an outer end as the discharge outlet (48),
the member (56,156) located within the passageway (48) in the stem (38) of the piston assembly (14).

14. A pump (10) as claimed in any one of claims 1 to 13 wherein the fluid outlet opening (29) opens into the inlet opening (29) of the outer compartment (66).

15. A pump (10) as claimed in any one of claims 1 to 14 wherein the inner compartment (64) is disposed vertically above the outer compartment (66).

16. A pump (10) as claimed in any one of claims 1 to 15 wherein the outlet (54) of the outer compartment (66) is disposed in a lower portion of the outer compartment (66).

17. A pump (10) as claimed in any one of claims 1 to 16 wherein moving the piston (14) inwardly moves the piston (14) toward the body (12).

18. A pump (10) as claimed in any one of claims 1 to 17 wherein moving the piston (14) inwardly forces liquid and air out of the outlet (54) of the outer compartment (66); and
moving the piston (14) outwardly expels fluid from the inner compartment (64) out of the fluid outlet opening (29) into the outer compartment (66).

19. A pump (10) as claimed in claim 17 or 18 wherein
the body (12) comprising a piston-chamber forming member (12) having an inner cylindrical chamber (20), an intermediate cylindrical chamber (22) and an outer cylindrical chamber (24), the inner chamber (20), intermediate chamber (22) and outer chamber (24) each having a diameter, a chamber wall, an inner end and an outer end,
the diameter of the inner chamber (20) being greater than the diameter of the intermediate chamber (22),
the diameter of the outer chamber (24) being greater than the diameter of the intermediate chamber (22),
the inner chamber (20), intermediate chamber (22) and outer chamber (24) being coaxial with the outer end (29) of the inner chamber (20) opening into the inner end of the intermediate chamber (22), and the outer end (32) of the intermediate chamber (22) opening into the inner end of the outer chamber (24),
the inner end (28) of the inner chamber (20) comprising the fluid inlet opening (28) in fluid communication with the reservoir (60),
the outer end (32) of the intermediate chamber (22) comprising the fluid outlet opening (29),
the piston (14) comprising a piston forming element (14) received in the body (12) axially slidable inwardly and outwardly therein between an inward retracted position and an outward extended position,
said piston forming element (14) having a central axially extending hollow stem (38) having a central passageway (46) having an outlet (48) proximate an outer end (50) comprising the discharge outlet (48),
an inner disc (40) extending radially outwardly from the stem (38), the inner disc (40) adapted to engage the chamber wall (30) of the inner chamber (20),
an intermediate disc (42) extending radially outwardly from the stem (38) spaced axially outwardly from the inner disc (40), the intermediate disc (42) adapted to engage the chamber wall (33) of the intermediate chamber (22),
an outer disc (44) extending radially outwardly from the stem (38) spaced axially outwardly from the intermediate disc (42), the outer disc (44) engaging the chamber wall (36) of the outer chamber (24),
a first inlet (54) located on the stem (38) between the intermediate disc (42) and the outer disc (44) in communication with the passageway (46),
the piston forming element (14) slidably received in the piston-chamber forming member (12) for reciprocal axial inward and outward movement therein with the inner disc (40) in the inner chamber (20), the intermediate disc (42) in the intermediate chamber (22) and the outer disc (44) in the outer chamber (24),
the inner compartment (64) defined within the inner chamber (20) and the intermediate chamber (22) between the inner disc (40) and the intermediate disc (42),
the outer compartment (66) defined within the intermediate chamber (22) and the outer chamber (24) between the intermediate disc (42) and the outer disc (44),
when the inner disc (40) is in the inner chamber (20), the inner disc (40) substantially preventing fluid flow in the inner chamber (20) past the inner disc (40) in an inward direction,
when the intermediate disc (42) is in the intermediate chamber (22), the intermediate disc (42) substantially preventing fluid flow in the intermediate chamber (22) past the intermediate disc (42) in an inward direction,
when the outer disc (44) is in the outer chamber (24), the outer disc (44) substantially preventing fluid flow in the outer chamber (24) past the outer disc (44) in an outward direction,
the inner disc (40) elastically deformable away from the chamber wall (30) of the inner chamber (20) to permit fluid flow in the inner chamber (20) past the inner disc (40) in an outward direction,
the intermediate disc (42) elastically deformable away from the chamber wall (33) of the intermediate chamber (22) to permit fluid flow in the intermediate chamber (22) past the intermediate disc (42) in an outward direction.

20. A pump (10) as claimed in claim 19 wherein the atmospheric air drawn to between the intermediate disc (42) and the outer disc (44) is drawn thereinto, at least in part, via the discharge outlet (48), passageway (46) and inlet (54).

21. A pump (10) as claimed in claim 19 or 20 wherein the outer disc (44) engaging the chamber wall (36) of the outer chamber (24) circumferentially thereabout to form a substantially fluid impermeable seal therewith on sliding of said piston forming element (14) inwardly and outwardly between the retracted and the extended positions, and
all the atmospheric air drawn to between the intermediate disc (42) and the outer sealing disc (44) is drawn thereinto via the discharge outlet (48), passageway (46) and inlet (54).

22. A pump (10) as claimed in claim 19 or 20 wherein the outer disc (44) having an elastically deformable edge portion proximate the chamber wall (36) of the outer chamber (24) circumferentially thereabout,
the outer disc (44) elastically deformable away from the chamber wall (36) of the outer chamber (24) to permit air flow in the outer chamber (24) past the outer disc (44) in an inward direction,
the atmospheric air drawn into between the intermediate disc (42) and the outer disc (44) is drawn thereinto at least in part inwardly in the outer chamber (24) past the outer disc (44).

23. A pump (10) as claimed in any one of claims 19 to 23 wherein throughout the entirety of each stroke of movement of the piston forming element (14) between the retracted position and the extended position the outer disc (44) engaging the chamber wall (36) of the outer chamber (24) circumferentially thereabout to substantially prevent fluid flow in the outer chamber past (24) the outer disc (44) in an outward direction.

24. A pump (10) as claimed in any one of claims 19 to 23 wherein throughout the entirety of each stroke of movement of the piston forming element (14) between the retracted position and the extended position the intermediate disc (42) engaging the chamber wall (33) of the intermediate chamber (22) circumferentially thereabout to substantially prevent fluid flow in the intermediate chamber (22) past the intermediate disc (42) in an inward direction.

25. A pump (10) as claimed in any one of claims 19 to 24 wherein throughout the entirety of each stroke of movement of the piston forming element (14) between the retracted position and the extended position the inner disc (40) engaging the chamber wall (30) of the inner chamber (20) circumferentially thereabout to substantially prevent fluid flow in the inner chamber (20) past the inner disc (40) in an inward direction.

26. A pump (10) as claimed in any one of claims 19 to 23 wherein throughout the entirety of each stroke of movement of the piston forming element (14) between the extended position and a first intermediate position between the retracted position and the extended position the inner disc (40) is in the inner chamber (20) engaging the chamber wall (30) of the inner chamber (20) circumferentially thereabout to substantially prevent fluid flow in the inner chamber (20) past the inner disc (40) in an inward direction, and
wherein throughout movement of the piston forming element (14) between the first intermediate position and the retracted position the inner disc (40) is not in the inner chamber (20) and does not prevent fluid flow in the inner chamber (20) past the inner disc (40) in an inward direction.

27. A pump (10) as claimed in claim 26 wherein throughout movement of the piston forming element (14) between the retracted position and a second intermediate position between the retracted position and the extended position the intermediate disc (42) is in the intermediate chamber (22) engaging the chamber wall (33) of the intermediate chamber (22) circumferentially thereabout to substantially prevent fluid flow in the intermediate chamber (22) past the intermediate disc (42) in an inward direction, and
wherein throughout movement of the piston forming element (14) between the second intermediate position and the extended position the intermediate disc (42) is not in the intermediate chamber (22) and does not prevent fluid flow in the inner chamber (22) past the intermediate disc (42) in an inward direction.

28. A pump (10) as claimed in claim 23, wherein throughout movement of the piston forming element (14) between the extended position and an intermediate position between the retracted position and the extended position, the intermediate disc (42) is in the intermediate chamber (22) engaging the chamber wall (33) of the intermediate chamber (22) circumferentially thereabout to substantially prevent fluid flow in the intermediate chamber (22) past the intermediate disc (42) in an inward direction, and
wherein throughout movement of the piston forming element (14) between the intermediate position and the retracted position the intermediate disc (42) is not in the intermediate chamber (22) and does not prevent fluid flow in the inner chamber (22) past the intermediate disc (42) in an inward direction.

29. A pump (10) as claimed in any one of claims 17 or 18 wherein
the body (12) comprises a piston-chamber forming member (12) having an inner cylindrical chamber (26), an intermediate cylindrical chamber (22) and an outer cylindrical chamber (24), the inner chamber (20), intermediate chamber (22) and outer chamber (24) each having a diameter, a chamber wall, an inner end and an outer end,
the diameter of the inner chamber (20) being greater than the diameter of the intermediate chamber (22),
the diameter of the outer chamber (24) being greater than the diameter of the intermediate chamber (22),
the inner chamber (20), intermediate chamber (22) and outer chamber (24) being coaxial with the outer end (29) of the inner chamber (20) opening into the inner end of the intermediate chamber (22), and the outer end (32) of the intermediate chamber (22) opening into the inner end of the outer chamber (24),
the inner end (28) of the inner chamber (20) comprising the fluid inlet opening (28) in fluid communication with the reservoir (60),
the outer end (32) of the intermediate chamber (22) comprising the outlet opening (29) of the inner compartment (64),
the piston (14) comprising a piston forming element (14) received in the piston-chamber forming member (12) axially slidable inwardly and outwardly therein between an inward retracted position and an outward extended position,
said piston forming element (14) having a central axially extending hollow stem (38) having a central passageway (46) having an outlet (48) proximate an outer end (50) comprising the discharge outlet (48),
an inner disc (40) extending radially outwardly from the stem (38), the inner disc (40) adapted to engage the chamber wall (30) of the inner chamber (20),
an outer disc (44) extending radially outwardly from the stem (38) spaced axially outwardly from the inner disc (40), the outer disc (44) engaging the chamber wall (36) of the outer chamber (24),
an intermediate disc (142) carried on the piston-chamber forming member (12) and extending radially inwardly from the chamber wall (33) of the intermediate chamber (22), the intermediate disc (142) adapted to engage the stem (38) intermediate the inner disc (40) and the outer disc (44),
a first inlet (54) located on the stem (38) between the intermediate disc (142) and the outer disc in communication with the passageway (46),
the piston forming element (14) slidably received in the piston-chamber forming member (12) for reciprocal axial inward and outward movement therein with the inner disc (40) in the inner chamber (20) and the outer disc (42) in the outer chamber (24),
the inner compartment (64) defined within the inner chamber (20) and intermediate chamber (22) between the inner disc (40) and the intermediate disc (142),
the outer compartment (66) defined within the intermediate chamber (22) and the outer chamber (24) between the intermediate disc (142) and the outer disc (44),
the inner disc (40) substantially preventing fluid flow in the inner chamber (20) past the inner disc (40) in an inward direction,
the intermediate disc (142) substantially preventing fluid flow in the intermediate chamber (22) past the intermediate disc (142) in an inward direction,
the outer disc (44) substantially preventing fluid flow in the outer chamber (24) past the outer disc (44) in an outward direction,
the inner disc (40) elastically deformable away from the chamber wall (30) of the inner chamber (20) to permit fluid flow in the inner chamber (20) past the inner disc (40) in an outward direction,
the intermediate disc (142) elastically deformable away from the stem (38) to permit fluid flow in the intermediate chamber (24) past the intermediate disc (142) in an outward direction

30. A pump (10) as claimed in any one of claims 19 to 29 wherein the member (56,156) is in the passageway (46) between the first inlet (54) and the discharge outlet (48).

31. A pump (10) as claimed in any one of claims 1 to 30 wherein the member (56,156) is a foam generating member (56).

32. A pump (10) as claimed in any one of claims 19 to 31 wherein:
the outer end of the inner chamber (20) comprises an annular shoulder (31) opening into the inner end of the intermediate chamber (22), and
the inner end of the outer chamber (24) comprises an annular shoulder (34) opening into the outer end of the intermediate chamber (22).

33. A pump (10) as claimed in any one of claims 19 to 32 in which each of the piston chamber-forming member (12) and piston-forming element (14) is of generally circular cross-section disposed coaxially about a central axis along which the piston-forming element (14) and piston chamber-forming member (12) are slidable relative each other.

34. A pump (10) as claimed in any one of claims 19 to 33 in which:
the inner chamber (20) is above the intermediate chamber (22),
the intermediate chamber (22) is above the outer chamber (24),
the inner end of the inner chamber (20) is above the outer end of the inner chamber (20),
the inner end of the intermediate chamber (22) is above the outer end of the intermediate chamber (22), and
the inner end of the outer chamber (24) is above the outer end of the outer chamber (24).

35. A pump (10) as claimed in any one of claims 19 to 34 in which the reservoir (60) is above the inner chamber (20).

36. A pump (10) as claimed in any one of claims 19 to 35 including an air pump mechanism comprising an air pump chamber (186) and air pump disc (180) slidable therein, one of the air pump chamber (186) and air pump disc (180) carried on the piston-chamber forming member (12) and the other carried on the piston-forming element (14), the air pump chamber (186) and air pump disc (180) interacting to form a variable volume compartment open to the passageway (46) to draw air into the compartment on movement of the piston-forming element (14) outwardly toward the extended position and to force air out of the discharge outlet (48) on movement of the piston-forming element (14) inwardly toward the retracted position.

37. A pump (10) as claimed in any one of claims 19 to 36 wherein the piston chamber-forming member (12) having a cylindrical air pump chamber (186) disposed inwardly of the inner chamber (20) coaxial therewith,
the air pump chamber (186) having a diameter, a chamber wall, a closed inner end and an open outer end,
the stem (38) of the piston-forming element (14) extending axially into the air pump chamber (186) via the outer end of the air pump chamber, (186),
an air pump disc (180) on the stem'(38) extending radially outwardly from the stem (38),
the air pump disc (180) received in the air pump chamber (186) in all positions the piston-forming element (14) assumes in sliding between the extended position and the retracted position with the air pump disc (180) engaging the chamber wall (174) of the air pump chamber (186) to prevent fluid flow therepast inwardly and outwardly;
an inner end of the central passageway (46) opening into the air pump chamber (186) inwardly of the air pump disc (180);
the air pump chamber (186) and air pump disc (180) form a variable volume closed compartment open only via the inner end of the central passageway (46),
with sliding of the piston-forming element (14) the relative movement of the air pump disc (180) changing the volume of the closed compartment to draw fluid into the closed compartment from the passageway (46) on sliding of the piston-forming element (14) outwardly toward the extended position and to force fluid out of the closed compartment via the passageway (46) on sliding of the piston-forming element (14) inwardly toward the retracted position.

38. A pump (10) as claimed in claim 37 in which the air pump chamber (186) disposed above the inner chamber (20).

39. A pump (10) as claimed in any one of claims 19 to 38 wherein:
said piston forming element (14) being generally circular in cross-section,
the inner disc (40) being circular and having an elastically deformable edge portion proximate the chamber wall of the inner chamber (20) circumferentially thereabout,
the intermediate disc (42) being circular and having an elastically deformable edge portion proximate the chamber wall of the intermediate chamber (22) circumferentially thereabout,
the outer disc (44) being circular.

40. A pump (10) as claimed in any one of claims 20 to 39 wherein:
a spring member (300) extending inwardly from the inner end of the stem (38) of the piston forming element (14) coaxially relative to the piston forming element (14) from an inner end of the spring member (300) to an outer end of the spring member (300) which is coupled to an inner end of the piston-chamber forming member (12),
the spring member (300) being axially compressed with reciprocal sliding of the piston forming element (14) from the extended position to the retracted position and having an inherent bias which urges the piston forming element (14) axially from the retracted position toward the extended position.

41. A pump (10) as claimed in any one of claims 20 to 40 including a second inlet located on the stem (38) between the outer disc (44) and the intermediate disc (42) in communication with the passageway (46), the second inlet spaced on the stem (38) spaced axially from the first inlet (54) inwardly toward the intermediate disc (42).

## Patentansprüche

1. Pumpe (10) zum Erzeugen und Abgeben von Schaum oder zerstäubter Flüssigkeit, wobei die Pumpe (10) umfasst
einen eine Kolbenkammer bildenden Körper (12) und einen Kolben (14), die in Kooperation einen äußeren Raum (66) und einen inneren Raum (64) zwischen einander definieren,
wobei der äußere Raum (66) eine Einlassöffnung (29) und einen Auslass (54) aufweist,
der innere Raum (64) eine Einlassöffnung (28) und eine Auslassöffnung (29) aufweist,
die Einlassöffnung (28) des inneren Raums (64) in Flüssigkeitsverbindung mit einem Behälter (60) steht, der ein Fluid enthält,
ein Element (56, 156), das aus einem schaumerzeugenden Sieb (56) zum Erzeugen von Turbulenzen in Luft und Fluid, die hindurch verlaufen, zum Produzieren von Schaum, und einem Düsenelement (156) gewählt wird, um Flüssigkeit zumindest teilweise zu zerstäuben, wenn Flüssigkeit und Luft gleichzeitig hindurch gehen, wobei das Element (56, 156) zum Aufnehmen von Fluid angeordnet ist, das von der Auslassöffnung (29) des inneren Raums (64) ausgestoßen wurde, und Luft, die von dem Auslass (54) des äußeren Raums (66) ausgestoßen wurde,
eine Ausstoßöffnung (48), die zur Umgebung hin offen ist, um eines aus Luft, Fluid und Schaum auszustoßen, das nach außen durch das Element (56, 156) ausgestoßen wird,
wobei der Kolben (14) relativ zu dem eine Kolbenkammer bildenden Körper (12) beweglich ist,
**dadurch gekennzeichnet, dass**
der eine Kolbenkammer bildende Körper (12) und der Kolben (14) ein erstes Pumpenelement zum Verdrängen eines ersten Volumens und ein zweites Pumpenelement zum Verdrängen eines zweiten Volumens, das größer als das erste Volumen ist, bilden, wobei die beiden Pumpenelemente phasenverschoben sind,
wobei das Verschieben des Kolbens (14) nach innen relativ zu dem Körper (12) den äußeren Raum (66) mit Druck beaufschlagt, so dass Flüssigkeit und Luft durch das Element (56, 156) gedrückt werden und gleichzeitig Fluid aus dem Behälter (60) durch die Einlassöffnung (28) des inneren Raums (64) in den inneren Raum (64) gesaugt wird, und
wobei das Verschieben des Kolbens (14) nach außen relativ zu dem Körper (12) den inneren Raum (64) mit Druck beaufschlagt, so dass Fluid aus dem inneren Raum (64) durch die Auslassöffnung (29) des äußeren Raums (66) ausgestoßen wird und gleichzeitig Luft in den äußeren Raum (66) gesaugt wird.

2. Pumpe (10) nach Anspruch 1, wobei:
die Auslassöffnung (29) des inneren Raums (64) mit dem äußeren Raum (66) in Verbindung steht, so dass Fluid, das aus der Auslassöffnung (29) des inneren Raums (64) austritt, in den äußeren Raum (66) gepumpt wird,
das Element (56, 156) so angeordnet ist, dass es Luft und Flüssigkeit aufnimmt, die von dem Auslass (54) des äußeren Raums (66) ausgestoßen werden,
wobei das Verschieben des Kolbens (14) nach innen, um den äußeren Raum (66) mit Druck zu beaufschlagen, sowohl Flüssigkeit als auch Luft aus dem Auslass (54) des äußeren Raums (66) und durch das Element (56, 156) drückt.

3. Pumpe (10) nach Anspruch 1 oder 2, wobei durch das Verschieben des Kolbens (14) nach außen Luft aus der Umgebung durch die Ausstoßöffnung (48) und durch das Element (56, 156) in den äußeren Raum (66) gesaugt wird.

4. Pumpe (10) nach einem der Ansprüche 1 bis 3, wobei durch das Verschieben des Kolbens (14) nach außen Luft in den äußeren Raum (66) aus der Umgebung über die Ausstoßöffnung (48), durch das Element (56, 156) und in den äußeren Raum (66) durch den Auslass (54) gesaugt wird.

5. Pumpe (10) nach einem der Ansprüche 1 bis 4, wobei durch das Verschieben des Kolbens (14) nach außen die gesamte Umgebungsluft, die in die Pumpe (10) gesaugt wird, aus der Umgebung über die Ausstoßöffnung (48) gesaugt wird und durch das Element (56, 156) nach innen gelangt.

6. Pumpe (10) nach einem der Ansprüche 1 bis 5, die enthält:
ein Fluid-Einlassventil (40, 150), das zwischen einer offenen Position, in der Fluid aus dem Behälter (60) in den inneren Raum (64) gelangen kann, und einer geschlossenen Position, in der verhindert wird, dass Fluid aus dem Behälter (60) in den inneren Raum (64) gelangt, beweglich ist,
ein Fluid-Auslassventil (42, 142, 180), das zwischen einer offenen Position, in der Fluid in dem inneren Raum (64) den inneren Raum (64) über die Auslassöffnung (29) verlassen kann, und einer geschlossenen Position, in der verhindert wird, dass Fluid über die Auslassöffnung (29) in den inneren Raum (64) gelangt, beweglich ist.

7. Pumpe (10) nach Anspruch 6, wobei, wenn der Kolben (14) nach außen bewegt wird und den inneren Raum (64) mit Druck beaufschlagt wird, das Fluid-Einlassventil (40, 150) die geschlossene Position einnimmt und das Fluid-Auslassventil (42, 142, 180) die offene Position einnimmt.

8. Pumpe (10) nach Anspruch 7, wobei, wenn der Kolben (14) nach innen bewegt wird und Fluid aus dem Behälter (60) durch die Einlassöffnung (28) in den inneren Raum (64) saugt, das Fluid-Einlassventil (40, 150) die offene Position einnimmt und das Fluid-Auslassventil (42, 142, 180) die geschlossene Position einnimmt.

9. Pumpe (10) nach einem der Ansprüche 1 bis 8, wobei, wenn der äußere Raum (66) mit Druck beaufschlagt wird, Flüssigkeit und Luft, die aus dem Auslass (54) der äußeren Kammer gedrückt werden, durch einen Kanal (46) verlaufen, der zu dem Element (56, 156) führt, wobei Luft und Fluid gleichzeitig durch diesen Kanal (46) geleitet werden, um ein Flüssigkeit-Luft-Gemisch zu bilden, das durch das Element (56, 156) gedrückt wird.

10. Pumpe (10) nach einem der Ansprüche 1 bis 9, wobei der Kolben (14) in dem Körper (12) montiert ist und bezüglich dessen ausfahrbar beweglich ist.

11. Pumpe (10) nach einem der Ansprüche 1 bis 10, wobei
der Körper (12) einen Luftzylinder für den äußeren Raum (66) und einen Fluidzylinder für den inneren Raum (64) aufweist, die beide konzentrisch angeordnet sind,
der Kolben (14) eine Kolbenbaugruppe (14) umfasst, die aus einem Luftkolben und einem Fluidkolben besteht, die konzentrisch und integral angeordnet sind, um sich wechselseitig in dem Luftzylinder bzw. Fluidzylinder zu bewegen.

12. Pumpe (10) nach Anspruch 11, wobei die Ausstoßöffnung (48) an einem äußeren Ende der Kolbenbaugruppe (14) angeordnet ist.

13. Pumpe (10) nach Anspruch 12, wobei
die Kolbenbaugruppe (14) eine hohle Stange (38) mit einem Kanal (46) aufweist, der konzentrisch hindurch verläuft und sich an einem äußeren Ende als die Ausstoßöffnung (48) öffnet,
das Element (56, 156) in dem Kanal (48) der Stange (38) der Kolbenbaugruppe (14) angeordnet ist.

14. Pumpe (10) nach einem der Ansprüche 1 bis 13, wobei sich die Fluid-Auslassöffnung (29) in die Einlassöffnung (29) des äußeren Raums (66) öffnet.

15. Pumpe (10) nach einem der Ansprüche 1 bis 14, wobei der innere Raum (64) vertikal über dem äußeren Raum (66) angeordnet ist.

16. Pumpe (10) nach einem der Ansprüche 1 bis 15, wobei der Auslass (54) des äußeren Raums (66) in einem unteren Teil des äußeren Raums (66) angeordnet ist.

17. Pumpe (10) nach einem der Ansprüche 1 bis 16, wobei durch Verschieben des Kolbens (14) nach innen der Kolben (14) in Richtung des Körpers (12) geschoben wird.

18. Pumpe (10) nach einem der Ansprüche 1 bis 17, wobei durch Verschieben des Kolbens (14) nach innen Flüssigkeit und Luft aus dem Auslass (54) des inneren Raums (66) gedrückt werden; und
durch Verschieben des Kolbens (14) nach außen Fluid aus dem inneren Raum (64) aus der Fluid-Auslassöffnung (29) in den äußeren Raum (66) ausgestoßen wird.

19. Pumpe (10) nach Anspruch 17 oder 18, wobei
der Körper (12) ein eine Kolbenkammer bildendes Element (12) mit einer inneren zylindrischen Kammer (20), einer mittleren zylindrischen Kammer (22) und einer äußeren zylindrischen Kammer (24) umfasst, wobei die innere Kammer (20), die mittlere Kammer (22) und die äußere Kammer (24) jeweils einen Durchmesser, eine Kammerwand, ein inneres Ende und ein äußeres Ende aufweisen,
wobei der Durchmesser der inneren Kammer (20) größer als der Durchmesser der mittleren Kammer (22) ist,
der Durchmesser der äußeren Kammer (24) größer als der Durchmesser der mittleren Kammer (22) ist,
die innere Kammer (20), die mittlere Kammer (22) und die äußere Kammer (24) koaxial angeordnet sind, wobei sich das äußere Ende (29) der inneren Kammer (20) in das innere Ende der mittleren Kammer (22) öffnet, und sich das äußere Ende (32) der mittleren Kammer (22) in das innere Ende der äußeren Kammer (24) öffnet,
das innere Ende (28) der inneren Kammer (20) die Fluid-Einlassöffnung (28) umfasst, die in Flüssigkeitsverbindung mit dem Behälter (60) steht,
das äußere Ende (32) der mittleren Kammer (22) die Fluid-Auslassöffnung (29) umfasst,
der Kolben (14) ein kolbenbildendes Element (14) umfasst, das axial nach innen und außen zwischen einer inneren eingefahrenen Position und einer äußeren ausgefahrenen Position verschiebbar in dem Körper (12) aufgenommen ist,
das kolbenbildende Element (14) eine sich axial mittig erstreckende hohle Stange (38) mit einem mittigen Kanal (46) aufweist, der nahe einem äußeren Ende (50) einen Auslass (48) hat, der die Ausstoßöffnung (48) umfasst,
eine innere Scheibe (40) sich von der Stange (38) radial nach außen erstreckt, wobei die innere Scheibe (40) dazu eingerichtet ist, mit der Kammerwand (30) der inneren Kammer (20) in Eingriff zu kommen,
eine mittlere Scheibe (42) sich von der Stange (38) radial nach außen erstreckt, und die innere Scheibe (40) axial nach außen beabstandet, wobei die mittlere Scheibe (42) dazu eingerichtet ist, mit der Kammerwand (33) der mittleren Kammer (22) in Eingriff zu kommen,
eine äußere Scheibe (44) sich von der Stange (38) radial nach außen erstreckt, und die mittlere Scheibe (42) axial nach außen beabstandet, wobei die äußere Scheibe (44) mit der Kammerwand (36) der äußeren Kammer (24) in Eingriff steht,
ein erster Einlass (54) an der Stange (38) zwischen der mittleren Scheibe (42) und der äußeren Scheibe (44) in Verbindung mit dem Kanal angeordnet ist,
das kolbenbildende Element (14) verschiebbar in dem eine Kolbenkammer bildenden Element (12) aufgenommen ist, um eine wechselseitige axiale Bewegung nach innen und außen darin auszuführen, wobei die innere Scheibe (40) in der inneren Kammer (20), die mittlere Scheibe (42) in der mittleren Kammer (22) und die äußere Scheibe (44) in der äußeren Kammer (24) angeordnet ist,
der innere Raum (64) in der inneren Kammer (20) und der mittleren Kammer (22) zwischen der inneren Scheibe (40) und der mittleren Scheibe (42) definiert ist,
der äußere Raum (66) in der mittleren Kammer (22) und der äußeren Kammer (24) zwischen der mittleren Scheibe (42) und der äußeren Scheibe (44) definiert ist,
wenn die innere Scheibe (40) in der inneren Kammer (20) ist, die innere Scheibe (40) im Wesentlichen den Fluidstrom in der inneren Kammer (20) nach innen an der inneren Scheibe (40) vorbei verhindert,
wenn die mittlere Scheibe (42) in der mittleren Kammer (22) ist, die mittlere Scheibe (42) im Wesentlichen den Fluidstrom in der mittleren Kammer (22) nach innen an der mittleren Scheibe (42) vorbei verhindert,
wenn die äußere Scheibe (44) in der äußeren Kammer (24) ist, die äußere Scheibe (44) im Wesentlichen den Fluidstrom in der äußeren Kammer (24) nach außen an der äußeren Scheibe (44) vorbei verhindert,
die innere Scheibe (40) von der Kammerwand (30) der inneren Kammer (20) weg elastisch verformbar ist, um einen Fluidstrom in der inneren Kammer (20) nach außen an der inneren Scheibe (40) vorbei zu ermöglichen,
die mittlere Scheibe (42) von der Kammerwand (33) der mittleren Kammer (22) weg elastisch verformbar ist, um einen Fluidstrom in der mittleren Kammer (22) nach außen an der mittleren Scheibe (42) vorbei zu ermöglichen.

20. Pumpe (10) nach Anspruch 19, wobei die Umgebungsluft, die zwischen die mittlere Scheibe (42) und die äußere Scheibe (44) gesaugt wird, zumindest teilweise über die Ausstoßöffnung (48), den Kanal (46) und den Einlass (54) eingesaugt wird.

21. Pumpe (10) nach Anspruch 19 oder 20, wobei die äußere Scheibe (44) umfänglich mit der Kammerwand (36) der äußeren Kammer (24) in Eingriff steht, um eine im Wesentlichen fluidundurchlässige Dichtung damit während des Gleitens des kolbenbildenden Elements (14) nach innen und außen zwischen der eingefahrenen und der ausgefahrenen Position zu bilden, und
die ganze Umgebungsluft, die zwischen die mittlere Scheibe (42) und die äußere abdichtende Scheibe (44) gesaugt wird, über die Ausstoßöffnung (48), den Kanal (46) und den Einlass (54) dorthin gesaugt wird.

22. Pumpe (10) nach Anspruch 19 oder 20, wobei die äußere Scheibe (44) einen elastisch verformbaren Randteil nahe der Kammerwand (36) der äußeren Kammer (24) an deren Umfang aufweist,
die äußere Scheibe (44) von der Kammerwand (36) der äußeren Kammer (24) weg elastisch verformbar ist, um einen Luftstrom in der äußeren Kammer (24) nach innen an der äußeren Scheibe (44) vorbei zu ermöglichen,
die Umgebungsluft, die zwischen die mittlere Scheibe (42) und die äußere Scheibe (44) gesaugt wird, zumindest teilweise dorthin in die äußere Kammer (24) an der äußeren Scheibe (44) vorbei gesaugt wird.

23. Pumpe (10) nach einem der Ansprüche 19 bis 23, wobei während der Gesamtheit jeder Hubbewegung des kolbenbildenden Elements (14) zwischen der eingefahrenen Position und der ausgefahrenen Position die äußere Scheibe (44) mit der Kammerwand (36) der äußeren Kammer (24) an deren Umfang in Eingriff steht, um einen Fluidstrom in der äußeren Kammer (24) an der äußeren Scheibe (44) vorbei nach außen im Wesentlichen zu verhindern.

24. Pumpe (10) nach einem der Ansprüche 19 bis 23, wobei während der Gesamtheit jeder Hubbewegung des kolbenbildenden Elements (14) zwischen der eingefahrenen Position und der ausgefahrenen Position die mittlere Scheibe (42) mit der Kammerwand (33) der mittleren Kammer (22) an deren Umfang in Eingriff steht, um einen Fluidstrom in der mittleren Kammer (22) an der mittleren Scheibe (42) vorbei nach innen im Wesentlichen zu verhindern.

25. Pumpe (10) nach einem der Ansprüche 19 bis 24, wobei während der Gesamtheit jeder Hubbewegung des kolbenbildenden Elements (14) zwischen der eingefahrenen Position und der ausgefahrenen Position die innere Scheibe (40) mit der Kammerwand (30) der inneren Kammer (20) an deren Umfang in Eingriff steht, um einen Fluidstrom in der inneren Kammer (20) an der inneren Scheibe (40) vorbei nach innen im Wesentlichen zu verhindern.

26. Pumpe (10) nach einem der Ansprüche 19 bis 23, wobei während der Gesamtheit jeder Hubbewegung des kolbenbildenden Elements (14) zwischen der ausgefahrenen Position und einer ersten mittleren Position zwischen der eingefahrenen Position und der ausgefahrenen Position die innere Scheibe (40) in der inneren Kammer (20) mit der Kammerwand (30) der inneren Kammer (20) an deren Umfang in Eingriff steht, um einen Fluidstrom in der inneren Kammer (20) an der inneren Scheibe (40) vorbei nach innen im Wesentlichen zu verhindern, und
wobei die innere Scheibe (40) während der Bewegung des kolbenbildenden Elements (14) zwischen der ersten mittleren Position und der eingefahrenen Position nicht in der inneren Kammer (20) ist und den Fluidstrom in der inneren Kammer (20) an der inneren Scheibe (40) vorbei nach innen nicht verhindert.

27. Pumpe (10) nach Anspruch 26, wobei während der Bewegung des kolbenbildenden Elements (14) zwischen der eingefahrenen Position und einer zweiten mittleren Position zwischen der eingefahrenen Position und der ausgefahrenen Position die mittlere Scheibe (42) in der mittleren Kammer (22) mit der Kammerwand (33) der mittleren Kammer (22) an deren Umfang in Eingriff steht, um einen Fluidstrom in der mittleren Kammer (22) an der mittleren Scheibe (42) vorbei nach innen im Wesentlichen zu verhindern, und
wobei die mittlere Scheibe (42) während der Bewegung des kolbenbildenden Elements (14) zwischen der zweiten mittleren Position und der ausgefahrenen Position nicht in der mittleren Kammer (22) ist und den Fluidstrom in der inneren Kammer (22) an der mittleren Scheibe (42) vorbei nach innen nicht verhindert.

28. Pumpe (10) nach Anspruch 23, wobei während der Bewegung des kolbenbildenden Elements (14) zwischen der ausgefahrenen Position und einer mittleren Position zwischen der eingefahrenen Position und der ausgefahrenen Position die mittlere Scheibe (42) in der mittleren Kammer (22) mit der Kammerwand (33) der mittleren Kammer (22) an deren Umfang in Eingriff steht, um einen Fluidstrom in der mittleren Kammer (22) an der mittleren Scheibe (42) vorbei nach innen im Wesentlichen zu verhindern, und
wobei die mittlere Scheibe (42) während der Bewegung des kolbenbildenden Elements (14) zwischen der mittleren Position und der eingefahrenen Position nicht in der mittleren Kammer (22) ist und den Fluidstrom in der inneren Kammer (22) an der mittleren Scheibe (42) vorbei nach innen nicht verhindert.

29. Pumpe (10) nach einem der Ansprüche 17 oder 18, wobei
der Körper (12) ein eine Kolbenkammer bildendes Element (12) mit einer inneren zylindrischen Kammer (26), einer mittleren zylindrischen Kammer (22) und einer äußeren zylindrischen Kammer (24) umfasst, wobei die innere Kammer (20), die mittlere
Kammer (22) und die äußere Kammer (24) jeweils einen Durchmesser, eine Kammerwand, ein inneres Ende und ein äußeres Ende aufweisen, wobei der Durchmesser der inneren Kammer (20) größer als der Durchmesser der mittleren Kammer (22) ist,
der Durchmesser der äußeren Kammer (24) größer als der Durchmesser der mittleren Kammer (22) ist,
die innere Kammer (20), die mittlere Kammer (22) und die äußere Kammer (24) koaxial angeordnet sind, wobei sich das äußere Ende (29) der inneren Kammer (20) in das innere Ende der mittleren Kammer (22) öffnet, und sich das äußere Ende (32) der mittleren Kammer (22) in das innere Ende der äußeren Kammer (24) öffnet,
das innere Ende (28) der inneren Kammer (20) die Fluid-Einlassöffnung (28) umfasst, die in Flüssigkeitsverbindung mit dem Behälter (60) steht,
das äußere Ende (32) der mittleren Kammer (22) die Auslassöffnung (29) des inneren Raums (64) umfasst,
der Kolben (14) ein kolbenbildendes Element (14) umfasst, das axial nach innen und außen zwischen einer inneren eingefahrenen Position und einer äußeren ausgefahrenen Position verschiebbar in dem eine Kolbenkammer bildenden Element (12) aufgenommen wird,
das kolbenbildende Element (14) eine sich axial mittig erstreckende hohle Stange (38) mit einem mittigen Kanal (46) aufweist, der nahe einem äußeren Ende (50) einen Auslass (48) hat, der die Ausstoßöffnung (48) umfasst,
eine innere Scheibe (40) sich von der Stange (38) radial nach außen erstreckt, wobei die innere Scheibe (40) dazu eingerichtet ist, mit der Kammerwand (30) der inneren Kammer (20) in Eingriff zu kommen,
eine äußere Scheibe (44) sich von der Stange (38) radial nach außen erstreckt, und die innere Scheibe (40) axial auswärts beabstandet, wobei die äußere Scheibe (44) mit der Kammerwand (36) der äußeren Kammer (24) in Eingriff steht,
eine mittlere Scheibe (142) an dem eine Kolbenkammer bildenden Element (12) getragen wird und sich von der Kammerwand (33) der mittleren Kammer (22) radial einwärts erstreckt, wobei die mittlere Scheibe (142) dazu eingerichtet ist, mit der Stange (38) zwischen der inneren Scheibe (40) und der äußeren Scheibe (44) in Eingriff zu kommen,
ein erster Einlass (54) an der Stange (38) zwischen der mittleren Scheibe (142) und der äußeren Scheibe in Verbindung mit dem Kanal angeordnet ist,
das kolbenbildende Element (14) verschiebbar in dem eine Kolbenkammer bildenden Element (12) aufgenommen ist, um eine wechselseitige axiale Bewegung nach innen und außen darin auszuführen, wobei die innere Scheibe (40) in der inneren Kammer (20) und die äußere Scheibe (42) in der äußeren Kammer (24) angeordnet ist,
der innere Raum (64) in der inneren Kammer (20) und der mittleren Kammer (22) zwischen der inneren Scheibe (40) und der mittleren Scheibe (142) definiert ist,
der äußere Raum (66) in der mittleren Kammer (22) und der äußeren Kammer (24) zwischen der mittleren Scheibe (142) und der äußeren Scheibe (44) definiert ist,
die innere Scheibe (40) im Wesentlichen den Fluidstrom in der inneren Kammer (20) nach innen an der inneren Scheibe (40) vorbei verhindert,
die mittlere Scheibe (142) im Wesentlichen den Fluidstrom in der mittleren Kammer (22) nach innen an der mittleren Scheibe (142) vorbei verhindert,
die äußere Scheibe (44) im Wesentlichen den Fluidstrom in der äußeren Kammer (24) nach außen an der äußeren Scheibe (44) vorbei verhindert,
die innere Scheibe (40) von der Kammerwand (30) der inneren Kammer (20) weg elastisch verformbar ist, um einen Fluidstrom in der inneren Kammer (20) nach außen an der inneren Scheibe (40) vorbei zu ermöglichen,
die mittlere Scheibe (142) von der Stange (38) weg elastisch verformbar ist, um einen Fluidstrom in der mittleren Kammer (24) nach außen an der mittleren Scheibe (142) vorbei zu ermöglichen.

30. Pumpe (10) nach einem der Ansprüche 19 bis 29, wobei das Element (56, 156) in dem Kanal (46) zwischen dem ersten Einlass (54) und der Ausstoßöffnung (48) angeordnet ist.

31. Pumpe (10) nach einem der Ansprüche 1 bis 30, wobei das Element (56, 156) ein schaumerzeugendes Element (56) ist.

32. Pumpe (10) nach einem der Ansprüche 19 bis 31, wobei
das äußere Ende der inneren Kammer (20) einen ringförmigen Absatz (31) umfasst, der sich in das innere Ende der mittleren Kammer (22) öffnet und
das innere Ende der äußeren Kammer (24) einen ringförmigen Absatz (34) umfasst, der sich in das äußere Ende der mittleren Kammer (22) öffnet.

33. Pumpe (10) nach einem der Ansprüche 19 bis 32, wobei sowohl das eine Kolbenkammer bildende Element (12) als auch das kolbenbildende Element (14) einen im Allgemeinen kreisförmigen Querschnitt aufweisen und koaxial um eine Mittelachse herum angeordnet sind, entlang der das kolbenbildende Element (14) und das eine Kolbenkammer bildende Element (12) relativ zueinander verschiebbar sind.

34. Pumpe (10) nach einem der Ansprüche 19 bis 33, wobei:
die innere Kammer (20) oberhalb der mittleren Kammer (22) angeordnet ist,
die mittlere Kammer (22) oberhalb der äußeren Kammer (24) angeordnet ist,
das innere Ende der inneren Kammer (20) oberhalb des äußeren Endes der inneren Kammer (20) angeordnet ist,
das innere Ende der mittleren Kammer (22) oberhalb des äußeren Endes der mittleren Kammer (22) angeordnet ist, und
das innere Ende der äußeren Kammer (24) oberhalb des äußeren Endes der äußeren Kammer (24) angeordnet ist.

35. Pumpe (10) nach einem der Ansprüche 19 bis 34, wobei der Behälter (60) oberhalb der inneren Kammer (20) angeordnet ist.

36. Pumpe (10) nach einem der Ansprüche 19 bis 35, mit einem Luftpumpenmechanismus, umfassend eine Luftpumpenkammer (186) und eine darin gleitfähige Luftpumpenscheibe (180), wobei eines aus der Luftpumpenkammer (186) und der Luftpumpenscheibe (180) an dem die Kolbenkammer bildenden Element (12) getragen wird und das andere an dem kolbenbildenden Element (14) getragen wird, wobei die Luftpumpenkammer (186) und die Luftpumpenscheibe (180) zusammenwirkend einen Raum mit variablem Volumen bilden, der zu dem Kanal (46) hin offen ist, um bei einer Bewegung des kolbenbildenden Elements (14) nach außen in Richtung der ausgefahrenen Position Luft in den Raum zu saugen und bei einer Bewegung des kolbenbildenden Elements (14) nach innen in Richtung der eingefahrenen Position Luft aus der Ausstoßöffnung (48) auszustoßen.

37. Pumpe (10) nach einem der Ansprüche 19 bis 36, wobei das die Kolbenkammer bildende Element (12) eine zylindrische Luftpumpenkammer (186) aufweist, die innerhalb der inneren Kammer (20) und koaxial damit angeordnet ist,
die Luftpumpenkammer (186) einen Durchmesser, eine Kammerwand, ein geschlossenes inneres Ende und ein offenes äußeres Ende aufweist,
die Stange (38) des kolbenbildenden Elements (14) sich durch das äußere Ende der Luftpumpenkammer (186) axial in die Luftpumpenkammer (186) erstreckt,
eine Luftpumpenscheibe (180) an der Stange (38) sich radial von der Stange (38) nach außen erstreckt,
die Luftpumpenscheibe (180), die in der Luftpumpenkammer (186) aufgenommen ist, in allen Positionen, die das kolbenbildende Element (14) beim Gleiten zwischen der ausgefahrenen Position und der eingezogenen Position mit der Luftpumpenscheibe (180) einnimmt, mit der Kammerwand (174) der Luftpumpenkammer (186) in Eingriff steht, um zu verhindern, dass der Fluidstrom daran vorbei nach innen und außen gelangt;
ein inneres Ende des mittigen Kanals (46) sich in die Luftpumpenkammer (186) innerhalb der Luftpumpenscheibe (180) öffnet;
die Luftpumpenkammer (186) und die Luftpumpenscheibe (180) einen geschlossenen Raum mit variablem Volumen bilden, der nur über das innere Ende des mittigen Kanals (46) offen ist,
beim Gleiten des kolbenbildenden Elements (14) die relative Bewegung der Luftpumpenscheibe (180) das Volumen des geschlossenen Raums verändert, um beim Gleiten des kolbenbildenden Elements (14) nach außen in Richtung der ausgefahrenen Position Fluid aus dem Kanal (46) in den geschlossenen Raum zu saugen, und beim Gleiten des kolbenbildenden Elements (14) nach innen in Richtung der eingefahrenen Position Fluid aus dem geschlossenen Raum über den Kanal (46) auszustoßen.

38. Pumpe (10) nach Anspruch 37, wobei die Luftpumpenkammer (186) oberhalb der inneren Kammer (20) angeordnet ist.

39. Pumpe (10) nach einem der Ansprüche 19 bis 38, wobei:
das kolbenbildende Element (14) einen im Allgemeinen kreisförmigen Querschnitt aufweist,
die innere Scheibe (40) kreisförmig ist und einen elastischen verformbaren Randteil nahe der Kammerwand der inneren Kammer (20) an deren Umfang aufweist,
die mittlere Scheibe (42) kreisförmig ist und einen elastischen verformbaren Randteil nahe der Kammerwand der mittleren Kammer (22) an deren Umfang aufweist,
die äußere Scheibe (44) kreisförmig ist.

40. Pumpe (10) nach einem der Ansprüche 20 bis 39, wobei:
ein Federelement (300) sich von dem inneren Ende der Stange (38) des kolbenbildenden Elements (14) koaxial relativ zu dem kolbenbildenden Element (14) von einem inneren Ende des Federlements (300) zu einem äußeren Ende des Federlements (300) nach innen erstreckt, das an ein inneres Ende des die Kolbenkammer bildenden Elements (12) gekoppelt ist,
das Federelement (300) während des wechselseitigen Gleitens des kolbenbildenden Elements (14) von der ausgefahrenen Position in die eingefahrene Position axial zusammengedrückt wird und eine inhärente Vorspannung aufweist, die das kolbenbildende Element (14) axial aus der eingefahrenen Position in die ausgefahrenen Position drückt.

41. Pumpe (10) nach einem der Ansprüche 20 bis 40, mit einem zweiten Einlass, der an der Stange (38) zwischen der äußeren Scheibe (44) und der mittleren Scheibe (42) in Verbindung mit dem Kanal (46) angeordnet ist, wobei der zweite Einlass an der Stange (38) den ersten Einlass (54) axial einwärts in Richtung der mittleren Scheibe (42) beanstandet.

## Revendications

1. Pompe (10) pour produire et distribuer de la mousse ou un liquide atomisé,
la pompe (10) comprenant un corps formant une chambre de piston (12) et un piston (14) coopérant pour définir entre eux un compartiment externe (66) et un compartiment interne (64),
le compartiment externe (66) ayant une ouverture d'entrée (29) et une sortie (54),
le compartiment interne (64) ayant une ouverture d'entrée (28) et une ouverture de sortie (29),
l'ouverture d'entrée (28) du compartiment interne (64) étant en communication fluide avec un réservoir contenant du fluide (60),
un membre (56, 156) sélectionné parmi un écran de génération de mousse (56) pour générer une turbulence dans l'air et le fluide qui le traversent afin de produire de la mousse, et un membre d'ajutage (156) pour atomiser au moins partiellement le liquide quand du liquide et de l'air le traversent simultanément, le membre (56, 156) étant positionné pour recevoir du fluide déchargé par l'ouverture de sortie (29) du compartiment interne (64) et de l'air déchargé par la sortie (54) du compartiment externe (66),
une sortie de décharge (48) ouverte à l'atmosphère pour décharger l'air, le fluide et la mousse éventuellement présents déchargés vers l'extérieur à travers le membre (56, 156),
le piston (14) étant mobile par rapport au corps formant une chambre de piston (12),
**caractérisée en ce que**
le corps formant une chambre de piston (12) et le piston (14) forment un premier membre de pompe pour déplacer un premier volume, et un deuxième membre de pompe pour déplacer un deuxième volume supérieur au premier volume, les deux membres de pompe étant déphasés,
moyennant quoi le déplacement du piston (14) vers l'intérieur par rapport au corps (12) met le compartiment externe (66) sous pression, ce qui refoule du liquide et de l'air à travers le membre (56, 156) et aspire simultanément du fluide du réservoir (60) à travers l'ouverture d'entrée (28) du compartiment interne (64) dans le compartiment interne (64), et
moyennant quoi le déplacement du piston (14) vers l'extérieur par rapport au corps (12) met le compartiment interne (64) sous pression, ce qui décharge du fluide depuis le compartiment interne (64) à travers l'ouverture de sortie (29) du compartiment externe (66) et aspire simultanément de l'air dans le compartiment externe (66).

2. Pompe (10) selon la revendication 1, dans laquelle :
l'ouverture de sortie (29) du compartiment interne (64) communique avec le compartiment externe (66) de telle sorte que le fluide sortant de l'ouverture de sortie (29) du compartiment interne (64) est envoyé dans le compartiment externe (66),
le membre (56, 156) est positionné pour recevoir de l'air et du liquide déchargés par la sortie (54) du compartiment externe (66),
dans laquelle le déplacement du piston (14) vers l'intérieur pour mettre le compartiment externe (66) sous pression refoule aussi bien le liquide que l'air hors de la sortie (54) du compartiment externe (66) et à travers le membre (56, 156).

3. Pompe (10) selon la revendication 1 ou 2, dans laquelle le déplacement du piston (14) vers l'extérieur aspire de l'air dans le compartiment externe (66) depuis l'atmosphère via la sortie de décharge (48) et à travers le membre (56, 156).

4. Pompe (10) selon l'une quelconque des revendications 1 à 3, dans laquelle le déplacement du piston (14) vers l'extérieur aspire de l'air dans le compartiment externe (66) depuis l'atmosphère via la sortie de décharge (48), à travers le membre (56, 156) et dans le compartiment externe (66) à travers la sortie (54).

5. Pompe (10) selon l'une quelconque des revendications 1 à 4 dans laquelle, lors du déplacement du piston (14) vers l'extérieur, tout l'air atmosphérique aspiré dans la pompe (10) est aspiré de l'atmosphère via la sortie de décharge (48) et passe vers l'intérieur à travers le membre (56, 156).

6. Pompe (10) selon l'une quelconque des revendications 1 à 5, comprenant :
une vanne d'entrée de fluide (40, 150) mobile entre une position ouverte pour permettre au fluide du réservoir (60) d'entrer dans le compartiment interne (64), et une position fermée qui empêche le fluide du réservoir (60) d'entrer dans le compartiment interne (64),
une vanne de sortie de fluide (42, 142, 180) mobile entre une position ouverte pour permettre au fluide du compartiment interne (64) de sortir du compartiment interne (64) via l'ouverture de sortie (29), et une position fermée qui empêche le fluide d'entrer dans le compartiment interne (64) via l'ouverture de sortie (29).

7. Pompe (10) selon la revendication 6 dans laquelle, quand le piston (14) est déplacé vers l'extérieur et le compartiment interne (64) est mis sous pression, la vanne d'entrée de fluide (40, 150) adopte sa position fermée et la vanne de sortie de fluide (42, 142, 180) adopte sa position ouverte.

8. Pompe (10) selon la revendication 7 dans laquelle, quand le piston (14) est déplacé vers l'intérieur et aspire du fluide du réservoir (60) à travers l'ouverture d'entrée (28) dans le compartiment interne (64), la vanne d'entrée de fluide (40, 150) adopte sa position ouverte et la vanne de sortie de fluide (42, 142, 180) adopte sa position fermée.

9. Pompe (10) selon l'une quelconque des revendications 1 à 8 dans laquelle, quand le compartiment externe (66) est mis sous pression, du liquide et de l'air refoulés par la sortie du compartiment externe (54) traversent un passage (46) menant au membre (56, 156), l'air et le fluide traversant simultanément ledit passage (46) et formant un mélange liquide-air qui est refoulé à travers le membre (56, 156).

10. Pompe (10) selon l'une quelconque des revendications 1 à 9, dans laquelle le piston (14) est monté dans ledit corps (12) et est mobile de façon télescopique par rapport à celui-ci.

11. Pompe (10) selon l'une quelconque des revendications 1 à 10, dans laquelle
le corps (12) procure un cylindre d'air pour le compartiment externe (66) et un cylindre de fluide pour le compartiment interne (64), agencés tous deux de manière concentrique,
le piston (14) comprend un assemblage de piston (14) constitué par un piston d'air et un piston de fluide, pourvus de manière concentrique et intégrée pour se déplacer alternativement dans ledit cylindre d'air et ledit cylindre de fluide, respectivement.

12. Pompe (10) selon la revendication 11, dans laquelle la sortie de décharge (48) est pourvue à une extrémité externe dudit assemblage de piston (14).

13. Pompe (10) selon la revendication 12, dans laquelle
l'assemblage de piston (14) comporte une tige creuse (38) avec un passage (46) qui la traverse de manière concentrique, ouvert à une extrémité externe pour former la sortie de décharge (48),
le membre (56, 156) est situé à l'intérieur du passage (48) dans la tige (38) de l'assemblage de piston (14).

14. Pompe (10) selon l'une quelconque des revendications 1 à 13, dans laquelle l'ouverture de sortie de fluide (29) s'ouvre dans l'ouverture d'entrée (29) du compartiment externe (66).

15. Pompe (10) selon l'une quelconque des revendications 1 à 14, dans laquelle le compartiment interne (64) est agencé verticalement au-dessus du compartiment externe (66).

16. Pompe (10) selon l'une quelconque des revendications 1 à 15, dans laquelle la sortie (54) du compartiment externe (66) est agencée dans une partie inférieure du compartiment externe (66).

17. Pompe (10) selon l'une quelconque des revendications 1 à 16, dans laquelle le déplacement du piston (14) vers l'intérieur déplace le piston (14) vers le corps (12).

18. Pompe (10) selon l'une quelconque des revendications 1 à 17, dans laquelle
le déplacement du piston (14) vers l'intérieur refoule le liquide et l'air par la sortie (54) du compartiment externe (66) ; et
le déplacement du piston (14) vers l'extérieur expulse le fluide du compartiment interne (64) par l'ouverture de sortie de fluide (29) dans le compartiment externe (66).

19. Pompe (10) selon la revendication 17 ou 18, dans laquelle
le corps (12) comprenant un membre qui forme une chambre de piston (12) comporte une chambre cylindrique interne (20), une chambre cylindrique intermédiaire (22) et une chambre cylindrique externe (24), la chambre interne (20), la chambre intermédiaire (22) et la chambre externe (24) ayant chacune un diamètre, une paroi de chambre, une extrémité interne et une extrémité externe,
le diamètre de la chambre interne (20) est supérieur au diamètre de la chambre intermédiaire (22),
le diamètre de la chambre externe (24) est supérieur au diamètre de la chambre intermédiaire (22),
la chambre interne (20), la chambre intermédiaire (22) et la chambre externe (24) sont coaxiales avec l'extrémité externe (29) de la chambre interne (20) qui s'ouvre dans l'extrémité interne de la chambre intermédiaire (22), et avec l'extrémité externe (32) de la chambre intermédiaire (22) qui s'ouvre dans l'extrémité interne de la chambre externe (24),
l'extrémité interne (28) de la chambre interne (20) comprend l'ouverture d'entrée de fluide (28) en communication fluide avec le réservoir (60) ;
l'extrémité externe (32) de la chambre intermédiaire (22) comprend l'ouverture de sortie de fluide (29),
le piston (14) comprend un élément formant un piston (14) reçu dans le corps (12), qui peut coulisser axialement vers l'intérieur et vers l'extérieur dans celui-ci entre une position rétractée vers l'intérieur et une position étendue vers l'extérieur,
ledit élément formant un piston (14) a une tige creuse centrale (38) qui s'étend axialement et comporte un passage central (46) ayant une sortie (48) proche d'une extrémité externe (50) comprenant la sortie de décharge (48),
un disque interne (40) s'étend radialement vers l'extérieur à partir de la tige (38), le disque interne (40) étant adapté pour s'engager avec la paroi de chambre (30) de la chambre interne (20),
un disque intermédiaire (42) s'étend radialement vers l'extérieur à partir de la tige (38), espacé axialement vers l'extérieur à partir du disque interne (40), le disque intermédiaire (42) étant adapté pour s'engager avec la paroi de chambre (33) de la chambre intermédiaire (22),
un disque externe (44) s'étend radialement vers l'extérieur à partir de la tige (38), espacé axialement vers l'extérieur à partir du disque intermédiaire (42), le disque externe (44) s'engageant avec la paroi de chambre (36) de la chambre externe (24),
une première entrée (54) est située sur la tige (38) entre le disque intermédiaire (42) et le disque externe (44), en communication avec le passage (46),
l'élément formant un piston (14) est reçu de manière coulissante dans le membre formant une chambre de piston (12) pour un déplacement axial alternatif vers l'intérieur et vers l'extérieur dans celui-ci, avec le disque interne (40) dans la chambre interne (20), le disque intermédiaire (42) dans la chambre intermédiaire (22) et le disque externe (44) dans la chambre externe (24),
le compartiment interne (64) est défini dans la chambre interne (20) et la chambre intermédiaire (22) entre le disque interne (40) et le disque intermédiaire (42),
le compartiment externe (66) est défini dans la chambre intermédiaire (22) et la chambre externe (24) entre le disque intermédiaire (42) et le disque externe (44),
quand le disque interne (40) se trouve dans la chambre interne (20), le disque interne (40) empêche sensiblement un écoulement de fluide dans la chambre interne (20) au-delà du disque interne (40) en direction de l'intérieur,
quand le disque intermédiaire (42) se trouve dans la chambre intermédiaire (22), le disque intermédiaire (42) empêche sensiblement un écoulement de fluide dans la chambre intermédiaire (22) au-delà du disque intermédiaire (42) en direction de l'intérieur,
quand le disque externe (44) se trouve dans la chambre externe (24), le disque externe (44) empêche sensiblement un écoulement de fluide dans la chambre externe (24) au-delà du disque externe (44) en direction de l'extérieur,
le disque interne (40) est élastiquement déformable en s'éloignant de la paroi de chambre (30) de la chambre interne (20) pour permettre un écoulement de fluide dans la chambre interne (20) au-delà du disque interne (40) en direction de l'extérieur,
le disque intermédiaire (42) est élastiquement déformable en s'éloignant de la paroi de chambre (33) de la chambre intermédiaire (22) pour permettre un écoulement de fluide dans la chambre intermédiaire (22) au-delà du disque intermédiaire (42) en direction de l'extérieur.

20. Pompe (10) selon la revendication 19, dans laquelle l'air atmosphérique aspiré entre le disque intermédiaire (42) et le disque externe (44) y est aspiré, au moins en partie, via la sortie de décharge (48), le passage (46) et l'entrée (54).

21. Pompe (10) selon la revendication 19 ou 20, dans laquelle
le disque externe (44) s'engage avec la paroi de chambre (36) de la chambre externe (24) circonférentiellement autour de celle-ci pour former avec celle-ci une étanchéité sensiblement imperméable au fluide lors d'un coulissement dudit élément formant un piston (14) vers l'intérieur et vers l'extérieur entre les positions rétractée et étendue, et
tout l'air atmosphérique aspiré entre le disque intermédiaire (42) et le disque d'étanchéité externe (44) y est aspiré via la sortie de décharge (48), le passage (46) et l'entrée (54).

22. Pompe (10) selon la revendication 19 ou 20, dans laquelle
le disque externe (44) comporte une partie de bord élastiquement déformable proche de la paroi de chambre (36) de la chambre externe (24) circonférentiellement autour de celle-ci,
le disque externe (44) est élastiquement déformable en s'éloignant de la paroi de chambre (36) de la chambre externe (24) pour permettre un écoulement d'air dans la chambre externe (24) au-delà du disque externe (44) en direction de l'intérieur,
l'air atmosphérique aspiré entre le disque intermédiaire (42) et le disque externe (44) y est aspiré, au moins en partie, vers l'intérieur dans la chambre externe (24) au-delà du disque externe (44).

23. Pompe (10) selon l'une quelconque des revendications 19 à 23 dans laquelle, pendant l'entièreté de chaque course de mouvement de l'élément formant un piston (14) entre la position rétractée et la position étendue, le disque externe (44) s'engage avec la paroi de chambre (36) de la chambre externe (24) circonférentiellement autour de celle-ci pour sensiblement empêcher un écoulement de fluide dans la chambre externe (24) au-delà du disque externe (44) en direction de l'extérieur.

24. Pompe (10) selon l'une quelconque des revendications 19 à 23 dans laquelle, pendant l'entièreté de chaque course de mouvement de l'élément formant un piston (14) entre la position rétractée et la position étendue, le disque intermédiaire (42) s'engage avec la paroi de chambre (33) de la chambre intermédiaire (22) circonférentiellement autour de celle-ci pour sensiblement empêcher un écoulement de fluide dans la chambre intermédiaire (22) au-delà du disque intermédiaire (42) en direction de l'intérieur.

25. Pompe (10) selon l'une quelconque des revendications 19 à 24 dans laquelle, pendant l'entièreté de chaque course de mouvement de l'élément formant un piston (14) entre la position rétractée et la position étendue, le disque interne (40) s'engage avec la paroi de chambre (30) de la chambre interne (20) circonférentiellement autour de celle-ci pour sensiblement empêcher un écoulement de fluide dans la chambre interne (20) au-delà du disque interne (40) en direction de l'intérieur.

26. Pompe (10) selon l'une quelconque des revendications 19 à 23,
dans laquelle, pendant l'entièreté de chaque course de mouvement de l'élément formant un piston (14) entre la position étendue et une première position intermédiaire entre la position rétractée et la position étendue, le disque interne (40) se trouve dans la chambre interne (20) et s'engage avec la paroi de chambre (30) de la chambre interne (20) circonférentiellement autour de celle-ci pour sensiblement empêcher un écoulement de fluide dans la chambre interne (20) au-delà du disque interne (40) en direction de l'intérieur, et
dans laquelle, pendant tout le mouvement de l'élément formant un piston (14) entre la première position intermédiaire et la position rétractée, le disque interne (40) ne se trouve pas dans la chambre interne (20) et n'empêche pas un écoulement de fluide dans la chambre interne (20) au-delà du disque interne (40) en direction de l'intérieur.

27. Pompe (10) selon la revendication 26,
dans laquelle, pendant tout le mouvement de l'élément formant un piston (14) entre la position rétractée et une deuxième position intermédiaire entre la position rétractée et la position étendue, le disque intermédiaire (42) se trouve dans la chambre intermédiaire (22) et s'engage avec la paroi de chambre (33) de la chambre intermédiaire (22) circonférentiellement autour de celle-ci pour sensiblement empêcher un écoulement de fluide dans la chambre intermédiaire (22) au-delà du disque intermédiaire (42) en direction de l'intérieur, et
dans laquelle, pendant tout le mouvement de l'élément formant un piston (14) entre la deuxième position intermédiaire et la position étendue, le disque intermédiaire (42) ne se trouve pas dans la chambre intermédiaire (22) et n'empêche pas un écoulement de fluide dans la chambre interne (22) au-delà du disque intermédiaire (42) en direction de l'intérieur.

28. Pompe (10) selon la revendication 23,
dans laquelle, pendant tout le mouvement de l'élément formant un piston (14) entre la position étendue et une position intermédiaire entre la position rétractée et la position étendue, le disque intermédiaire (42) se trouve dans la chambre intermédiaire (22) et s'engage avec la paroi de chambre (33) de la chambre intermédiaire (22) circonférentiellement autour de celle-ci pour sensiblement empêcher un écoulement de fluide dans la chambre intermédiaire (22) au-delà du disque intermédiaire (42) en direction de l'intérieur, et
dans laquelle, pendant tout le mouvement de l'élément formant un piston (14) entre la position intermédiaire et la position rétractée, le disque intermédiaire (42) ne se trouve pas dans la chambre intermédiaire (22) et n'empêche pas un écoulement de fluide dans la chambre interne (22) au-delà du disque intermédiaire (42) en direction de l'intérieur.

29. Pompe (10) selon l'une quelconque des revendications 17 à 18, dans laquelle
le corps (12) comprend un membre formant une chambre de piston (12) ayant une chambre cylindrique interne (26), une chambre cylindrique intermédiaire (22) et une chambre cylindrique externe (24), la chambre interne (20), la chambre intermédiaire (22) et la chambre externe (24) ayant chacune un diamètre, une paroi de chambre, une extrémité interne et une extrémité externe,
le diamètre de la chambre interne (20) est supérieur au diamètre de la chambre intermédiaire (22),
le diamètre de la chambre externe (24) est supérieur au diamètre de la chambre intermédiaire (22),
la chambre interne (20), la chambre intermédiaire (22) et la chambre externe (24) sont coaxiales avec l'extrémité externe (29) de la chambre interne (20) qui s'ouvre dans l'extrémité interne de la chambre intermédiaire (22), et avec l'extrémité externe (32) de la chambre intermédiaire (22) qui s'ouvre dans l'extrémité interne de la chambre externe (24),
l'extrémité interne (28) de la chambre interne (20) comprend l'ouverture d'entrée de fluide (28) en communication fluide avec le réservoir (60),
l'extrémité externe (32) de la chambre intermédiaire (22) comprend l'ouverture de sortie (29) du compartiment interne (64),
le piston (14) comprend un élément formant un piston (14) reçu dans le membre formant une chambre de piston (12) qui peut coulisser axialement vers l'intérieur et vers l'extérieur dans celui-ci, entre une position rétractée vers l'intérieur et une position étendue vers l'extérieur,
ledit élément formant un piston (14) comporte une tige creuse centrale (38) qui s'étend axialement ayant un passage central (46) avec une sortie (48) proche d'une extrémité externe (50) comprenant la sortie de décharge (48),
un disque interne (40) s'étend radialement vers l'extérieur depuis la tige (38), le disque interne (40) étant adapté pour s'engager avec la paroi de chambre (30) de la chambre interne (20),
un disque externe (44) s'étend radialement vers l'extérieur à partir de la tige (38), espacé axialement vers l'extérieur à partir du disque interne (40), le disque externe (44) s'engageant avec la paroi de chambre (36) de la chambre externe (24),
un disque intermédiaire (142) porté sur le membre formant une chambre de piston (12) s'étend radialement vers l'intérieur depuis la paroi de chambre (33) de la chambre intermédiaire (22), le disque intermédiaire (142) étant adapté pour s'engager avec la tige (38), entre le disque interne (40) et le disque externe (44),
une première entrée (54) est située sur la tige (38) entre le disque intermédiaire (142) et le disque externe, en communication avec le passage (46),
l'élément formant un piston (14) est reçu de manière coulissante dans le membre formant une chambre de piston (12) pour un déplacement axial alternatif vers l'intérieur et vers l'extérieur dans celui-ci, avec le disque interne (40) dans la chambre interne (20) et le disque externe (42) dans la chambre externe (24),
le compartiment interne (64) est défini dans la chambre interne (20) et la chambre intermédiaire (22) entre le disque interne (40) et le disque intermédiaire (142),
le compartiment externe (66) est défini dans la chambre intermédiaire (22) et la chambre externe (24) entre le disque intermédiaire (142) et le disque externe (44),
le disque interne (40) empêchant sensiblement un écoulement de fluide dans la chambre interne (20) au-delà du disque interne (40) en direction de l'intérieur,
le disque intermédiaire (142) empêche sensiblement un écoulement de fluide dans la chambre intermédiaire (22) au-delà du disque intermédiaire (142) en direction de l'intérieur,
le disque externe (44) empêche sensiblement un écoulement de fluide dans la chambre externe (24) au-delà du disque externe (44) en direction de l'extérieur,
le disque interne (40) est élastiquement déformable en s'éloignant de la paroi de chambre (30) de la chambre interne (20) pour permettre un écoulement de fluide dans la chambre interne (20) au-delà du disque interne (40) en direction de l'extérieur,
le disque intermédiaire (142) est élastiquement déformable en s'éloignant de la tige (38) pour permettre un écoulement de fluide dans la chambre intermédiaire (24) au-delà du disque intermédiaire (142) en direction de l'extérieur.

30. Pompe (10) selon l'une quelconque des revendications 19 à 29, dans laquelle le membre (56, 156) se trouve dans le passage (46) entre la première entrée (54) et la sortie de décharge (48).

31. Pompe (10) selon l'une quelconque des revendications 1 à 30, dans laquelle le membre (56, 156) est un membre générant de la mousse (56).

32. Pompe (10) selon l'une quelconque des revendications 19 à 31, dans laquelle :
l'extrémité externe de la chambre interne (20) comprend un épaulement annulaire (31) qui s'ouvre dans l'extrémité interne de la chambre intermédiaire (22), et
l'extrémité interne de la chambre externe (24) comprend un épaulement annulaire (34) qui s'ouvre dans l'extrémité externe de la chambre intermédiaire (22).

33. Pompe (10) selon l'une quelconque des revendications 19 à 32, dans laquelle chaque partie parmi le membre formant une chambre de piston (12) et l'élément formant un piston (14) présente une section transversale généralement circulaire disposée coaxialement autour d'un axe central le long duquel l'élément formant un piston (14) et le membre formant une chambre de piston (12) peuvent coulisser l'un par rapport à l'autre.

34. Pompe (10) selon l'une quelconque des revendications 19 à 33, dans laquelle :
la chambre interne (20) est agencée au-dessus de la chambre intermédiaire (22),
la chambre intermédiaire (22) est agencée au-dessus de la chambre externe (24),
l'extrémité interne de la chambre interne (20) est agencée au-dessus de l'extrémité externe de la chambre interne (20),
l'extrémité interne de la chambre intermédiaire (22) est agencée au-dessus de l'extrémité externe de la chambre intermédiaire (22), et
l'extrémité interne de la chambre externe (24) est agencée au-dessus de l'extrémité externe de la chambre externe (24).

35. Pompe (10) selon l'une quelconque des revendications 19 à 34, dans laquelle le réservoir (60) est agencé au-dessus de la chambre interne (20).

36. Pompe (10) selon l'une quelconque des revendications 19 à 35, incluant un mécanisme de pompe à air comprenant une chambre de pompe à air (186) et un disque de pompe à air (180) qui peut coulisser dans celle-ci, une partie parmi la chambre de pompe à air (186) et le disque de pompe à air (180) supportée par le membre formant une chambre de piston (12), et l'autre supportée par l'élément formant un piston (14), la chambre de pompe à air (186) et le disque de pompe à air (180) interagissant pour former un compartiment à volume variable ouvert sur le passage (46) pour aspirer de l'air dans le compartiment lors d'un déplacement de l'élément formant un piston (14) vers l'extérieur vers la position étendue et pour refouler de l'air par la sortie de décharge (48) lors d'un déplacement de l'élément formant un piston (14) vers l'intérieur vers la position rétractée.

37. Pompe (10) selon l'une quelconque des revendications 19 à 36, dans laquelle
le membre formant une chambre de piston (12) comporte une chambre de pompe à air cylindrique (186) disposée vers l'intérieur de la chambre interne (20), coaxialement avec celle-ci,
la chambre de pompe à air (186) comporte un diamètre, une paroi de chambre, une extrémité interne fermée et une extrémité externe ouverte,
la tige (38) de l'élément formant un piston (14) s'étend axialement dans la chambre de pompe à air (186) via l'extrémité externe de la chambre de pompe à air (186),
un disque de pompe à air (180) sur la tige (38) s'étend radialement vers l'extérieur à partir de la tige (38),
le disque de pompe à air (180) reçu dans la chambre de pompe à air (186) dans toutes les positions de l'élément formant un piston (14) coulisse entre la position étendue et la position rétractée avec le disque de pompe à air (180) et s'engage avec la paroi de chambre (174) de la chambre de pompe à air (186) pour empêcher un écoulement de fluide au-delà de celle-ci vers l'intérieur et vers l'extérieur ;
une extrémité interne du passage central (46) s'ouvre dans la chambre de pompe à air (186) vers l'intérieur du disque de pompe à air (180) ;
la chambre de pompe à air (186) et le disque de pompe à air (180) forment un compartiment fermé à volume variable ouvert uniquement via l'extrémité interne du passage central (46),
avec le coulissement de l'élément formant un piston (14), le mouvement relatif du disque de pompe à air (180) change le volume du compartiment fermé pour aspirer du fluide dans le compartiment fermé à partir du passage (46) lors du coulissement de l'élément formant un piston (14) vers l'extérieur vers la position étendue, et pour refouler du fluide du compartiment fermé via le passage (46) lors d'un coulissement de l'élément formant un piston (14) vers l'intérieur vers la position rétractée.

38. Pompe (10) selon la revendication 37, dans laquelle la chambre de pompe à air (186) est agencée au-dessus de la chambre interne (20).

39. Pompe (10) selon l'une quelconque des revendications 19 à 38, dans laquelle :
ledit élément formant un piston (14) présente une section transversale généralement circulaire,
le disque interne (40) est circulaire et comporte une partie de bord élastiquement déformable proche de la paroi de chambre de la chambre interne (20) circonférentiellement autour de celle-ci,
le disque intermédiaire (42) est circulaire et comporte une partie de bord élastiquement déformable proche de la paroi de chambre de la chambre intermédiaire (22) circonférentiellement autour de celle-ci,
le disque externe (44) est circulaire.

40. Pompe (10) selon l'une quelconque des revendications 20 à 39, dans laquelle :
un membre de ressort (300) s'étend vers l'intérieur depuis l'extrémité interne de la tige (38) de l'élément formant un piston (14), coaxialement par rapport à l'élément formant un piston (14) depuis une extrémité interne du membre de ressort (300) jusqu'à une extrémité externe du membre de ressort (300) qui est couplée à une extrémité interne du membre formant une chambre de piston (12),
le membre de ressort (300) est comprimé axialement avec le coulissement réciproque de l'élément formant un piston (14) depuis la position étendue jusqu'à la position rétractée et exerce une poussée inhérente qui pousse l'élément formant un piston (14) axialement depuis la position rétractée vers la position étendue.

41. Pompe (10) selon l'une quelconque des revendications 20 à 40, incluant une deuxième entrée située sur la tige (38) entre le disque externe (44) et le disque intermédiaire (42) en communication avec le passage (46), la deuxième entrée étant espacée sur la tige (38) axialement par rapport à la première entrée (54) vers l'intérieur en direction du disque intermédiaire (42).
